# EUROPÄISCHE PATENTSCHRIFT

(11) **EP 1 812 221 B1**
(45) Veröffentlichungstag und Bekanntmachung des Hinweises auf die Patenterteilung: **29.12.2010**
(21) Anmeldenummer: 05801794.8
(22) Anmeldetag: 14.11.2005
(51) Int. Cl.: B29C 47/86, B29C 47/20

(54) **FORMGEBUNGSEINRICHTUNG SOWIE VERFAHREN ZUR FORMGEBUNG UND ABKÜHLUNG VON GEGENSTÄNDEN, INSBESONDERE HOHLPROFILEN**
SHAPING DEVICE AND METHOD FOR SHAPING AND COOLING ARTICLES, ESPECIALLY HOLLOW PROFILES
DISPOSITIF DE MODELAGE ET PROCEDE POUR MODELER ET REFROIDIR DES ARTICLES, EN PARTICULIER DES PROFILS CREUX

(30) Priorität: 15.11.2004 AT 19012004
(43) Veröffentlichungstag der Anmeldung: 01.08.2007
(73) Patentinhaber: Greiner Extrusionstechnik GmbH, 4550 Kremsmünster (AT)
(72) Erfinder: KÖSSL, Reinhold, 4552 Wartberg/Krems (AT)
(74) Vertreter: Baumgärtel, Gunnar
(86) Internationale Anmeldenummer: PCT/AT2005/000452
(87) Internationale Veröffentlichungsnummer: WO 2006/050549

(56) Entgegenhaltungen:
- EP-A- 0 593 892
- EP-A- 0 834 385
- WO-A-97/10940
- DE-A1- 19 825 892
- FR-A- 1 374 382
- US-A- 4 488 861
- "EIGENSCHAFTEN VON ROHREN VERSTAERKEN" PLASTVERARBEITER, HUETHIG GMBH, HEIDELBERG, DE, Bd. 50, Nr. 3, März 1999 (1999-03), Seite 78,80,82,84, XP000963633 ISSN: 0032-1338
- PATENT ABSTRACTS OF JAPAN Bd. 018, Nr. 206 (M-1591), 12. April 1994 (1994-04-12) & JP 06 008307 A (MATSUSHITA ELECTRIC WORKS LTD), 18. Januar 1994 (1994-01-18)

## Beschreibung

Die Erfindung bezieht sich auf eine Formgebungseinrichtung sowie ein Verfahren zur Formgebung und Abkühlung von Gegenständen aus einer Kunststoffschmelze, wie dies in den Ansprüchen 1 und 46 beschrieben wird.

Aus der WO 97/10940 A1 bzw. der DE 696 24 516 T2 ist ein Verfahren sowie eine Vorrichtung zur Herstellung eines Extrusionserzeugnisses sowie ein damit hergestelltes Extrusionsprodukt bekannt geworden, bei dem das Extrusionsmaterial mittels eines Extruders aus dessen Extrusionsabschnitt heraus durch ein Werkzeug hindurch extrudiert wird. Das Extrusionswerkzeug weist eine Düse auf, welche in einem Eintrittsbereich eine Einlassöffnung für die vom Extruder austretende Kunststoffschmelze aufweist. Ausgehend vom Eintrittsbereich ist innerhalb der Düse zumindest ein Kanal mit diesen begrenzenden Kanalwandungen angeordneten, der sich hin in Richtung eines Austrittsbereiches erstreckt. Den Kanalwandungen ist dabei eine Temperierungseinheit zugeordnet. Mittels dieser Temperierungseinheiten kann die Temperatur der Düse sowie des Dorns in der gewünschten Weise gesteuert werden, in dem diesen Teilen Wärme entzogen wird, gemäß dem Oberbegriff des Anspruchs 1.

Aus der US 4,488,861 A bzw. der DE 32 11 833 A1 ist ein Blaskopf für die Herstellung einer Kunststoffblasfolie bekannt geworden. Im grundsätzlichen Aufbau besteht der Blaskopf aus einem mehrteiligen Verteiler und einem Blaswerkzeug aus Dorn und Mundstück. Aus einem Austrittsringspalt zwischen dem Dorn und dem Mundstück tritt zunächst ein Schlauch aus dem thermoplastifizierten Kunststoff aus, der danach zu einem Blasfolienschlauch aufgeblasen wird. Innerhalb des Blaskopfes ist ein Kanal für den Massestrom des thermoplastifizierten Kunststoffes angeordnet. Diesem Kanal ist zumindest ein Wärmetauscher zugeordnet, der durch einen diesen umgebenden Ringspalt gebildet ist, der sich im wesentlichen parallel zum Massestrom des thermoplastifizierten Kunststoffes erstreckt. Der Ringspalt ist lediglich teilweise mit einem im Arbeitstemperaturbereich des Blaskopfes verdampfbaren und wieder kondensierbaren Wärmetauschermedium gefüllt sowie im übrigen druckdicht verschlossen. Dadurch wird ein autogener Temperaturausgleich ausgebildet. Der Blaskopf umfasst das Blaswerkzeug mit dem Dorn und Mundstück und einen zweiteiligen Verteiler mit einem oberen Wendelverteiler sowie einem diesen vorgeschalteten Linearverteilerkanal.

Aus der EP 0 593 892 A1 ist ein Profilwerkzeug für Extruder bekannt geworden, welches mit einzelnen ansteuerbaren, das Fließverhalten des Werkstoffes beeinflussenden Temperierelementen versehen ist. Die Temperierelemente sind stromab von der Schnecke des Extruders und stromauf vom profilgebenden Bereich des Werkzeuges im Strömungskanal des Werkstoffes derart angeordnet, dass die Temperatur des extrudierten Werkstoffes in ausgewählten Zonen des Querschnittes erhöht werden kann. Damit ist es möglich, auch bei komplizierten Querschnitten und bei verschiedenen profilgebenden, nicht mit Temperierelementen bestückten Teilen die Wandstärke des Profils zu beeinflussen. Dabei können die Temperierelemente in Trägerrippen im Strömungskanal vor dem profilgebenden Bereich in dem dort angeordneten Spreizkörper ausgebildet sein. Weiters können die Temperierelemente als Teile eines Gitters aus sich kreuzenden, einzeln ansteuerbaren Heizstäben bzw. Kühlstäben ausgebildet sein. Sollte sich bei der Vermessung des extrudierten Produktes herausstellen, dass z.B. die Wandstärke des mit dem Werkzeug hergestellten Rohres im unteren Bereich zu klein ist, wird durch individuelle Beheizung der Heizstäbe zwischen den der Werkstoff für diesen unteren Bereich fließt, der Werkstoff weiter aufgeheizt und damit sein Fließverhalten an den Wänden des Werkzeuges mit dem Ergebnis verbessert, dass die Wandstärke des Rohre im unteren Bereich vergrößert wird.

Die JP 06-008307 A beschreibt ein Verfahren zur Herstellung einer dicken Kunststoffplatte, deren Material eine hohe Wärmekapazität bei geringer Wärmeleitung aufweist. Die Herstellung soll dabei nicht nur unter günstigen, positiven Ausformungsbedingungen, sondern auch effizient, kontinuierlich sowie hoch produktiv erfolgen. Dabei wird das aufbereitete, geknetete Kunststoffmaterial zur Herstellung der Kunststoffplatte beim Austritt aus dem Extruder durch ein als Gleichrichter dienendes Leitelement in Strömungsrichtung ausgerichtet. Zusätzlich ist es möglich, mit dem Gleichrichter dem durch diesen hindurch tretenden Kunststoff-Massestrom Wärme zu entziehen.

Die EP 0 834 385 A1 beschreibt eine Extrusionsdüse, welche einen einem Austrittsbereich vorgeordneten Teilabschnitt des Kanals aufweist, dessen Querschnitt geringer ist, als der Querschnitt des Kanals im Austrittsbereich aus der Extrusionsdüse. Durch diese Querschnittsverengung des Kanals vor dem Austritt aus der Extrusionsdüse soll die Strömung der Schmelze ausgeglichen werden.

Aus der EP 0 817 715 B1 bzw. der US 5,945,048 A bzw. die DE 195 10 944 C1 ist ein Verfahren sowie eine Vorrichtung zum Strangpressen von Kunststoffschmelzen zu Hohlkammerprofilen bekannt geworden. Bei diesem Verfahren wird die Kunststoffschmelze durch ein beheiztes Profilwerkzeug mit einem inneren Profildorn hindurchgepresst, wobei das Profilwerkzeug und der Profildorn bereits die Außen- und Innenkonturen des herzustellenden Hohlkammerprofils bestimmen. Anschließend an diesen Umformvorgang wird der aus dem Profilwerkzeug austretende Hohlkammerprofilstang in einer dem Profilwerkzeug unmittelbar nachgeordneten Kalibrier- und Kühleinheit abgekühlt. Durch das unmittelbare, hintereinander Anordnen des Profilwerkzeuges sowie der Kalibrier- bzw. Kühleinheit wird der im Profilwerkzeug aufgebaute Pressdruck bis hinein in die Kalibrier- und Kühleinheit aufrecht erhalten. Damit wird das herzustellende Hohlkammerprofil, ausgehend vom Profilwerkzeug, durch den vom Extruder herrschenden Pressdruck sowohl durch das Profilwerkzeug als auch durch die Kalibrier- und Kühleinheit hindurchgedrückt bzw. geschoben. Bei dieser bekannten Vorrichtung bzw. dem bekannten Verfahren erfolgt die Formgebung der Kunststoffschmelze in dem beheizten Profilwerkzeug, wobei die Abkühlung des Hohlkammerprofils, in der dem Profilwerkzeug nachgeschalteten Kalibrier- und Kühleinheit erfolgt.

Eine weitere Behandlungsvorrichtung für extrudierte Kunststoffschmelzen ist aus der US 5,132,062 A bekannt geworden, bei welcher im unmittelbaren Anschluss an das Extrusionswerkzeug bzw. dem Austrittsspalt der Kunststoffmasse aus dem Extrusionswerkzeug ein eigenes Kühlelement sowie eine Kalibriervorrichtung nachgeordnet ist. Die Behandlungsvorrichtung für den Wärmeentzug ist im Kernbereich des herzustellenden Gegenstandes angeordnet und erstreckt sich ausgehend vom Kühlelement in die Kalibriervorrichtung hinein. Die Versorgung der Behandlungsvorrichtung, insbesondere der Wärmeentzugsvorrichtung, im Bereich der Kalibriervorrichtung erfolgt durch eigene Zuleitungen, welche durch eine Stegplatte in den Kernbereich des Extrusionswerkzeuges geführt sind. Dabei sind die Zufuhrleitungen im Bereich der Stegplatte sowie bis hin zum Düsenspalt, also dem Austritt der Kunststoffschmelze aus dem Extrusionswerkzeug gegenüber den Bauteilen des Extrusionswerkzeuges durch einen Luftspalt voneinander thermisch isoliert. Bei dieser bekannten Vorrichtung erfolgt der Wärmeentzug aus der Kunststoffschmelze direkt im Anschluss an den Austritt aus dem Extrusionswerkzeug im Bereich der Kalibriervorrichtung, sowohl an der Außenseite als auch der Innenseite des Gegenstandes.

Ein anderes Verfahren sowie eine Vorrichtung zur Herstellung von hohlen Formteilen ist aus der DE 24 34 383 A1 bekannt gewordnen, bei welcher die Kunststoffschmelze einer Extrusionsdüse bzw. Extrusionswerkzeug zugeführt wird und in diesem gleichzeitig die Stege innerhalb des Hohlprofils ausgeformt werden. Im Anschluss an den Austritt des so geformten Kunststoffstranges ist eine Kühl- bzw. Kalibriervorrichtung nachgeordnet. An Stirnenden des Kerns bzw. Doms enden bzw. münden Leitungen in den vom Profilmantel bzw. den Stegen gebildeten Hohlräume, wobei durch diese Leitungen alternierend ein Gas in die Hohlräume gepresst wird, sodass die Trennwände alternierend gegen benachbarte Trennwände bzw. die Außenwand gedrückt und damit verschmolzen werden. Gleichzeitig dabei wird eine Ausdehnung der Außenwand durch die an den Düsenkörper angrenzende Kühlvorrichtung verhindert.

Der vorliegenden Erfindung liegt die Aufgabe zugrunde, eine Formgebungseinrichtung sowie ein Verfahren zur Formgebung und Abkühlung von Gegenständen, insbesondere von Hohlprofilen, wie Hohlkammerprofilen, zu schaffen, bei dem ein formstabiles Profil ohne Abstimmaufwand erzielbar ist.

Diese Aufgabe der Erfindung wird dadurch gelöst, dass innerhalb des Kanals in dem dem Eintrittsbereich unmittelbar benachbarten bzw. nachgeordneten Bereich eine zusätzliche Kühlvorrichtung für die hindurchzuführende Kunststoffschmelze angeordnet ist, gemäß dem Kennzeichnenden Teil des Anspruchs 1. Der sich dadurch ergebende überraschende Vorteil liegt darin, dass die erfindungsgemäße Formgebungseinrichtung auf eine bisher bekannte Ausbildung der Extrusionsdüse zur Formgebung des heißen Schmelzestranges verzichtet und der in die Formgebungseinrichtung eintretende, vom Extruder aufbereitete Schmelzestrang der Kunststoffschmelze im Anschluss an den unmittelbaren Eintrittsbereich innerhalb des Kanals durch eine dort angeordnete, zusätzliche Kühlvorrichtung gekühlt wird. Dadurch wird der Kunststoffschmelze eine hohe Wärmemenge entzogen und bereits nach kurzem Durchtrittsweg durch die Formgebungseinrichtung soweit abgekühlt, dass trotzdem noch eine Umformung vom abgekühlten bzw. vorgekühlten Schmelzestrang hin zur gewünschten Profilgeometrie innerhalb der Formgebungseinrichtung möglich ist.

Vorteilhaft ist es aber auch, wenn der Kanal in einem im Austrittsbereich mündenden bzw. diesem zugewendeten Teilabschnitt einen Querschnitt aufweist, welcher dem des herzustellenden Gegenstandes entspricht und der Kanal in einem diesem Teilabschnitt in Extrusionsrichtung unmittelbar vorgeordneten Teilabschnitt einen dazu geringeren Querschnitt aufweist. Durch diese gesteuerte Verengung des hindurch tretenden Schmelzestranges werden die Gleiteigenschaften des Kunststoffmaterials an den nachfolgenden Kanalwandungen verbessert und so kann bereits vor Austritt des herzustellenden Gegenstandes eine Blockströmung erzielt werden. Dadurch wird wiederum ein fertig geformtes und formstabiles Profil im Bereich des Austrittsbereiches desselben aus der Formgebungseinrichtung erzielt.

Durch die Weiterbildung nach Anspruch 3 wird erreicht, dass der aus dem Extruder austretende Schmelzestrang bereits unmittelbar nach dessen Eintritt in die Formgebungseinrichtung auf jene Profilkontur bzw. Profilquerschnitt umgeformt wird, der nahezu jenem Querschnitt bzw. der Profilkontur des herzustellenden Gegenstandes entspricht. Dadurch wird ein einfacher Aufbau der Formgebungseinrichtung erzielt, wobei trotzdem eine ausreichende Wärmemenge aus dem hindurchtretenden Kunststoffmaterial durch die Formgebungseinrichtung entzogen werden kann.

Vorteilhaft ist auch eine weitere Ausführungsform nach Anspruch 4, da so jenen volumsmäßig einen hohen Anteil aufweisenden Profilsektionen des Hohlprofils eine ausreichende Wärmemenge bereits kurz nach dem Eintritt in die Formgebungseinrichtung entzogen werden kann und vorerst die zur Ausformung der Stege benötigte Kunststoffmasse von dieser Abkühlung nicht betroffen ist.

Vorteilhaft ist weiters eine Ausbildung nach Anspruch 5, da so auf geringstem Raum ein Maximum an zur Kühlung des Schmelzestrangs erzielbarer Oberfläche erreicht wird, wodurch eine hohe Wärmemenge aus dem Inneren des Schmelzestranges abgeführt werden kann.

Durch die Ausbildung nach Anspruch 6 ist es möglich, zwischen dem den Kanalwandungen zugewandten Randbereichen der zusätzlichen Kühlvorrichtung und den Kanalwandungen einen ungeteilten bzw. ununterbrochen über den Umfang durchlaufenden Schmelzeteilstrang auszubilden, der nur in seinem Inneren bis zu einer gewissen Distanz durch die Kühlvorrichtung während dessen Hindurchtreten unterbrochen wird. Dadurch werden die Festigkeitseigenschaften des herzustellenden Gegenstandes nicht nachteilig beeinflusst

Nach einer anderen Ausführungsvariante gemäß Anspruch 7 wird bei gleichzeitiger Abnahme der Außenabmessung der Kanalwandung eine Reduzierung des Kanalquerschnitts erzielt und dadurch das Hindurchtreten der Kunststoffschmelze hin in Richtung des weiteren Umfangbereiches begünstigt.

Vorteilhaft sind auch Weiterbildungen nach den Ansprüchen 8 bis 10, da dadurch ein hoher Kühlmitteldurchsatz durch die Kühlvorrichtung sowie ein Zwangsumlauf erzielbar ist, und zusätzlich noch dadurch Frischwasserressourcen eingespart werden können. Durch den geschlossenen Kreislauf ist beispielsweise auch die Verwendung eines unter Druck stehenden Wassers möglich, da dadurch die Verdampfung bzw. Dampfbildung verhindert wird.

Bei der Ausgestaltung nach Anspruch 11 ist von Vorteil, dass die in die Formgebungseinrichtung eintretende Kunststoffschmelze über deren Längsverlauf, bezogen auf das Zentrum je nach Bedarf der Kühlleistung sowie der notwendigen Umformung auf unterschiedliche Distanzen verformt werden kann. Bei entsprechender Vergrößerung der Abstände der Kanäle, bezogen auf das Zentrum, kann die Durchtrittsgeschwindigkeit des Schmelzestromes, bezogen auf die Durchsatzmenge, reduziert werden, wodurch eine noch längere Zeitdauer für den Wärmeentzug aus der Kunststoffschmelze zur Verfügung steht.

Durch die Weiterbildung nach Anspruch 12 oder 13 wird erreicht, dass dadurch stets ausreichend vorgekühltes Material zur Ausbildung der Profilgeometrie im Endbereich der Formgebungseinrichtung zur Verfügung steht.

Durch die Ausbildung nach Anspruch 14 kann mit Vorteil eine Aufweitung des in die Formgebungseinrichtung eintretenden Schmelzestranges erzielt werden, wodurch auf kurzem Weg auch eine Vergrößerung des Durchströmquerschnittes erzielbar ist.

Vorteilhaft ist auch eine Ausbildung nach Anspruch 15, da dadurch durch den Kanal hindurchtretenden Schmelzestrang zusätzlich zu seinem Wärmeentzug in seinem Inneren auch an den den Kanalwandungen zugewandten Teilströmen eine ausreichende Wärmemenge entzogen werden kann.

Gemäß einer Ausbildung wie im Anspruch 16 beschrieben, da dadurch einfache, standardmäßige Bearbeitungsvorgänge zur Herstellung jederzeit in der Formgebungseinrichtung in diesem Bereich Anwendung finden können und zusätzlich eine zentrische Aufweitung des aus dem Extruder auftretenden Schmelzestranges in diesem Bereich erfolgt.

Dabei erweist sich eine Ausgestaltung nach Anspruch 17 vorteilhaft, da dadurch bereits eine vorbestimmbare Abnahme des Kanalquerschnittes hin für den Übergangsbereich zur Ausformung der endgültigen Profilgeometrie geschaffen werden kann.

Nach einer vorteilhaften Weiterbildung gemäß Anspruch 18 oder 19 wird bereits im Endabschnitt der Formgebungseinrichtung die endgültige Ausformung des Ausformung des herzustellenden Gegenstandes sichergestellt und so der Gegenstand in seinen endgültigen Abmessung festgelegt. Dadurch sind weitere formgebende Maßnahmen im Anschluss an den Austritt des Gegenstandes aus der Formgebungseinrichtung nicht mehr erforderlich.

Von Vorteil sind aber auch Ausbildungen nach den Ansprüchen 20 oder 21, weil dadurch nach einer gewissen Vorkühlung des Schmelzestromes durch die zusätzliche Kühlvorrichtung im Anschluss daran eine Umformung hin zur gewünschten Profilgeometrie erfolgt. Zusätzlich kann noch in diesem Abschnitt die durch die Umformung und Verminderung der Außenabmessung sowie des Kanalquerschnittes eingebrachte Energie durch zusätzliche Kühlelemente in diesem Abschnitt abgeführt werden und so eine weitere Temperaturzunahme sowie gegebenenfalls eine Abnahme derselben erzielt werden.

Vorteilhaft ist die Ausbildung nach Anspruch 22, da dadurch die Gleiteigenschaften des Kunststoffmaterials des durch den Kanal hindurchtretenden Schmelzestranges an den nachfolgenden Kanalwandungen wesentlich verbessert werden. So kann bereits vor Austritt des herzustellenden Gegenstandes eine Blockströmung erzielt werden. Damit wird das ansonst im Austrittsbereich vorherrschende Aufquellen des Kunststoffmaterials vermieden, wodurch bereits innerhalb der Formgebungseinrichtung die exakte Profilkontur bzw. der Profilquerschnitt des herzustellenden Gegenstandes festgelegt ist.

Vorteilhaft ist auch eine Ausführungsform nach Anspruch 23, da dadurch in diesem Übertrittsbereich die Expansion des hindurchtretenden Kunststoffmaterials durch das zusätzliche Einbringen des Schmier- bzw. Gleitmittels besser möglich wird und so ein fließender Übergang der hindurchtretenden Kunststoffschmelze hin auf die aufgeweitete, endgültige Querschnittsform bzw. im Querschnitt des herzustellenden Gegenstandes erzielbar ist.

Weitere vorteilhafte Ausbildungen sind in den Ansprüchen 24 bis 26 beschrieben. Dadurch wird in Abhängigkeit von der Einschnürung sowie der Länge der Einschnürung in dem nachfolgenden Teilabschnitt die Bildung einer Blockströmung des hindurchtretenden Materials begünstigt bzw. erzielt. Damit werden innerhalb des Schmelzestrangs gegenseitige Verlagerungen einzelner Schichten des Kunststoffmaterials zur Bildung des Gegenstandes vermieden, wodurch eine hohe Maßgenauigkeit der herzustellenden Gegenstände erzielbar ist.

Gemäß Anspruch 27 wird dem oder den Schmelzersträngen während deren Durchtritt durch die Formgebungseinrichtung stetig Wärme abgeführt, wodurch eine hohe Kühlleistung erzielbar ist.

Gemäß der Ausbildung gemäß Anspruch 28 oder 29 wird durch die in die Kunststoffmasse eingebrachten Schwingungen bzw. Vibrationen eine bessere Viskosität der umzuformenden Masse erzielt, da die bereits vorgekühlte und eine niedrigere Temperatur aufweisende Masse besser fließt und so leichter die durch die zusätzliche Kühlvorrichtung aufgetrennten Abschnitte im Inneren der Schmelze zusammengeführt werden. Zusätzlich wird dadurch das Hindurchdrücken der Kunststoffmasse durch die Formgebungseinrichtung, ausgehend vom Extruder, erleichtert und der Umformvorgang verbessert.

Möglich ist dabei auch Ausbildungen nach den Ansprüchen 30 bis 32, da dadurch das Wandgleiten der Kunststoffschmelze an den den Kanalwandungen zugewandten Bereichen verbessert bzw. überhaupt erzielbar ist und dadurch die Kunststoffschmelze in einer Blockströmung durch den oder die Kanäle hindurchbewegt werden kann. Darüber hinaus kann das Schmier- bzw. Gleitmittel nach dem Austritt des Gegenstandes aus der Formgebungseinrichtung und nach Erkalten desselben eine Schutzschicht bzw. Schutzfilm für die Oberfläche des Gegenstandes ausbilden, welche schmutz- bzw. wasserabweisend ist. Ebenso können in das Schmier- bzw. Gleitmittel eingelagerte Zusatzstoffe als Filter für die auf den Gegenstand auftreffende Strahlungen, wie UV- oder Infrarotstrahlung, bilden.

Nach einer vorteilhaften Weiterbildung gemäß Anspruch 33 wird in dem, dem Austrittsbereich zugewendeten bzw. in diesen mündenden Teilabschnitt das Wandgleiten und damit das Bilden einer Blockströmung noch zusätzlich begünstigt. Darüber hinaus können durch das Schmier- bzw. Gleitmittel auch Schutzfilme für den herzustellenden Gegenstand mitaufgebracht werden.

Die Ausgestaltung nach Anspruch 34 oder 35 ermöglicht die zusätzliche Ausbildung von Stegen innerhalb des Hohlprofils, wobei diese erst nach einer gewissen Vorkühlung des Profilmantels mit diesem zum Hohlkammerprofil vereinigt werden. Dadurch können die einzelnen, die den Profilquerschnitt bildenden Teilströme besser gekühlt bzw. umgeformt werden.

Vorteilhaft ist die Ausbildung nach Anspruch 36, da dadurch auch der die Stege bildende Werkstoff gekühlt werden kann und so eine bessere gegenseitige Abstimmung des Temperaturverlaufes zwischen den einzelnen, durch die Formgebungseinrichtung hindurchtretenden Teilströme erzielbar ist.

Von Vorteil ist aber auch eine Ausbildung nach Anspruch 37, da dadurch in Abhängigkeit von dem durch den Kanal hindurchzuführenden Werkstoff durch die gleiche oder niedrigere Oberflächenspannung ein Wandgleiten der Kunststoffschmelze und damit verbunden eine Blockströmung innerhalb des Kanals erzielbar ist.

Vorteilhaft sind auch weiters Ausführungsformen nach den Ansprüchen 38 oder 39, da dadurch ebenfalls ein Wandgleiten der durch den Kanal oder die Kanäle hindurchzuführenden Kunststoffschmelze erzielbar ist. Bei Verwendung einer Beschichtung können die entsprechend gewünschten Oberflächeneigenschaften der Kanalwandungen über den Längsverlauf des Kanals auf unterschiedlichste Anforderungen und Einsatzbedingungen eingestellt werden. Das Aufbringen kann dabei beispielsweise durch Tauchen und anschließendes Trocknen erfolgen, wobei die Aufbringung derartiger Beschichtungen zyklisch, nach jedem Reinigungs- bzw. Wartungsvorgang der Formgebungseinrichtung, erfolgen kann. Diese Beschichtung kann sowohl auf herkömmliche Bauteile aus Stahl bzw. Eisenwerkstoff, als auch auf die aus den unterschiedlichsten Werkstoffen gebildeten Kühlelemente aufgebracht werden.

Vorteilhaft ist weiters eine Ausbildung nach Anspruch 40, da dadurch die Kühlelemente als Standardbauteile vorgefertigt werden können. Dabei kann ein Spritzgussverfahren Anwendung finden, wobei hier auf einfache Art und Weise durch entsprechende Wahl des Werkstoffes auf die Oberflächenspannung im Hinblick auf das Wandgleiten Rücksicht genommen werden kann sowie zusätzlich noch im Spritzgussverfahren eine Oberflächenstruktur für das Verbessern des Wandgleitens einformbar ist.

Durch die Ausbildung nach Anspruch 41 ist es möglich, einen modulartigen Aufbau der Formgebungseinrichtung zu erzielen.

Vorteilhaft sind aber auch Ausbildungen nach den Ansprüchen 42 bis 44, da dadurch in diesem Abschnitt der Formgebungseinrichtung auf die Ausbildung abriebfester Bauteile bei ausreichend hoher Kühlleistung bedacht genommen werden kann.

Bei der Ausgestaltung nach Anspruch 45 ist von Vorteil, dass dadurch Bauteile geschaffen werden können, welche in einem Arbeitsvorgang als einstückige Bauteile ausgebildet werden, und diese ohne hohen Fügeaufwand modulartig zur Formgebungseinrichtung zusammengesetzt werden können.

Die Aufgabe der Erfindung wird aber unabhängig davon auch durch ein Verfahren zur Formgebung und Abkühlung von Gegenständen dadurch gelöst, dass der Schmelzestrang der Kunststoffschmelze unmittelbar anschließend an dessen Eintritt in die Formgebungseinrichtung innerhalb desselben zwischen den diesen begrenzenden Kanalwandungen zusätzlich gekühlt wird. Die sich aus diesem Vorgehen ergebenden Vorteile liegen darin, dass bei der erfindungsgemäßen Formgebungseinrichtung auf eine bisher bekannte Ausbildung der Extrusionsdüse zur Formgebung des heißen Schmelzestranges verzichtet werden kann und der in die Formgebungseinrichtung eintretende, vom Extruder aufbereitete Schmelzestrang der Kunststoffschmelze im Anschluss an den unmittelbaren Eintrittsbereich innerhalb des Kanals durch eine dort angeordnete, zusätzliche Kühlvorrichtung gekühlt wird. Dadurch wird der Kunststoffschmelze eine hohe Wärmemenge entzogen und bereits nach kurzem Durchtrittsweg durch die Formgebungseinrichtung soweit abgekühlt, dass trotzdem noch eine Umformung vom abgekühlten bzw. vorgekühlten Schmelzestrang hin zur gewünschten Profilgeometrie innerhalb der Formgebungseinrichtung möglich ist.

Vorteilhaft ist aber auch ein Verfahren, bei dem der Schmelzestrang der Kunststoffschmelze in einem im Austrittsbereich mündenden bzw. diesem zugewendeten Teilabschnitt auf einen Querschnitt umgeformt wird, welcher dem herzustellenden Gegenstand entspricht und der Schmelzestrang in Extrusionsrichtung gesehen in einem dem im Austrittsbereich mündenden Teilabschnitt unmittelbar vorgeordneten Teilabschnitt auf einen dazu geringeren Querschnitt umgeformt wird. Durch diese gesteuerte Verengung des hindurch tretenden Schmelzestranges werden die Gleiteigenschaften des Kunststoffmaterials an den nachfolgenden Kanalwandungen verbessert und so kann bereits vor Austritt des herzustellenden Gegenstandes eine Blockströmung erzielt werden. Dadurch wird wiederum ein fertig geformtes und formstabiles Profil im Bereich des Austrittsbereiches desselben aus der Formgebungseinrichtung erzielt.

Weitere vorteilhafte Vorgehensweisen sind in den Ansprüchen 48 bis 75 gekennzeichnet, wobei die dabei erzielbaren Vorteile der detaillierten Beschreibung zu entnehmen sind.

Die Erfindung wird im nachfolgenden anhand der in den Zeichnungen dargestellten Ausführungsbeispiele näher erläutert.

Es zeigen:
- Fig. 1: eine Extrusionsanlage mit einer erfindungsgemäßen Formgebungseinrichtung, in Seitenansicht und stark vereinfachter Darstellung;
- Fig. 2: die erfindungsgemäße Formgebungseinrichtung in Seitenansicht geschnitten und stark vereinfachter Darstellung;
- Fig. 3: eine mögliche Ausbildung der zusätzlichen Kühlvorrichtung innerhalb des Kanals der Formgebungseinrichtung, in vereinfachter perspektivischer Darstellung;
- Fig. 4: die Kühlvorrichtung nach Fig. 3 in einer weiteren vereinfachten perspektivischen Darstellung;
- Fig. 5: die Kühlvorrichtung nach den Fig. 3 und 4, in Stirnansicht gemäß Pfeil V in Fig. 3;
- Fig. 6: die Kühlvorrichtung nach den Fig. 3 bis 5, in Seitenansicht geschnitten gemäß den Linien VI - VI in Fig. 5 und stark vereinfachter Darstellung;
- Fig. 7: einen Teilbereich der Kühlvorrichtung nach den Fig. 3 bis 6 in vereinfachter per- spektivischer Darstellung;
- Fig. 8: einen weiteren Teilbereich der Kühlvorrichtung nach den Fig. 3 bis 7 im Bereich der Zu- sowie Ableitungen, in Ansicht und stark vereinfachter schematischer Dar- stellung;
- Fig. 9: einen anderen Teilbereich der Kühlvorrichtung nach den Fig. 3 bis 8 in dem Aus- trittsbereich zugewandten Ende, in Ansicht und stark vereinfachter schematischer Darstellung;
- Fig. 10: eine mögliche Ausbildung eines Kühlelements im Formgebungsbereich der erfin- dungsgemäßen Formgebungseinrichtung in Seitenansicht gemäß Pfeil X in Fig. 11 und stark vereinfachter Darstellung;
- Fig. 11: das Kühlelement nach Fig. 10 in Ansicht geschnitten gemäß den Linien XI - XI in Fig. 10 und stark vereinfachter Darstellung;
- Fig. 12: eine mögliche Ausbildung eines weiteren Kühlelements im Austrittsbereich aus der erfindungsgemäßen Formgebungseinrichtung in Seitenansicht gemäß Pfeil XII in Fig. 15 und stark vereinfachter Darstellung;
- Fig. 13: das weitere Kühlelement nach Fig. 12 in Ansicht gemäß Pfeil XIII in Fig. 12 und stark vereinfachter Darstellung;
- Fig. 14: das weitere Kühlelement nach den Fig. 12 und 13 in Ansicht geschnitten gemäß den Linien XIV - XIV in Fig. 13 und stark vereinfachter Darstellung;
- Fig. 15: das weitere Kühlelement nach den Fig. 12 bis 15 in Seitenansicht geschnitten ge- mäß den Linien XV - XV in Fig. 12 und stark vereinfachter Darstellung;
- Fig. 16: einen Teilbereich des Doms im Austrittsbereich aus der erfindungsgemäßen Form- gebungseinrichtung in Seitenansicht gemäß Pfeil XVI in Fig. 17 und stark verein- fachter Darstellung;
- Fig. 17: den Dorn nach Fig. 16 in Seitenansicht geschnitten gemäß den Linien XVII - XVII in Fig. 16 und stark vereinfachter Darstellung;
- Fig. 18: einen Teilbereich des Schmelzestroms innerhalb des Kanal am Ende des Teilab- schnittes mit der zusätzlichen Kühlvorrichtung in Ansicht und stark vereinfachter Darstellung;
- Fig. 19: einen weiteren Teilbereich des Schmelzestroms am Ende der Formgebungseinrich- tung im Austrittsbereich in Ansicht und stark vereinfachter Darstellung;
- Fig. 20: einen Teilbereich eines Schmelzestromes bei einer bisher bekannten Extrusionsan- lage mit Extrusionsdüse und Trockenkalibern im Bereich eines Troclcenkalibers, in Ansicht und stark vereinfachter Darstellung;
- Fig. 21: ein Detail der Formgebungseinrichtung nach der Fig. 2 in stark vergrößerter ver- einfachter Darstellung gemäß Detail XXI in Fig. 2;
- Fig. 22: einen Teilbereich eines Gegenstandes im Anschlussbereich eines Steges an den Profilmantel, in Ansicht geschnitten und stark vereinfachter Darstellung;
- Fig. 23: einen Teil einer Extrusionsanlage mit einem Extruder und einer erfindungsge- mäßen Formgebungseinrichtung, in vereinfachter perspektivischer Darstellung;
- Fig. 24: einen anderen Teil einer Extrusionsanlage mit zwei Extruder und einer erfindungs- gemäßen Formgebungseinrichtung, in vereinfachter perspektivischer Darstellung;
- Fig. 25: einen bandförmigen Streifen als Anfahrhilfe für den Extrusionsvorgang, in verein- fachter perspektivischer Darstellung;
- Fig. 26: ein Diagramm des Temperaturverlaufes in Bezug auf eine Wegstrecke im Vergleich zwischen bekanntem Abkühlverlauf und erfindungsgemäßem Abkühlverlauf;
- Fig. 27: eine weitere mögliche Ausführungsform einer Formgebungseinrichtung, in Seiten- ansicht geschnitten und stark vereinfachter schematischer Darstellung;
- Fig. 28: eine andere mögliche Ausbildung einer Formgebungseinrichtung, in Seitenansicht geschnitten und stark vereinfachter schematischer Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfmdungsgemäße Lösungen darstellen.

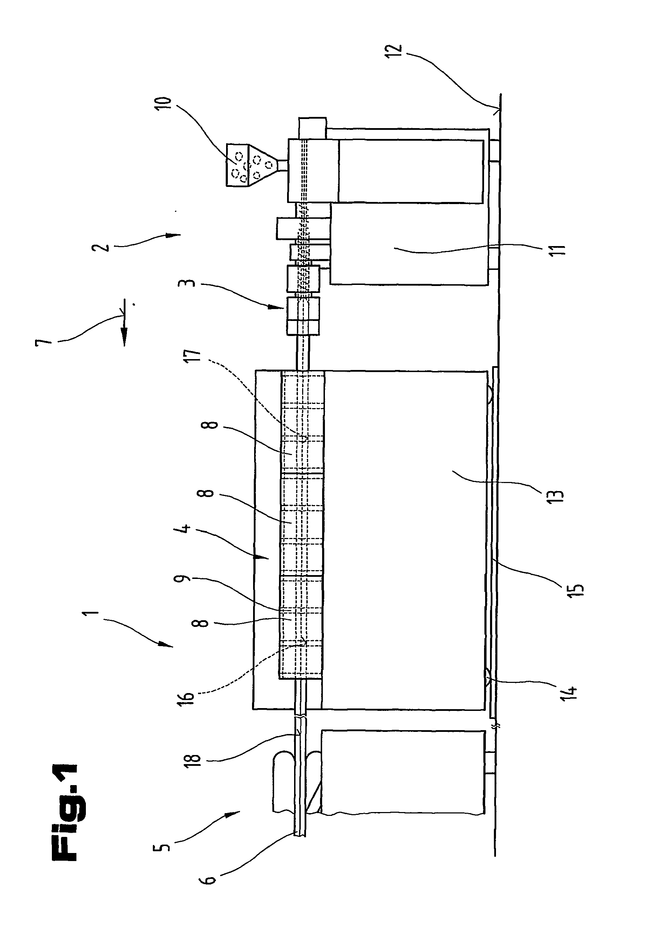

In der Fig. 1 ist eine Extrusionsanlage 1 gezeigt, die aus einem Extruder 2, einer diesem nachgeordneten Formgebungseinrichtung 3, einer dieser nachgeordneten Kühleinrichtung 4 sowie gegebenenfalls einem Raupenabzug 5 bzw. nur einer Abzugsunterstützungseinrichtung für einen extrudierten Gegenstand 6 besteht. Der Raupenabzug 5 bzw. die Abzugsunterstützungseinrichtung dient dazu, um den Gegenstand 6, beispielsweise ein Hohlprofil, insbesondere ein Hohlkammerprofil, aus Kunststoff für den Fenster- und/oder Türenbau in Extrusionsrichtung 7, ausgehend von der Formgebungseinrichtung 3 bzw. gegebenenfalls vom Extruder 2, durch die Kühleinrichtung 4 abzuziehen bzw. gegebenenfalls nur eine geringe Abzugskraft abhängig vom Profilquerschnitt auf den Gegenstand 6 auszuüben. Dieser Gegenstand 6 kann aber auch durch ein so genanntes Vollprofil gebildet sein, welches ebenfalls mit der erfindungsgemäßen Formgebungseinrichtung 3 herstellbar ist.

Die Formgebungseinrichtung 3 besteht bei diesem Ausführungsbeispiel aus einer dem Extruder 2 unmittelbar nachgeordneten Einheit, in welcher der eintretende Schmelzestrang gleichzeitig gekühlt und dabei hin zur gewünschten bzw. vorgegebenen Profilgeometrie umgeformt wird und die Formgebungseinrichtung 3 als nahezu formstabiler Gegenstand 6 verlässt. Die detaillierte Beschreibung der Formgebungseinrichtung 3 erfolgt in den nachfolgenden Figuren.

Der aus der Formgebungseinrichtung 3 austretende und zumindest in seinem Mantelbereich soweit formstabile Gegenstand 6 wird in der nachfolgenden Kühleinrichtung 4 soweit abgekühlt, dass auch der Innenraum bzw. dessen Innenkammern entsprechend abgekühlt sind. Dabei beträgt nach Verlassen der Kühleinrichtung 4 die Profiltemperatur über deren gesamten Querschnitt ca. üblicher Raumtemperatur wie beispielsweise ca. 15°C bis 25°C. Die Kühleinrichtung 4 kann aus einem oder bevorzugt jedoch mehreren Unterdrucktanks 8, in welchen mehrere Kalibrierblenden 9 angeordnet sein können, gebildet sein. Einzelne der Kalibrierblenden 9 können aber auch nur zur Stützfunktion als Stützblenden für den Gegenstand 6 ausgebildet sein. Als Beispiel für einen derartig ausgebildeten Unterdrucktank 8 wird, um unnötige Wiederholungen zu vermeiden, auf die DE 195 04 981 A1 der Anmelderin hingewiesen.

Es wäre aber auch möglich, nur einen aus dem allgemeinen Stand der Technik bekannten Sprühtank einzusetzen. Dieser hat gegenüber dem als Wassertank ausgebildeten Unterdrucktank den Vorteil, dass das Kühlmedium, insbesondere Wasser, nur auf den Gegenstand 6 aufgesprüht wird. Dabei entfällt die ansonst wirkende Auftriebskraft des Profils im Kühlbad und der Gegenstand braucht innerhalb des Sprühtanks nicht weiter mit Stützblenden geführt werden. Ein Aufbau eines gegenüber dem Umgebungsdruck geringeren Druckes - also ein Unterdruck - kann im Innenraum des Sprühtanks erfolgen.

Im Bereich des Extruders 2 befindet sich ein Aufnahmebehälter 10, in welchem ein Material, wie beispielsweise ein Gemisch bzw. ein Granulat zur Bildung eines Kunststoffes, bevorratet ist, welches mit zumindest einer Förderschnecke im Extruder 2 der Formgebungseinrichtung 3 zugeführt wird. Weiters umfasst der Extruder 2 noch eine Plastifiziereinheit, durch welche während des Durchtretens des Materials durch diese mittels der Förderschnecke sowie gegebenenfalls zusätzlicher Heizeinrichtungen das Material gemäß den diesem innewohnenden Eigenschaften unter Druck und gegebenenfalls Zufuhr von Wärme erwärmt, plastifiziert und dabei ausreichend aufbereitet und in Richtung der Formgebungseinrichtung 3 gefördert wird. Innerhalb der Formgebungseinrichtung 3 wird der Massestrom aus dem plastifizierten Material in Übergangszonen hin zum gewünschten Profilquerschnitt geführt bzw. umgeformt.

Bei bisher bekannten Anlagen war am Extruder 2 eine Extrusionsdüse bzw. ein beheiztes Profilwerkzeug angeordnet, welches den in dieses eintretenden Schmelzestrang unter Beibehaltung sowie Zufuhr von Wärme hin zur Profilgeometrie umformte. In daran anschließenden Kalibrierwerkzeugen wurde dieser vorgeformte plastische Schmelzestrang dann entsprechend der gewünschten Profilgeometrie in bekannter Weise abgekühlt und dabei in seiner endgültigen Form festgelegt. Dabei konnte das oder konnten die Kalibrierwerkzeuge unmittelbar an die Extrusionsdüse anschließen, sodass sich der in der Extrusionsdüse aufgebaute Schmelzedruck bis hinein in das Kalibrierwerkzeug fortpflanzte.

Die Formgebungseinrichtung 3, die Plastifiziereinheit und der Aufnahmebehälter 10 sind auf einem Maschinenbett 11 abgestützt bzw. gehaltert, wobei das Maschinenbett 11 auf einer ebenen Aufstandsfläche 12, wie beispielsweise einem ebenen Hallenboden, aufgestellt ist.

Die gesamte Kühleinrichtung 4 sowie nicht näher dargestellte Versorgungseinrichtungen für die Formgebungseinrichtung 3 sind bei diesem Ausführungsbeispiel auf einem Kalibriertisch 13 angeordnet bzw. gehaltert, wobei sich der Kalibriertisch 13 über Laufrollen 14 auf einer oder mehreren auf der Aufstandsfläche 12 befestigten Fahrschienen 15 abstützt. Diese Lagerung des Kalibriertisches 13 über die Laufrollen 14 auf den Fahrschienen 15 dient dazu, um den gesamten Kalibriertisch 13 mit den darauf angeordneten Ein- bzw. Vorrichtungen in Extrusionsrichtung 7 - gemäß eingetragenem Pfeil - vom bzw. hin zur Formgebungseinrichtung 3 verfahren zu können. Um diese Verstellbewegung leichter und genauer durchführen zu können, ist dem Kalibriertisch 13 beispielsweise ein nicht näher dargestellter Verfahrantrieb zugeordnet, der eine gezielte und gesteuerte Längsbewegung des Kalibriertisches 13 hin zum Extruder 2 oder vom Extruder 2 weg ermöglicht. Für den Antrieb und die Steuerung dieses Verfahrantriebes können jegliche aus dem Stand der Technik bekannte Lösungen und Aggregate verwendet werden.

Die Umformung und Kalibrierung erfolgt hier ausschließlich durch eine vollständige Trockenkalibrierung. Weiters kann auch noch vorteilhaft sein, einen Zutritt von Umgebungsluft zwischen der Formgebungseinrichtung 3 und der ersten Kühlkammer der Kühleinrichtung 4 vollständig zu verhindern.

Der Unterdrucktank 14 bis 16 kann für den aus der Formgebungseinrichtung 3 austretenden Gegenstand 6 zumindest eine Kühlkammer aufweisen, welche durch ein vereinfacht dargestelltes Gehäuse gebildet ist und durch die im Innenraum angeordneten und vereinfacht dargestellten Kalibrierblenden 9 in unmittelbar aufeinander folgende Bereiche unterteilt ist. Zur raschen Wärmeabführ aus dem Gegenstand 5 ist der Innenraum der Kühlkammer mit einem Kühlmedium zumindest teilweise gefüllt, wobei das Kühlmedium sowohl flüssig als auch gasförmig sein kann. Selbstverständlich kann das gleiche Kühlmedium aber auch in unterschiedlichen Aggregatzuständen in der Kühlkammer vorhanden sein. Es ist aber auch zusätzlich noch möglich, den Innenraum der Kühlkammer auf einen gegenüber dem atmosphärischen Luftdruck geringeren Druck abzusenken.

Der Gegenstand 5 weist nach dem Austritt aus der Formgebungseinrichtung 3 eine durch diese vorgegebene und formstabile Querschnittsform auf, welche in der daran anschließenden Kühleinrichtung 4 weiter gekühlt wird, bis aus dem Gegenstand 5 auch noch die innerhalb desselben enthaltene Restwärme abgeführt ist.

Für den Betrieb der Extrusionsanlage 1, insbesondere den am Kalibriertisch 13 angeordneten bzw. gehalterten Ein- bzw. Vorrichtungen sind diese mit einer nicht näher dargestellten Versorgungseinrichtung verbindbar, mit welcher die unterschiedlichsten Aggregate, beispielsweise mit einem flüssigen Kühlmedium, mit elektrischer Energie, mit Druckluft sowie mit einem Vakuum, beaufschlagt werden können. Die unterschiedlichsten Energieträger können je nach Bedarf frei gewählt und eingesetzt werden.

Zum Hindurchführen des Gegenstandes 6 durch die einzelnen Kalibrierblenden 9 weisen diese zumindest eine Kalibrieröffnung 16 bzw. einen Durchbruch auf, wobei einzelne Formflächen der Kalibrieröffnung 16 zumindest bereichsweise einen äußeren Profilquerschnitt 17 des hindurchführbaren Gegenstandes 6 begrenzen bzw. umgrenzen. Wie bereits zuvor beschrieben, wird der Gegenstand 6 während des Hindurchtretens durch die Formgebungseinrichtung 3 zumindest im Bereich seines äußeren Profilmantels 18 soweit abgekühlt und das erweichte Kunststoffmaterial dabei verfestigt, dass die äußeren Profilsektionen des Hohlprofils bereits eine gewisse Eigensteifigkeit bzw. Festigkeit aufweisen. Um die noch im Profilinnenraum vorhandene Restwärme insbesondere im Bereich der Hohlkammern und der darin angeordneten Stege vollständig aus dem Gegenstand 6 abführen zu können, ist bei diesem Ausführungsbeispiel die Kühleinrichtung 4 vorgesehen.

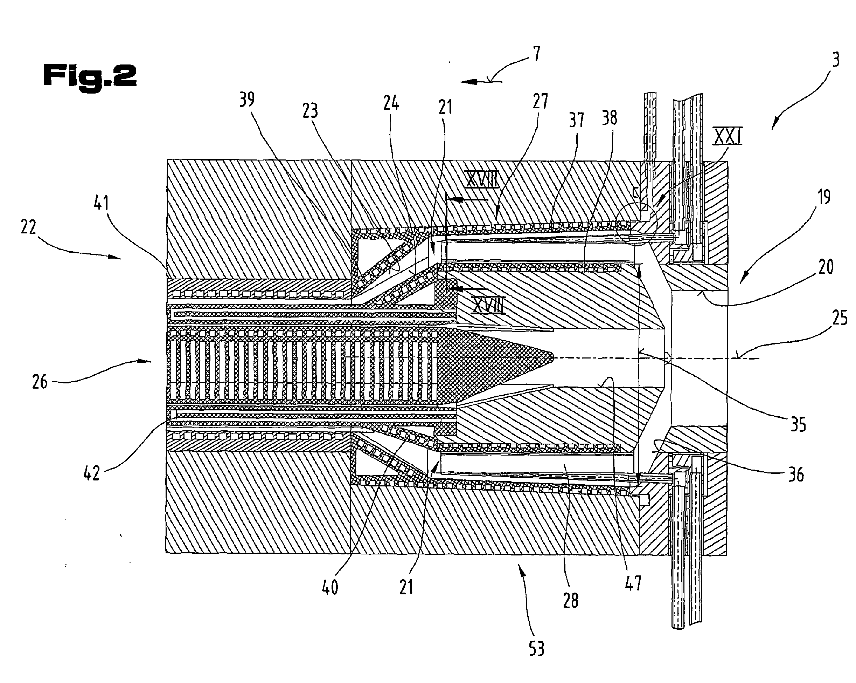

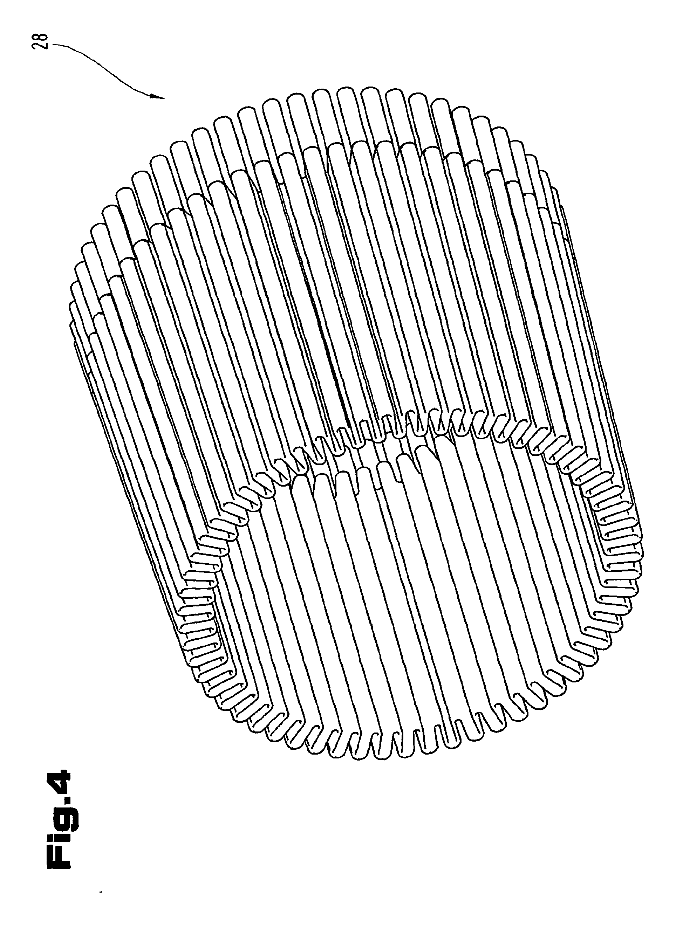

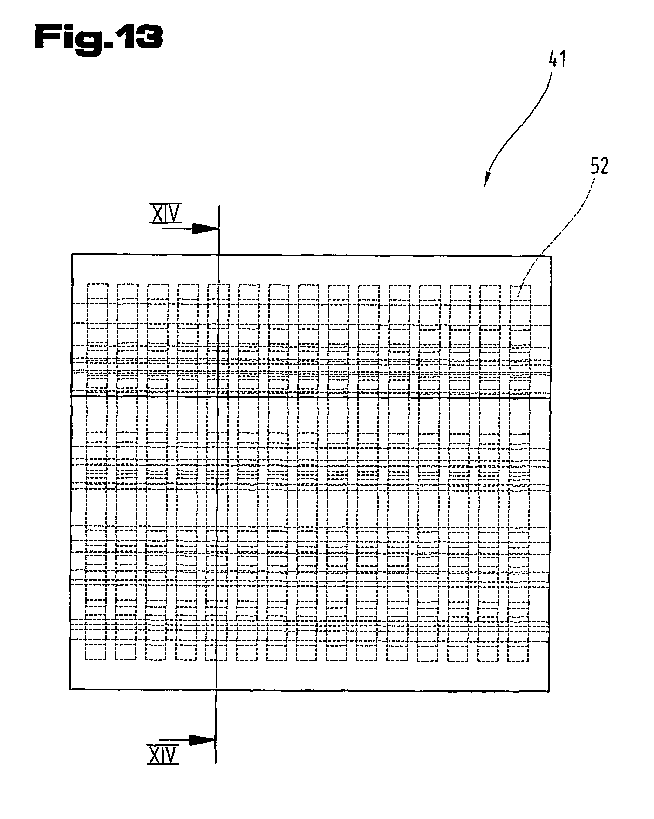

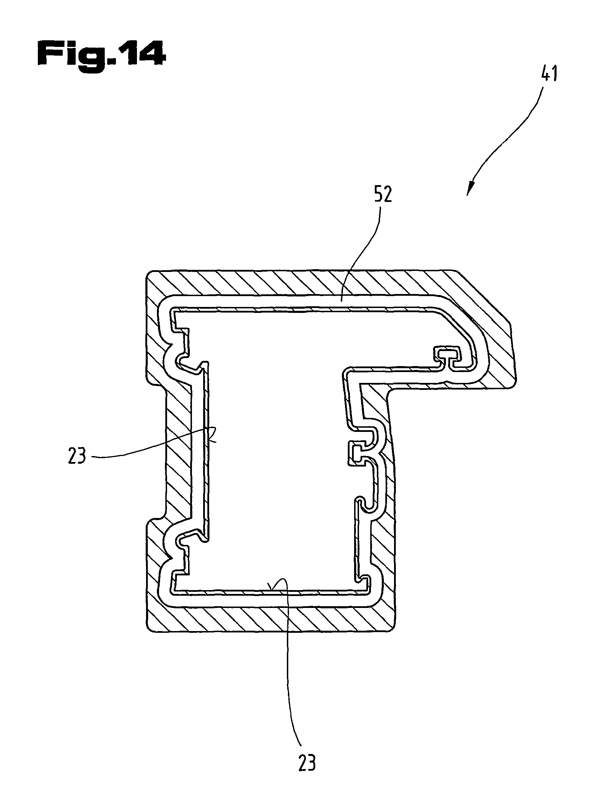

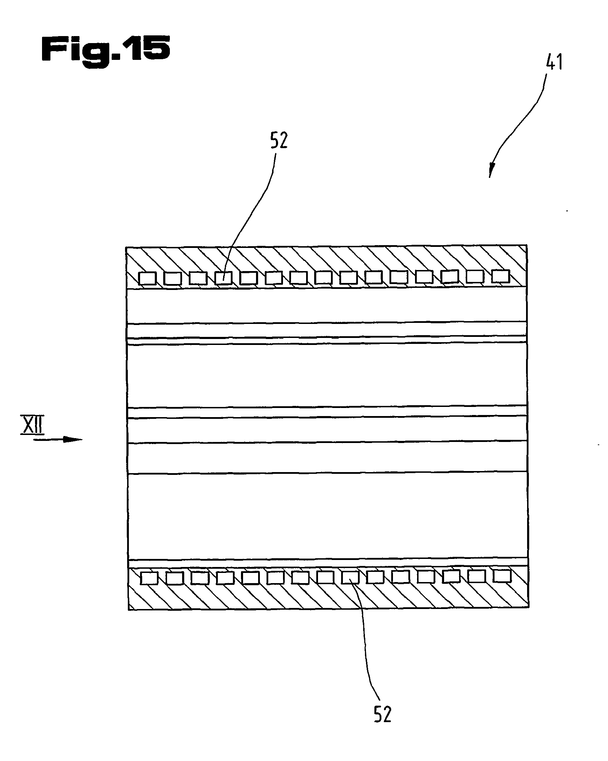

In den Fig. 2 bis 22 ist die Formgebungseinrichtung 3 bzw. deren die diese bildenden Einzelteile näher dargestellt und beschrieben. So weist die Formgebungseinrichtung 3 in einem dem Extruder 2 zugewendeten bzw. zuwendbaren Eintrittsbereich 19 eine Einlassöffnung 20 für die aus dem Extruder 2 austretende und aufbereitete Kunststoffschmelze auf, welche hier nicht näher dargestellt ist. Weiters erstreckt sich ausgehend vom Eintrittsbereich 19 innerhalb der Formgebungseinrichtung 3 zumindest ein Kanal 21 hin in Richtung eines Austrittsbereichs 22. Der oder die Kanäle 21 werden von hier vereinfacht dargestellten äußeren bzw. inneren Kanalwandungen 23, 24 begrenzt. In einem schematisch durch eine Mittellinie dargestelltem Zentrum 25 ist ein Dorn 26 angeordnet, welcher zumindest bereichsweise Abschnitte der Kanalwandungen 24 ausbildet. Dabei kann der Dorn 26 aus einem aber auch aus mehren Bauteilen gebildet sein. Weiters kann zumindest einzelnen der Kanalwandungen 23, 24 eine Kühlvorrichtung 27 für diese zugeordnet sein.

Innerhalb des Kanals 21 ist in dem dem Eintrittsbereich 19 unmittelbar benachbarten Bereich eine zusätzliche Kühlvorrichtung 28 für die hindurchzuführende Kunststoffschmelze angeordnet. Diese zusätzliche Kühlvorrichtung 28 dient bei diesem Ausführungsbeispiel dazu, bevorzugt in jenen Kanälen 21, die zur Ausbildung des Profilmantels 18 des Hohlprofils vorgesehen sind, der Kunststoffschmelze im unmittelbaren Anschluss nach deren Eintritt in die Formgebungseinrichtung 3 eine hohe Wärmemenge zu entziehen.

Bei verwendeten, handelsüblichen PVC (Polyvinylchlorid) -Mischung weist die austretende Kunststoffschmelze beim Verlassen des Extruders ca. 200 °C auf. Nach dem Durchtritt der Kunststoffmasse durch den Teilabschnitt des Kanals 21, in dem die zusätzliche Kühlvorrichtung 28 angeordnet ist, weisen gekühlte Randbereiche bereits eine Temperatur zwischen 80 °C und ca. 120 bis 130 °C auf. Das Ende der zusätzlichen Kühlvorrichtung 28 in Extrusionsrichtung 7 gesehen, liegt dabei ca. in der Hälfte der Längserstreckung der gesamten Formgebungseinrichtung 3.

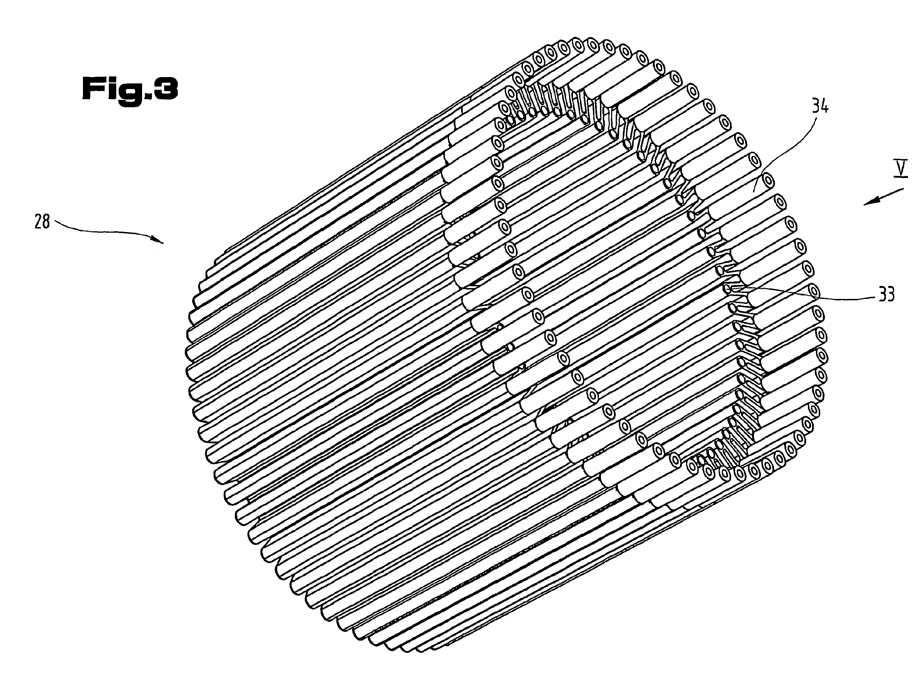

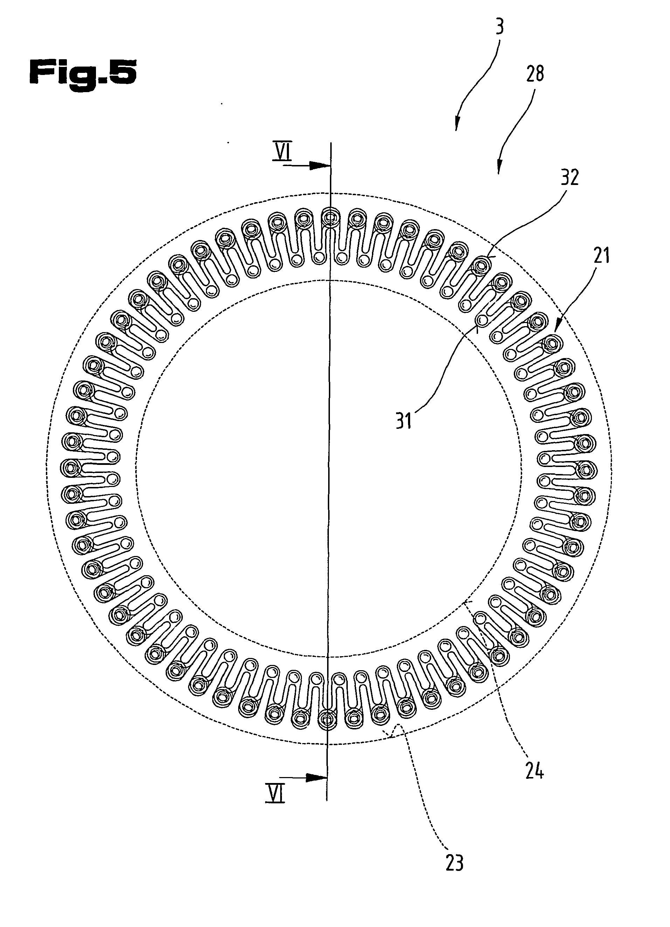

Wie nun besser aus einer Zusammenschau der Fig. 3 bis 9 zu ersehen ist, weist die zusätzliche Kühlvorrichtung 28 in Extrusionsrichtung 7 gesehen, einen in etwa wellenförmig bzw. schlangenlinienförmig ausgerichteten Verlauf auf. Dadurch wird eine große Oberfläche innerhalb kleinster Räume erzielt, wodurch die Kühlwirkung der zusätzlichen Kühlvorrichtung 28 innerhalb des Schmelzestranges wesentlich erhöht und verbessert wird. In der Fig. 5 ist die zusätzliche Kühlvorrichtung 28 in Extrusionsrichtung 7 gesehen dargestellt, wobei zusätzlich noch in strichlierten Linien die den Kanal 21 begrenzende äußere bzw. innere Kanalwandung 23, 24 dargestellt ist. Daraus ist weiters zu ersehen, dass die äußeren Begrenzenden der zusätzlichen Kühlvorrichtung 28 innerhalb des Kanals 21 von den Kanalwandungen 23, 24 distanziert angeordnet ist.

Dadurch wird beim Hindurchführen der Schmelzestrang aus der abzukühlenden Kunststoffschmelze im Bereich der zusätzlichen Kühlvorrichtungen schlangenlinienförmig aufgeteilt, wobei die den beiden Kanalwandungen 23, 24 zugewandte Teilströme des Schmelzestrangs während seiner inneren Kühlung über ihre Querschnitte durchlaufend und somit ununterbrochen ausgebildet werden. Lediglich das Innere des Schmelzestranges wird durch die hier schlangenlinienförmig bzw. wellenförmig ausgebildete Kühlvorrichtung 28 aufgetrennt bzw. unterbrochen, wodurch eine rasche Abkühlung im Inneren des Schmelzestranges erfolgen kann. Durch diese rasche Abkühlung des zähplastischen Schmelzestranges kann bereits ein so genanntes Wandgleiten an den den Kanal 21 begrenzenden Kanalwandungen 23, 24 erzielt werden.

Darüber hinaus wäre es aber auch möglich, dass zumindest bereichsweise Teilabschnitte der den Kanal 21 begrenzenden Kanalwandungen 23, 24 aus einem Werkstoff gebildet sind, dessen Oberflächenspannung gleich oder kleiner ist als jene, der durch den Kanal 21 hindurchzuführenden Kunststoffschmelze. Das Wandgleiten ist von mehreren Faktoren abhängig, wobei als Beispiele hier nur die Temperaturdifferenz zwischen dem Schmelzestrang und den Kanalwandungen 23, 24 sowie der Oberflächenspannung der in Berührung kommenden Materialien (Schmelzestrang-Kanalwandung) erwähnt sei.

So beträgt beispielsweise die Oberflächenspannung einer PVC-Schmelze ca. 37 mN/m bis 70 mN/m. Bisher verwendeter Werkzeugstahl weist eine Oberflächenspannung von ca. 2.500 mN/m auf. Um ein Wandgleiten zu erreichen, ist also ein Wert der Oberflächenspannung zu wählen, der gleich oder kleiner ist jener Oberflächenspannung der hindurchzuführenden Schmelze bzw. des Schmelzestanges. Dabei haben sich hier Werte um 20 mN/m und kleiner als günstig erwiesen. Hier sei als Werkstoff zur Ausbildung der Kanalwandungen 23, 24 beispielsweise PEEK (Polyetheretherketon) genannt, welcher hoch hitzebeständig ist und in welchem noch zusätzliche Verstärkungsfasern eingelagert sein können. Dieser Werkstoff weist beispielsweise eine Oberflächenspannung von 12 mN/m auf. Dieses Wandgleiten ist erwünscht, um die Drücke in der Formgebungseinrichtung zu senken und eine so genannte Blockströmung des hindurchzuführenden Materials zu erzielen, wodurch anschließend ein Aufquellen des Profilquerschnittes im Austrittsbereich 22 verhindert wird. Dabei kann der Schmelzestang nicht nur im Bereich seiner inneren Kühlung, sondern auch nachfolgend beispielsweise in jenem Teilabschnitt des Kanals 21 hindurchgeführt werden, welcher in den Austrittsbereich 22 mündet bzw. diesem zugewendet ist.

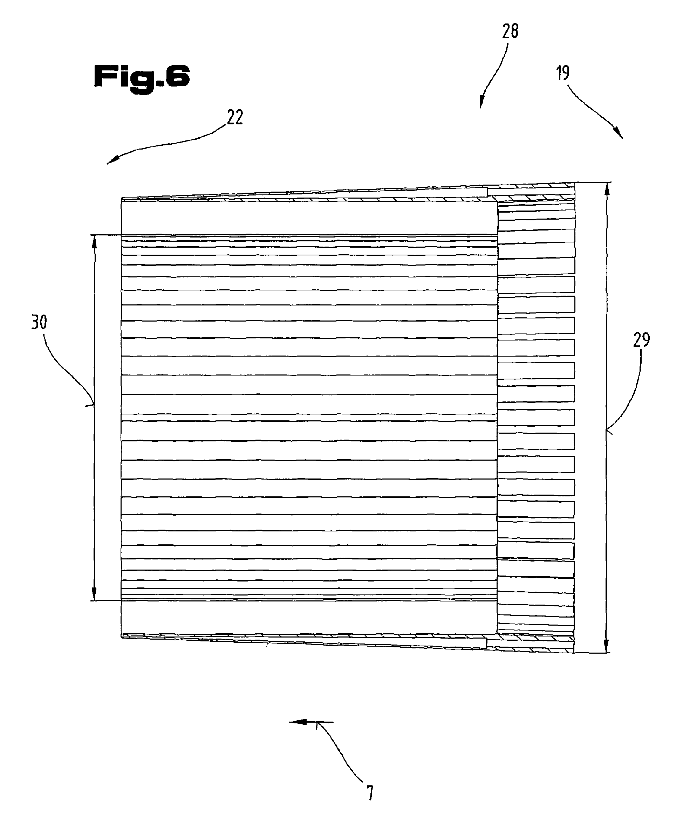

In der Darstellung der Fig. 6 ist weiters noch dargestellt, dass die zusätzliche Kühlvorrichtung 28 über ihre Längserstreckung in Extrusionsrichtung 7 eine abnehmende Außenabmessung 29 in senkrechter Richtung zur Extrusionsrichtung 7 aufweist. Diese Kühlvorrichtung 28 weist bei diesem Ausführungsbeispiel eine in etwa zylinderförmig und somit parallel zum Zentrum 25 verlaufende Innenabmessung 30 auf.

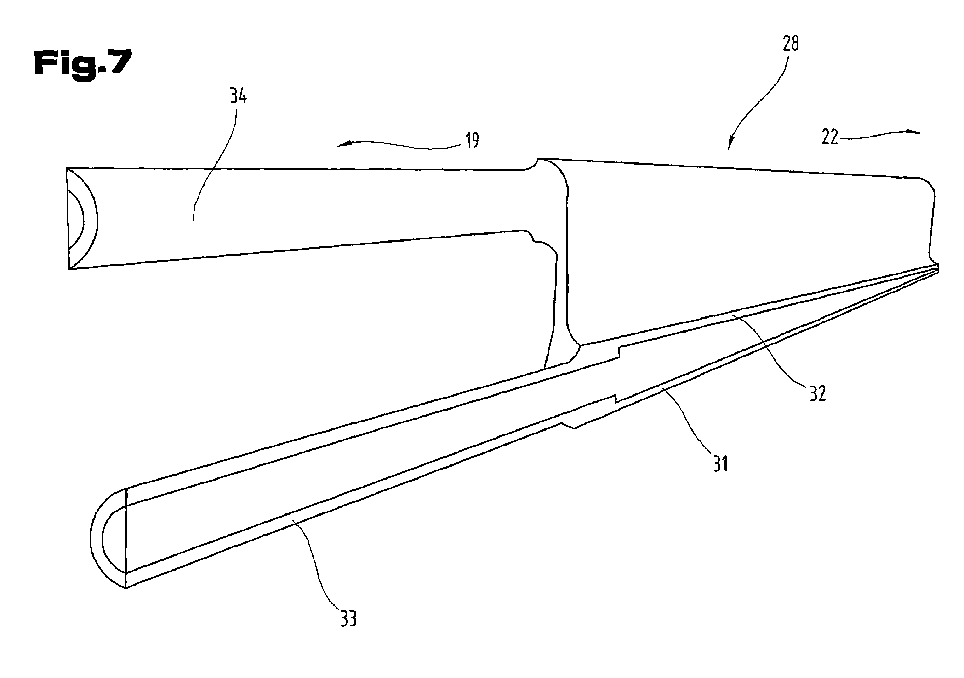

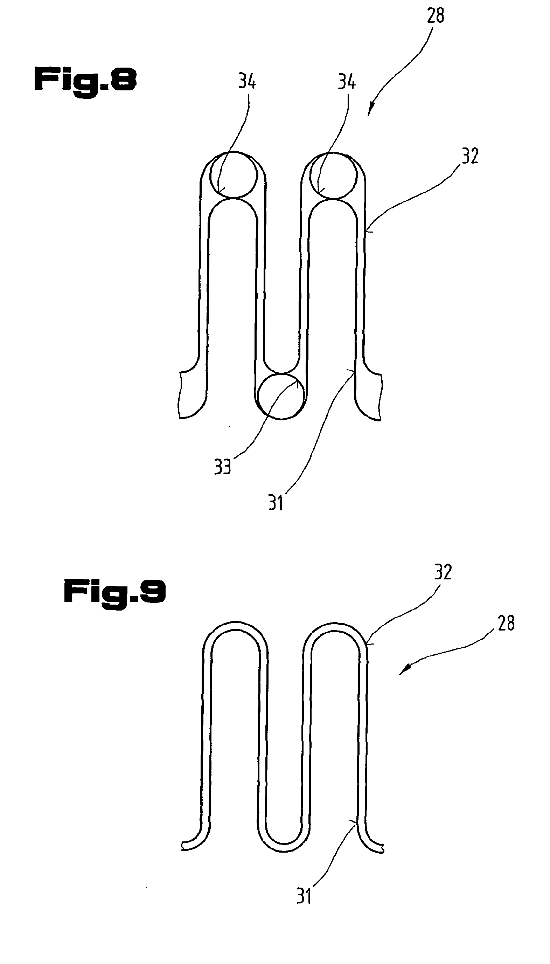

Die zusätzliche Kühlvorrichtung 28 kann aus zwei zueinander wellenförmig und ineinander geschobenen Bauteilen gebildet sein, welche in den einander zugewandten Bereichen einen Aufnahmeraum für ein hier nicht näher dargestelltes Kühlmedium ausbilden. Das dem Austrittsbereich 22 zugewandte Ende der Kühlvorrichtung 28 ist dabei dichtend abgeschlossen, ebenso das dem Eintrittsbereich 19 zugewandte Ende, wie dies vereinfacht in den Fig. 9 bzw. 8 dargestellt ist. Dabei ist ein erster innerer Teil 31 zur Bildung der Kühlvorrichtung 38 sowohl in dem der äußeren Kanalwandung 23 als auch der inneren Kanalwandung 24 zugewandten Bereich parallel ausgebildet. Ein weiterer äußerer Teil 32 der Kühlvorrichtung 28 ist sowohl in dem der äußeren Kanalwandung 23 als auch in dem der inneren Kanalwandung 24 zugewandten Bereich, ausgehend vom Eintrittsbereich 19 hin zum Austrittsbereich 22 konisch verjüngend ausgebildet. Dadurch bildet sich in dem, dem Eintrittsbereich 19 zugewandten Bereich der Kühlvorrichtung 28 an jedem Wellental bzw. Wellenberg die Möglichkeit zur Anordnung von hier nur vereinfacht dargestellten Zu- sowie Ableitungen 33, 34, von denen in der Fig. 3 nur die am Außenumfang angeordneten Ableitungen 34 dargestellt sind. Diese sind mit entsprechenden vereinfacht dargestellten Versorgungsleitungen - Fig. 7 - innerhalb der Formgebungseinrichtung 3 verbunden und ermöglichen diese eine Versorgung der Kühlvorrichtung 38 mit einem Kühlmedium. Dabei kann das Kühlmedium über die Zusowie Ableitungen 33, 34 in einem geschlossenen Kreislauf geführt sein und das Kühlmedium innerhalb diesem hindurchgeführt werden. In diesem geschlossenen Kreislauf ist aufgrund der hohen Menge an Wärmeabfuhr mindestens ein Kühler für das Kühlmedium vorzusehen, wobei zusätzlich noch entsprechende Fördervorrichtung vorzusehen sind. Die Zu- sowie Ableitungen 33, 34 sind nur beispielhaft dargestellt, wobei die Zuleitung näher dem Zentrum 25 und die Ableitung 34 weiter davon distanziert ist. Es wäre aber möglich die beiden Leitungen zu tauschen.

Um ein Hindurchströmen des Kühlmediums zwischen den einander unmittelbar benachbarten bzw. aneinander anliegenden Wandteilen der Kühlvorrichtung 28 zu ermöglichen, sind an deren einander zugewandten Seite jeweils entsprechende Vertiefungen und/oder Erhöhungen vorzusehen, um so Strömungskanäle für eine zwangsweise Durchströmung auszubilden. Dabei sind die einander zugewandten Strömungskanäle im Bezug zueinander gekreuzt auszuführen, um ein Verschließen derselben bei einem Aneinanderanliegen sicher zu vermeiden.

Wie nun wiederum besser aus der Fig. 2 zu ersehen ist, weist der Kanal 21 über dessen Längserstreckung zwischen dem Eintrittsbereich 19 sowie dem Austrittsbereich 22 einen unterschiedlichen Längsverlauf, bezogen auf das Zentrum 25, auf. Darüber hinaus weist der Kanal 21 über dessen Längserstreckung, zwischen dem Eintrittsbereich 19 sowie dem Austrittsbereich 22 eine unterschiedliche Querschnittsabmessung, insbesondere einen abnehmenden und/oder zunehmenden Querschnitt, auf.

Ein Teilabschnitt des Doms 26 im Bereich der zusätzlichen Kühlvorrichtung 28 weist gegenüber der im Eintrittsbereich 19 angeordneten Einlassöffnung 20 eine dazu größere Außenabmessung 35 auf. Dadurch wird der in die Einlassöffnung 20 eintretende Schmelzestrang durch einen an die Einlassöffnung 20 anschließenden Verteilkanal 36 durch die größere Außenabmessung 35 des Dorns 22 in seiner Querschnittsabmessung konisch erweitert und somit aufgeweitet und mündet nach Durchströmen des Verteilkanals 36 in den Teilabschnitt des Kanals 21, in welchem die zusätzliche Kühlvorrichtung 28 angeordnet ist.

Dem entlang der beiden Kanalwandungen 23, 24 entlang gleitenden Schmelzestrom wird im Bereich der zusätzlichen Kühlvorrichtung 28 durch zumindest ein Kühlelement 37, 38 der innerhalb der Formgebungseinrichtung angeordneten Kühlvorrichtung 27 Wärme entzogen und somit auch hier gekühlt. Diese beiden Kühlelemente 37, 38 können beispielsweise durch den zuvor beschriebenen, hoch hitzebeständigen Kunststoffwerkstoff PEEK gebildet sein, um so ein Wandgleiten zu erzielen.

Als Vereinfachung in der Herstellung bzw. Fertigung kann der Kanal 21 im Bereich der zusätzlichen Kühlvorrichtung 28 in einer senkrecht zur Extrusionsrichtung 7 ausgerichteten Ebene einen kreisringförmigen Kanalquerschnitt aufweisen. Es wären aber auch andere Querschnittsformen für den Kanal 21 wie z.B. quadratisch, rechteckig, oval mehreckig usw. möglich. Die äußere, den Kanal 21 im Bereich der zusätzlichen Kühlvorrichtung 28 begrenzende Kanalwandung 23 kann über deren Längserstreckung, bezogen auf das Zentrum 25, vom Eintrittsbereich 19 hin auf den Austrittsbereich 22 verjüngend ausgebildet sein. Bei diesem Ausführungsbeispiel ist die innere, den Kanal 21 im Bereich der zusätzlichen Kühlvorrichtung 28 begrenzende Kanalwandung 24 über deren Längserstreckung, bezogen auf das Zentrum 25 zylindrisch bzw. parallel verlaufend ausgerichtet. Dadurch wird der Schmelzestrom während seinem Hindurchtreten durch diesen Teilabschnitt des Kanals 21 im Bereich der zusätzlichen Kühlvorrichtung 28 in seiner Querschnittsabmessung abnehmend ausgebildet und damit zusammengepresst.

Ein Teilabschnitt des Kanals 21 im Bereich des Austrittsbereiches 22 entspricht in seinem Querschnitt bzw. den Querschnittsabmessungen dem auszuformenden Querschnitt des herzustellenden Gegenstandes 6, insbesondere Hohlprofils. Dabei ist dieser Teilabschnitt des Kanals 21 in seiner Längserstreckung entsprechend der Profilkontur parallel zur Extrusionsrichtung 7 bzw. dem Zentrum 25 ausgebildet.

Zwischen dem zuvor beschriebenen Teilabschnitt des Kanals 21 mit der zusätzlichen Kühlvorrichtung 28 und dem zuletzt beschriebenen parallel ausgerichteten Teilabschnitt des Kanals 21 im Austrittsbereich 22 ist ein weiterer Teilabschnitt mit einem, bezogen auf das Zentrum 25, abnehmenden Querschnitt bzw. abnehmender Abmessung angeordnet, wie dies etwa in der Hälfte der Formgebungseinrichtung 3 angedeutet ist. Dabei wird der durch den Kanal 21 hindurchtretende Schmelzestrang bzw. Schmelzestrom, wie bereits zuvor beschrieben, im Teilabschnitt der zusätzlichen Kühlvorrichtung 28 gekühlt und in dem daran anschließenden weiteren Teilabschnitt hin auf die gewünschte Profilgeometrie umgeformt, wobei der Querschnitt des Kanals 21 am Ende dieses weiteren Teilabschnitts nahezu der herzustellenden Profilgeometrie des Hohlprofils entspricht. Es wäre aber auch unabhängig davon möglich, den weiteren Teilabschnitt des Kanals 21 nicht mit einer abnehmenden Abmessung bzw. einem abnehmenden Querschnitt sondern mit einem gegenüber dem Teilabschnitt mit der zusätzlichen Kühlung 28 vergrößerten Querschnitt bzw. Abmessung auszubilden. Dabei wird der zusätzlich in seinem Inneren gekühlte Schmelzestrang zur Ausbildung des Profilmantels 18 im Anschluss an die innere Kühlung auf den herzustellenden Profilquerschnitt durch Vergrößerung seiner äußeren Abmessung umgeformt. Dies ist jedoch nicht näher dargestellt.

Wie aus der Darstellung der Fig. 2 zu ersehen ist, sind bei diesem Ausführungsbeispiel allen Teilabschnitten des Kanals 21 zur Ausbildung des Profilmantels 18 zumindest bereichsweise, bevorzugt jedoch durchlaufend, Kühlelemente 37 bis 42 der Kühlvorrichtung 27 zugeordnet bzw. bilden diese aus.

Zur Erleichterung der zuvor beschriebenen Umformung des bereits abgekühlten Schmelzestranges im unmittelbaren Anschluss an den Teilabschnitt des Kanals 21 mit dem Kühlelement 28 ist es vorteilhaft, in diesem weiteren Teilabschnitt des Kanals 21 zumindest einzelnen der Kanalwandungen 23, 24 zumindest einen Schwingungserzeuger zuzuordnen. Damit kann der Schmelzestrang während seinem Durchtritt durch die Formgebungseinrichtung 3 mit Schwingungen bzw. Vibrationen behandelt werden, wodurch die Umformung in diesem Bereich auf die herzustellende Profilgeometrie zusätzlich erleichtert wird. Diese Behandlung mit Schwingungen bzw. Vibrationen soll anschließend an die zusätzliche innere Kühlung durchgeführt werden.

Wie bereits zuvor beschrieben wird der bereichsweise abgekühlte Schmelzestrang in seinem Teilabschnitt während des Durchtritts durch den Kanal 21 im Bereich des Austrittsbereichs 22 auf den auszuformenden Querschnitt des herzustellenden Hohlprofils endgültig umgeformt und verfestigt, dass dieser bereits aus der Formgebungseinrichtung 3 als formstabiler Gegenstand 6 austritt. Wie zuvor beschrieben, wird bevorzugt zur Vereinfachung der Herstellung bzw. Fertigung einzelner Teile der Formgebungseinrichtung 3 diese ausgehend vom Eintrittsbereich 19 hin bis zu dem Ende des Teilabschnitts des Kanals 21 mit der darin angeordneten Kühlvorrichtung 28 rotationssymmetrisch in Bezug auf das Zentrum 25 ausgebildet. Dabei können beispielsweise die beiden Kühlelemente 37, 38 in diesem Abschnitt als einfache Spritzgussteile hergestellt werden. Dieser Teilabschnitt der Formgebungseinrichtung 3 kann dann als unabhängig von der auszuformenden Profilgeometrie zu fertigender Standardteil ausgebildet sein, wobei hier auf die Höhe des Massendurchsatzes und der benötigten Menge an Kunststoffschmelze zur Ausbildung der Profilgeometrie Rücksicht zu nehmen ist. Dadurch können unterschiedliche Größen im Bezug auf den Querschnitt bzw. Außenabmessung standardmäßig Verwendung finden.

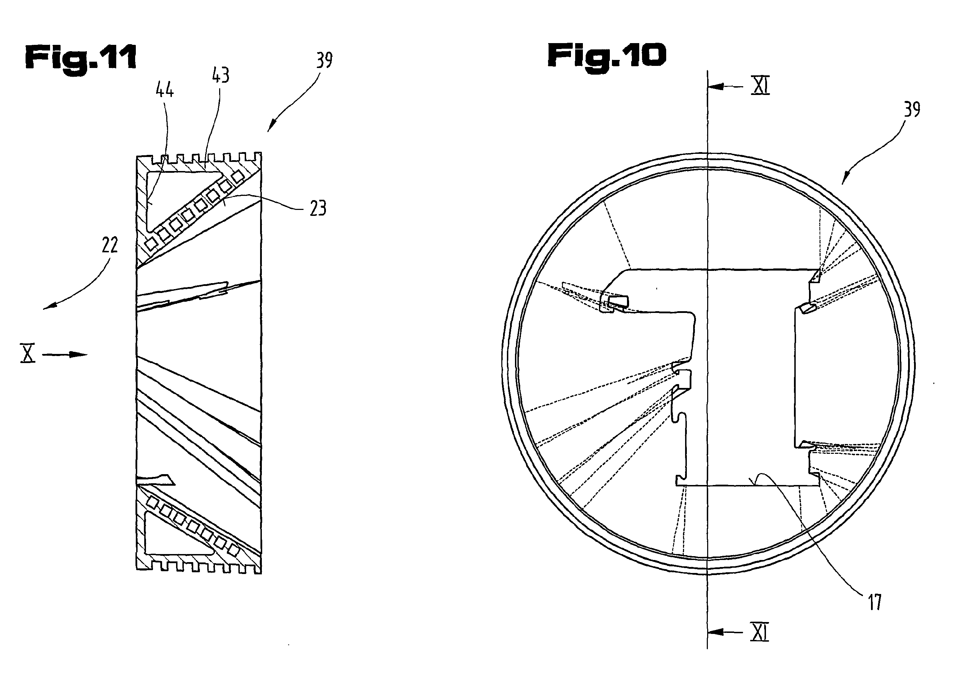

In den Fig. 10 und 11 ist vereinfacht eine Möglichkeit zur Ausbildung des Kühlelements 39 mit der den Kanal 21 im Bereich seiner Außenseite begrenzenden Kanalwandung 23 dargestellt, wobei dieses Kühlelement 39 gleichzeitig auch als Leiteinrichtung innerhalb der Formgebungseinrichtung 3 im Umformbereich dient. In dem dem Austrittsbereich 22 zugewandten Ende weist dieses Kühlelement 39 eine äußere Umrissform des Profilquerschnittes 17 auf, wie dies am besten aus der Fig. 10 zu ersehen ist. Dabei sei erwähnt, dass dieser hier gezeigte Profilquerschnitt nur beispielhaft für eine Vielzahl von möglichen Profilverschnitten gewählt ist. Dabei erfolgt die Überführung bzw. Umformung, ausgehend von einer kreisringförmig ausgebildeten Querschnittsfläche des Schmelzestranges hin zu dem gewünschten Profilquerschnitt. Die hier beschriebene kreisringförmig ausgebildete Querschnittsfläche kann aber auch jede beliebige andere Querschnittsform aufweisen.

Aufgrund der in Extrusionsrichtung 7 gesehen hier rund ausgebildeten Außenabmessung und dem zuvor beschriebenen abnehmenden Kanalquerschnitt im Bereich der Kanalwandung 23 hin zum Profilquerschnitt 17 bildet sich in senkrechter Richtung auf die Extrusionsrichtung 7 gesehen - also in seinem Längsschnitt - ein in etwa dreieckförmiger Wandteil 43 aus, der in seinem Inneren einen umlaufenden Hohlraum 44 aufweisen kann.

Wie bereits zuvor beschriebenen, ist in diesem Teilabschnitt des Kanals 21 der Schwingungserzeuger für die Behandlung des umzuformenden, bereits abgekühlten Schmelzestroms angeordnet, um diese Umformung leichter durchführen zu können. Wird der Hohlraum 44 beispielsweise mit einem entsprechenden Druckmedium beaufschlagt, welches z.B. über eine Mehrkolbenpumpe zugeführt wird, werden je nach Hubanzahl pro Zeiteinheit Druckspitzen in dem Medium erzeugt, wobei diese Druckspitzen ein Schwingen bzw. Vibrieren der Kanalwandungen 23 hervorrufen. Der besseren Übersichtlichkeit halber wurde auf die detaillierte Darstellung dafür nötiger Zu- bzw. Ableitungen bzw. der entsprechenden Einrichtungen verzichtet.

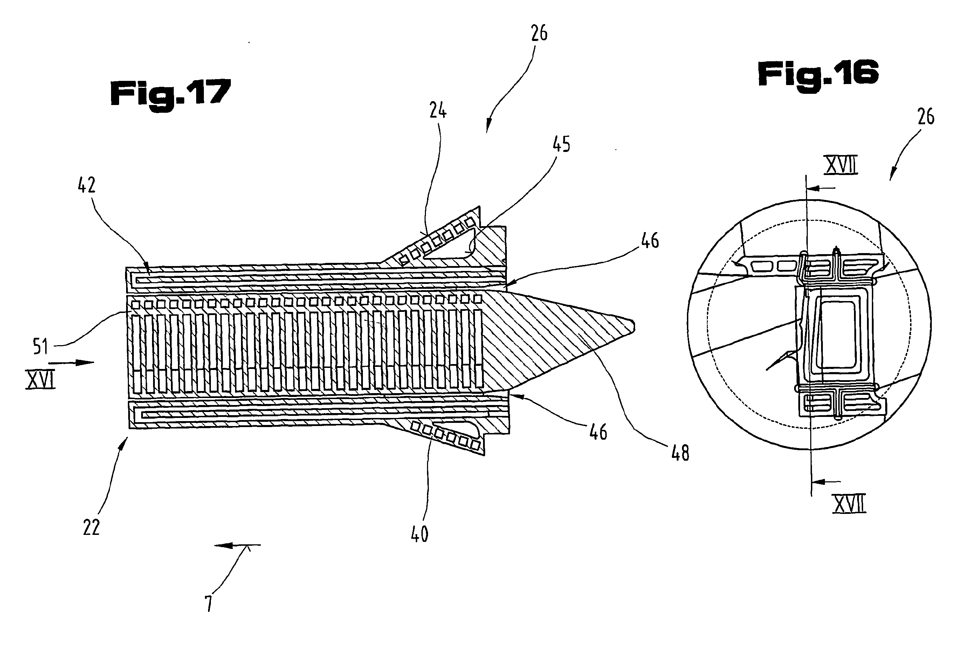

In den Fig. 16 und 17 ist ein Teil des Doms 26 der Formgebungseinrichtung 3 gezeigt, welcher sich ausgehend vom Austrittsbereich 22 hin in Richtung auf den Eintrittsbereich 19 in die Formgebungseinrichtung 3 hinein erstreckt. Die schräg zur Extrusionsrichtung 7 verlaufende innere Kanalwandung 24 des den Kanal 21 begrenzenden Abschnitts bildet sowohl das zuvor beschriebene Kühlelement 40 als auch gegebenenfalls einen weiteren Schwingungserzeuger für die innere Kanalwandung 24 aus. Dazu ist wiederum ein bevorzugt umlaufender Hohlraum 45 der Kanalwandung 24 unmittelbar benachbart im Dorn 26 vorgesehen, welcher, wie bereits zuvor beschrieben, mit einem pulsierenden Druckmedium zur Schwingungserzeugung beaufschlagt werden kann. Es wäre aber auch möglich, die Schwingungen auf elektromagnetischem Wege oder ähnlichem zu erzeugen. Die Frequenz der Schwingungen ist dabei abhängig vom Werkstoff der hindurchtretenden Kunststoffschmelze, dem Abkühlungsrad derselben sowie der dabei erzeugten Energie, welche als Reibungsenergie in die Kunststoffmasse eingebracht und dadurch der Umform- sowie Verbindungsvorgang von dem zuvor aufgetrennten Inneren des Schmelzestranges im Bereich der zusätzlichen Kühlvorrichtung 28 begünstigt wird. Zur Materieleinsparung kann es vorteilhaft sein, das Innere des in den Fig. 16, 17 dargestellten Doms 26 zumindest bereichsweise hohl auszubilden.

Der zuvor detailliert beschriebene Längsverlauf des Kanals 21 dient zur Ausbildung des Profilmantels 18 des Hohlprofils. Zumeist weist das Hohlprofil jedoch in seinem Inneren zumindest einen, bevorzugt mehrere Stege auf. Zur Ausformung derselben weist der Dorn 26 zumindest einen weiteren Kanal 46 zur Ausbildung derselben innerhalb des Hohlprofils auf.

Wie nun wiederum besser aus der Fig. 2 zu ersehen ist, wird der den Profilmantel 18 bildende, vorgekühlte Schmelzestrang innerhalb des Kanals 21 durch die Formgebungseinrichtung 3 hindurch geführt. Ein Teil des Doms 26 weist in dem dem Eintrittsbereich 19 zugewandten Bereich eine Zuströmöffnung 47 zur Ausformung der Stege innerhalb des Hohlprofils und so zur Ausbildung eines Hohlkammerprofils auf. Der zuvor in den Fig. 16 und 17 beschriebene Abschnitt des Dorns 26 weist in dem dem Eintrittsbereich 19 zugewandten Bereich ein kegelförmig ausgebildetes Ende 48 auf, welches den durch die Zuströmöffnung 47 zugeleiteten Schmelzestrom hin zu den jeweiligen, innerhalb des Doms 26 ausgebildeten, weiteren Kanälen 46 überleitet. Zur Vereinigung des Kanals 21 zur Ausbildung des Profilsmantels 18 und der oder die weiteren Kanäle 46 zur Ausbildung der Stege werden diese hier am Ende des zwischen dem Teilabschnitt des Kanals 21 mit der zusätzlichen Kühlvorrichtung 28 und dem Teilabschnitt des Kanals 21 im Austrittsbereich 22 ausgebildeten, weiteren Teilabschnitts an den einander zugewandten Randbereichen zusammengeführt.

Dadurch ist es möglich zuerst jene Teilabschnitte des gesamten Schmelzestroms, welche zur Ausbildung des Profilmantels 18 vorgesehen sind, ausreichend abzukühlen und umzuformen und anschließend daran erst mit den innerhalb des Profilmantels 18 angeordneten Stegen innerhalb der Formgebungseinrichtung 3 zu vereinen.

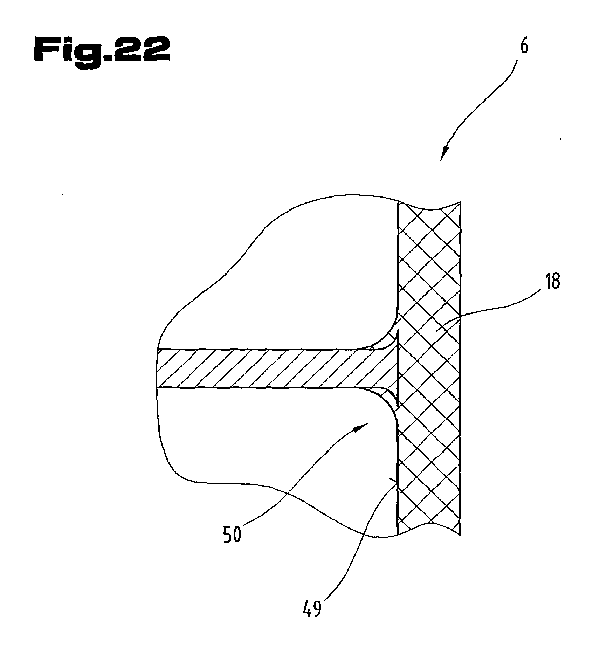

Eine mögliche Ausbildung des Anschlusses eines Steges an den Profilmantel 18 ist vereinfacht in der Fig. 22 dargestellt. So weist der Profilmantel 18 gegenüber dem Steg eine dazu größere Wandstärke auf. Im Anschlussbereich des Steges an eine Innenwand 49 des Profilmantels 18 weist dieser eine querschnittsmäßige Erweiterung, beispielsweise in Form eines Schwalbenschwanzes auf. Zur Vermeidung von Schwächungsstellen innerhalb des Profilmantels 18 soll der Steg in etwa im Bereich einer Innenwand 49 enden. Ausgehend von der Innenwand 49 hin in Richtung auf den Steg weist der Profilmantel 18 einen Übergangsbereich 50 auf, welcher mit dem schwalbenschwanzförmig ausgebildeten Steg nach Ausformung in Eingriff steht. Es wäre aber auch möglich anstelle der Schwalbenschwanzverbindung andere formschlüssige Verbindungen, wie beispielsweise Durchbrüche, Rippen oder dgl. vorzusehen. Ist noch eine ausreichende Wärme zur Verbindung der Randbereiche der Stege mit der Innenwand 49 des Profilmantels 18 vorhanden, kann eine üblicherweise verwendete Anschlussausbildung zwischen Steg und Profilmantel 18 erfolgen.

Zur Abkühlung der Stege innerhalb des Doms 26 können diesem weitere Kühlelemente 51 zugeordnet sein, um auch diese Kunststoffmasse entsprechend abkühlen zu können. Dabei können diese Kühlelemente 51 auch beidseitig der Kanäle 46 bzw. auch umlaufend dazu angeordnet sein.

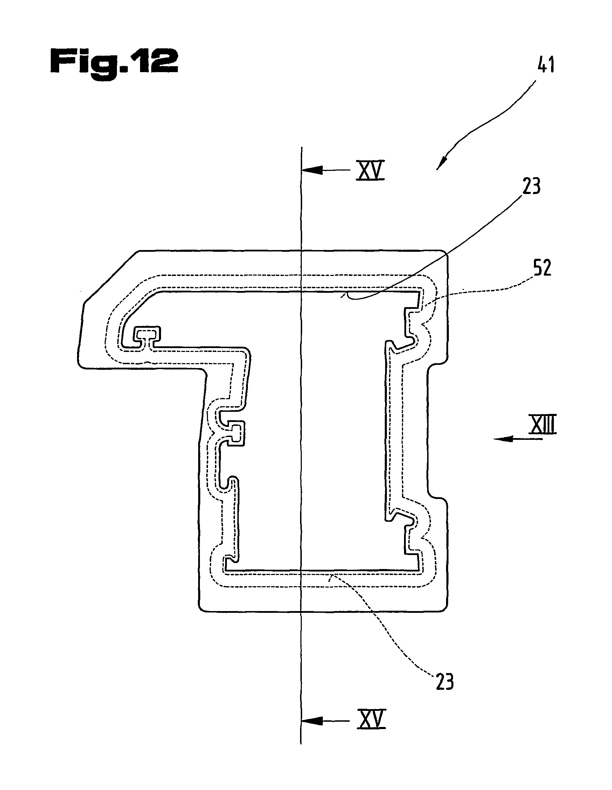

In den Fig. 12 bis 15 ist eine mögliche Ausbildung des Kühlelements 41 gezeigt, welches sich ausgehend vom Austrittsbereich 22 hin in Richtung des Eintrittsbereichs 19 in die Formgebungseinrichtung 3 hinein erstreckt. Mit seiner zuvor beschriebenen Kanalwandungen 23 begrenzt dieses Kühlelement 41 den Kanal 21 zur Ausbildung des Profilmantels 18 in seinem äußeren Umfangsbereich. Innerhalb des Kühlelements 41 sind vereinfachte Kühlkanäle 52 dargestellt, welche unterschiedlichst aus dem allgemeinen Stand der Technik ausgebildet sein können. Der oder die Kühlkanäle 52 sind außen bevorzugt umlaufend über den Profilquerschnitt 17 des abzukühlenden Gegenstandes 6 angeordnet, wobei diese auch spiralförmig über den Längsverlauf in Richtung der Extrusionsrichtung 7 angeordnet sein können. Auf die detaillierte Darstellung sowie Beschreibung der entsprechenden Zu- sowie Ableitungen wurde der besseren Übersichtlichkeit halber verzichtet.

Dieses Kühlelement 41 sowie auch die zuvor bereits beschriebenen, weiteren Kühlelemente 37, 38 und 39 können auch so genannte Einsatzelemente in einem die Formgebungseinrichtung 3 bildenden Grundkörper 53 darstellen. Dadurch ist es möglich, die Kühlelemente 37 bis 42 sowie den Dorn 26 aus zueinander unterschiedlichen Werkstoffen auszubilden, wobei an jeder Stelle innerhalb der Kanäle 21, 46 der dafür geeignete Werkstoff einsetzbar ist. So kann auf das zuvor bereits beschriebene Wandgleiten, eine ausreichende Abriebfestigkeit sowie weiterer Erfordernisse bedacht genommen werden. So kann beispielsweise der sich vom Austrittsbereich 22 hin auf den Eintrittsbereich 19 erstreckende Dorn 26 bzw. Domabschnitt sowie gegebenenfalls die Kühlelemente 39, 41 aus einem keramischen Werkstoff gebildet sein. Dieser keramische Werkstoff weist eine hohe Beständigkeit gegen Verschleiß auf. Es wäre aber auch möglich, die zuvor beschriebenen Kühlelemente auch aus speziellen Legierungen, Kunststoffen bzw. Kunststoffmischungen herzustellen.

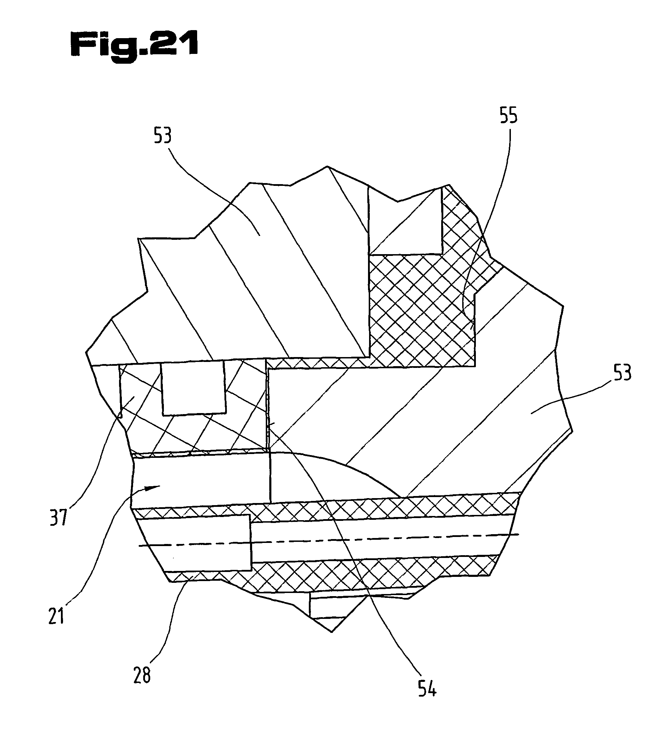

Aus einer Zusammenschau der Fig. 2 und 21 ist zu ersehen, dass am Beginn des Kanalabschnittes des Kanals 21, in welchem die zusätzliche Kühlvorrichtung 28 angeordnet ist, zwischen dem Grundkörper 53 und dem in den Grundkörper 53 der Formgebungseinrichtung 3 eingesetzten Kühlelement 37 an dessen dem Eintrittsbereich 19 zugewandten Stirnbereich 54 ein vereinfacht dargestellter Verteilkanal 55 in den Kanal 21 hinein mündet. Dieser Verteilkanal 55 bzw. Zuleitung ist bei diesem Ausführungsbeispiel der äußeren Kanalwandung 23 des Kanals 21 zugeordnet und dient zur Zufuhr eines Schmier- bzw. Gleitmittels. Es wäre aber auch möglich, auch der inneren Kanalwandung 24 sowie den Kanälen 46 zu Ausbildung der Stege einen weiteren Verteilkanal 55 für die Zufuhr des Schmier- bzw. Gleitmittels zuzuordnen. Dieses Schmier- bzw. Gleitmittel soll in erster Linie dazu dienen, das Wandgleiten der durch den Kanal 21 sowie gegebenenfalls den Kanal 46 hindurch tretenden Kunststoffschmelze während deren Abkühlung bis zur Ausbildung einer Blockströmung zu unterstützen bzw. zu gewährleisten. Als Schmier- bzw. Gleitmittel können Wachse oder Öle Verwendung finden, welche bei derartig hohen Temperaturen sich in einem fließfähigen Aggregatzustand befinden. Diese Wachse und Öle sind auch bereits in gewissen PVC-Mischungen eingelagert und dienen dort ebenfalls zur Gleitunterstützung. Diese verwendeten Gleit- bzw. Schmiermittel können weiters auch noch dazu dienen, nach dem Erkalten als Schutzschicht am Profil haften zu bleiben, um das Profil wasser- bzw. schmutzabweisend mit einem dünnen Film zu umgeben. Weiters können diese Schmier- bzw. Gleitmittel auch noch Zusätze enthalten, welche als Filter für unterschiedlichste Strahlung, wie beispielsweise UV-, Infrarotstrahlung , usw. dienen können. Darüber hinaus wäre es aber auch noch möglich, mit dieser Schutzschicht einen so genannten Lotuseffekt zu erzielen, um das Anhaften von Schmutzpartikeln oder aber auch Wasser zu verhindern bzw. zu erschweren und gegebenenfalls auch eine Selbstreinigung zu erzielen.

Der zuvor beschriebene Verteilkanal 55 kann über den gesamten Außenumfang des Kanal- bzw. Profilquerschnittes 17 durchlaufend ausgebildet sein. Dies gilt auch für den weitem Verteilkanal 55 im Bereich der inneren Kanalwandungen 24 sowie auch der den Kanal 46 oder die Kanäle 46 begrenzenden Kanalwandungen.

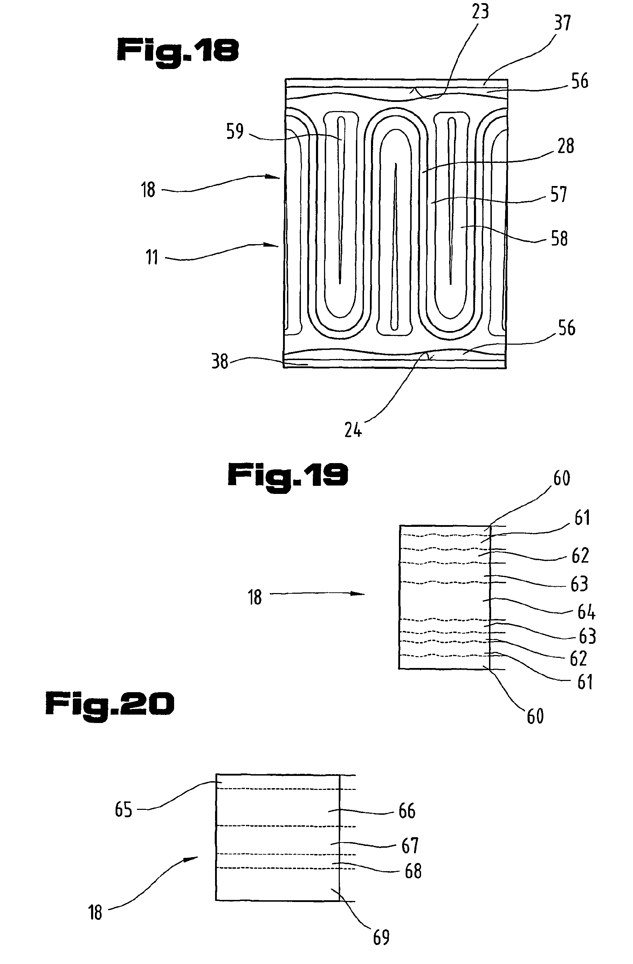

In der Fig. 18 ist ein Teilquerschnitt des Kanals 21 mit der darin angeordneten und bereits gekühlten Kunststoffschmelze sowie der innerhalb des Kanals 21 zusätzlich angeordneten Kühlvorrichtung 28 vereinfacht dargestellt. Dabei ist die Kühlvorrichtung 28 vereinfacht in Schlangenlinienform bzw. Wellenform ausgebildet. Die Kühlvorrichtung 28 weist bei diesem hier dargestellten Ausführungsbeispiel an dem dem Austrittsbereich 22 näher liegenden Ende beispielsweise eine Temperatur zwischen 60 und 80 °C auf. Teilbereiche der hier dargestellten und den Kanal 21 begrenzenden Kühlelemente 37, 38 weisen dabei eine ähnliche Temperatur zwischen 60 und 80 °C auf. Randbereiche 56 der gekühlten Kunststoffmasse, welche den Kanalwandungen 23, 24 zugewandt sind, weisen bei entsprechender Kühlung durch die beiden nur teilweise dargestellten Kühlelemente 37, 38 eine Temperatur zwischen 100 und 130 °C auf.

Ein an die Kühlelemente 28 unmittelbar anschließender Abschnitt 57 weist hier eine Temperatur zwischen 100 und 130 °C auf. Ein weiterer Abschnitt 58, der benachbart dem Abschnitt 57 verläuft und sich in ins Zentrum der Wellenform erstreckt, weist ca. eine Temperatur von 150 °C auf. Im Zentrum der Wellenform soll ein schmaler Schmelzestreifen erhalten bleiben, welcher als Abschnitt 59 in der Fig. 18 dargestellt ist, wobei dieser in einem Temperaturbereich zwischen 160 und 170 ° liegen soll.

Durch die bereits zuvor beschriebene große Fläche der Kühlvorrichtung 28 und der wellenförmigen Aufteilung des Schmelzestranges in seinem Querschnitt wird die Verformung nach dem Austritt aus dem Teilabschnitt des Kanals 21 mit der zusätzlichen Kühlvorrichtung 28 hin in den Teilabschnitt des Kanals 21 im Austrittsbereich 22 wesentlich erleichtert, da sowohl durch die Abnahme des Kanalquerschnittes als auch der Außenabmessung eine starke Kompression auf die hindurchtretende Kunststoffschmelze ausgeübt wird, und durch die wellenlinienförmige Aufteilung die Kunststoffmasse in ihrem Inneren leichter gegeneinander verschiebbar bzw. verformbar ist. In diesem Verformungs- bzw. Übergangsbereich zwischen dem Teilabschnitt des Kanals 21 mit der zusätzlichen Kühlvorrichtung 28 und dem Teilabschnitt des Kanals 21 im Austrittsbereich 22 erfolgt innerhalb des Schmelzestranges ein Temperaturausgleich zwischen den zuvor beschriebenen Abschnitten 57 und 59.

In der Fig. 19 ist ein Teilquerschnitt des Profilmantels 18 am Ende der Formgebungseinrichtung 3 in deren Austrittsbereich 22 dargestellt. Die Aufteilung der Temperaturbereiche innerhalb des Querschnitts wurde vereinfacht durch strichlierte Linien angedeutet, wobei ausgehend von den Randbereichen des Profilmantels 18 verschiedene Abschnitte 60 bis 64 eingetragen worden sind und Abschnitte mit gleichen Bezugszeichen gleiche Temperaturbereiche bzw. Temperaturwerte aufweisen. So betragen die Temperaturwerte der beiden, den Randbereichen des Profilmantels 18 unmittelbar benachbarten Abschnitte 60 ca. 50 °C. Die weiteren daran hin in Richtung der Mitte des Profilmantels 18 anschließenden Abschnitte 68 weisen eine Temperatur zwischen 60 ° und 70 °, die weiteren Abschnitte 62 eine Temperatur zwischen 80 und 85 °C, die weiteren Abschnitte 63 zwischen 85 °C und 90 °C und schließlich der in der Mitte angeordnete Abschnitt 64 eine Temperatur von ca. 100 °C bis 110 °C auf.

Daraus ist zu ersehen, dass zumindest die Randbereiche des Profilmantels 18 eine derart niedrige Temperatur aufweisen, dass der aus der Formgebungseinrichtung 3 austretende Gegenstand 6 formstabil und die noch im Profil enthaltene Restwärme durch eine einfache Nachkühlung abzuführen ist.

Als Abzugsgeschwindigkeit für den Gegenstand 6 aus der Formgebungseinrichtung 3 wurde für die Ermittlung der Temperaturschaubilder in den Fig. 18 und 19 eine Abzugsgeschwindigkeit von 4 m/min angenommen. Die in die Formgebungseinrichtung 3 eintretende Kunststoffschmelze weist dabei eine Temperatur von ca. 200 °C auf. Die Darstellung der Temperaturverteilung in der Fig. 18 ist nach einer Zeitdauer von 6 sec ermittelt worden, wobei sich dieser Querschnitt, wie bereits zuvor beschrieben, am Ende der zusätzlichen Kühlvorrichtung 28 befindet. Bei bisher bekannten und eine Extrusionsdüse aufweisenden Extrusionsanlagen befinden sich die Kunststoffschmelze noch innerhalb der üblicherweise verwendeten Extrusionsdüse und weist dort noch die ca. 200 °C auf.

Weiters ist bei dieser Formgebungseinrichtung 3 vorgesehen, dass der Extruder 2 das aufbereitete Kunststoffmaterial durch die Formgebungseinrichtung 3 hindurchdrückt bzw. schiebt und deshalb auch auf einen Raupenabzug 5 gegebenenfalls verzichtet werden kann. Um Stauchungen des aus der Formgebungseinrichtung 3 austretenden Gegenstandes 6 während dem Hindurchtreten durch die Kühleinrichtung 4 zu vermeiden, kann eine Transportunterstützung mit einer Zugkraft von ca. 2000 N Verwendung finden. Dabei kann diese Transportunterstützung beispielsweise durch ein Förderband mit Saugnäpfen oder aber auch ein Vakuumband erfolgen.

In der Fig. 20 ist ein Teilabschnitt des Profilmantels 18 gezeigt, wie der Abkühlungsverlauf bei bisher bekannten Extrusionsanlagen mit Extrusionsdüse und nachfolgender Trockenkalibrierung stattgefunden hat. Für diese Darstellung wurde ein Zeitpunkt gewählt, bei welchem der herzustellende Gegenstand 6 bereits ca. 50 cm in die Trockenkalibrierung eingetreten ist. Die hier ebenfalls vereinfacht eingetragenen Abschnitte 65 bis 69 weisen ausgehend von dem hier dargestellten ersten Abschnitt 65 hin in Richtung auf das Innere des Gegenstandes 6 eine ständige Temperaturzunahme auf, wobei der Abschnitt 65 ca. eine Temperatur von 90 °C, der weitere Abschnitt 66 eine Temperatur von ca. 110 °C, der weitere Abschnitt 67 von ca. 155 °C, der weitere Abschnitt 68 von ca. 170 °C und schließlich der letzte Abschnitt 69 eine Temperatur von ca. 190 °C aufweist. Aus einer Zusammenschau der Fig. 19 und 20 ist zu ersehen, dass durch die rasche innere Abkühlung des Schmelzestroms unmittelbar nach dessen Eintritt in die Formgebungseinrichtung 3 die Kunststoffschmelze wesentlich rascher abgekühlt wird, als bei bisher bekannten Verfahren.

Die zuvor detailliert beschriebene Formgebungseinrichtung 3 kann in einem so genannten Hülsenkonzept aufgebaut werden, wobei der die Formgebungseinrichtung 3 in seinem äußeren umgebende bzw. bildende Grundkörper 53 aus einem kostengünstigen Normstahl gebildet sowie gegebenenfalls geteilt ausgeführt und zu einer Baueinheit zusammengesetzt sein kann. Dabei kann die Baulänge der erfindungsgemäßen Formgebungseinrichtung 3 beispielsweise zwischen 300 mm und 1.000 mm betragen, wobei dies abhängig von der Ausstoßleistung ist. Die zur Ausformung bzw. Umformung des Schmelzestranges im Inneren der Formgebungseinrichtung 3 angeordneten Kühlelemente 37 bis 42 bzw. der Dorn 26 sind hülsenförmig ineinander setzbar ausgebildet und im Grundkörper 53 gehalten. Durch diesen erfolgt auch die Zu- sowie Ableitung entsprechend benötigter Kühlmittel, Schmiermittel, Energieversorgung usw. Als Keramikwerkstoffe können beispielsweise Bornitrit oder Siliziumnitrit oder Zirkonnitrit Verwendung finden. Diese zeichnen sich durch hohe Verschleißfestigkeit, hohe Wärmeleitfähigkeit sowie zähes Material aus.

Mit Vorteil wird ein Wandgleiten der durch den Kanal 21, 46 oder die Kanäle 21, 46 hindurchzuführenden Kunststoffschmelze bei Verwendung einer Beschichtung erzielt. Dabei können die entsprechend gewünschten Oberflächeneigenschaften der Kanalwandungen 23, 24 über den Längsverlauf des Kanals 21, 46 auf unterschiedlichste Anforderungen und Einsatzbedingungen eingestellt werden. Das Aufbringen kann dabei beispielsweise durch Tauchen und anschließendes Trocknen erfolgen, wobei die Aufbringung derartiger Beschichtungen zyklisch, nach jedem Reinigungs- bzw. Wartungsvorgang der Formgebungseinrichtung, erfolgen kann. Diese Beschichtung kann sowohl auf herkömmliche Bauteile aus Stahl bzw. Eisenwerkstoff, als auch auf die aus den unterschiedlichsten Werkstoffen gebildeten Kühlelemente 37 bis 42 aufgebracht werden. Dabei kann die Beschichtung aus der Gruppe von Bornitrit, Siliziumnitrit, Zirkonnitrit oder einer Nanobeschichtung gewählt sein. Durch entsprechend eingearbeitete Oberflächenstrukturen auf den Kanalwandungen 23, 24 kann ebenfalls ein Wandgleiten des Schmelzestranges an diesen erzielt werden.

Weiters können die Kühlelemente 37 bis 42 als Standardbauteile vorgefertigt. Dabei kann ein Spritzgussverfahren Anwendung finden, wobei hier auf einfache Art und Weise durch entsprechende Wahl des Werkstoffes auf die Oberflächenspannung im Hinblick auf das Wandgleiten Rücksicht genommen werden kann sowie zusätzlich noch im Spritzgussverfahren eine Oberflächenstruktur für das Verbessern des Wandgleitens einformbar ist. So ist ein modulartiger Aufbau der Formgebungseinrichtung 3 zu erzielen.

Dadurch können Bauteile geschaffen werden, welche in einem Arbeitsvorgang als einstückige Bauteile ausgebildet werden, und diese ohne hohen Fügeaufwand modulartig zur Formgebungseinrichtung 3 zusammengesetzt werden können.

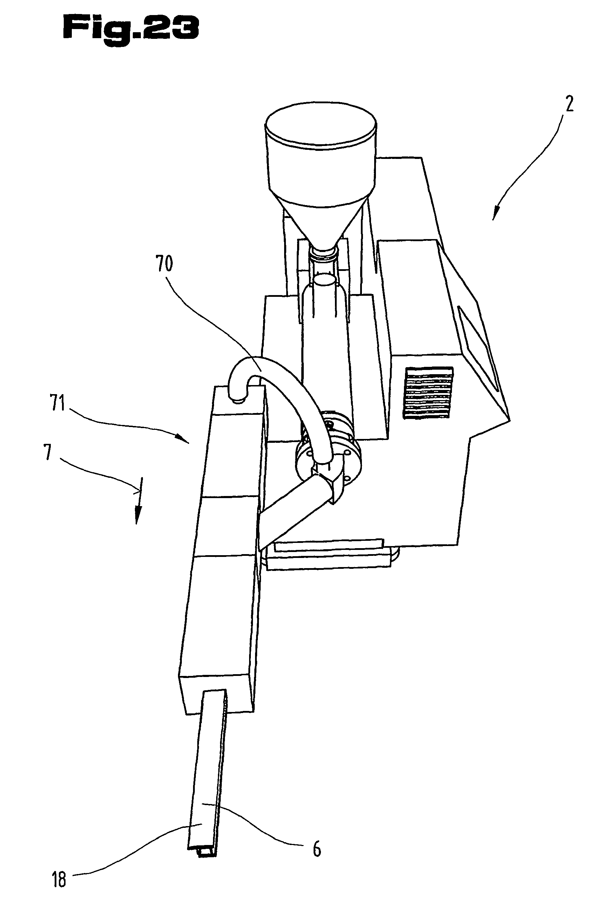

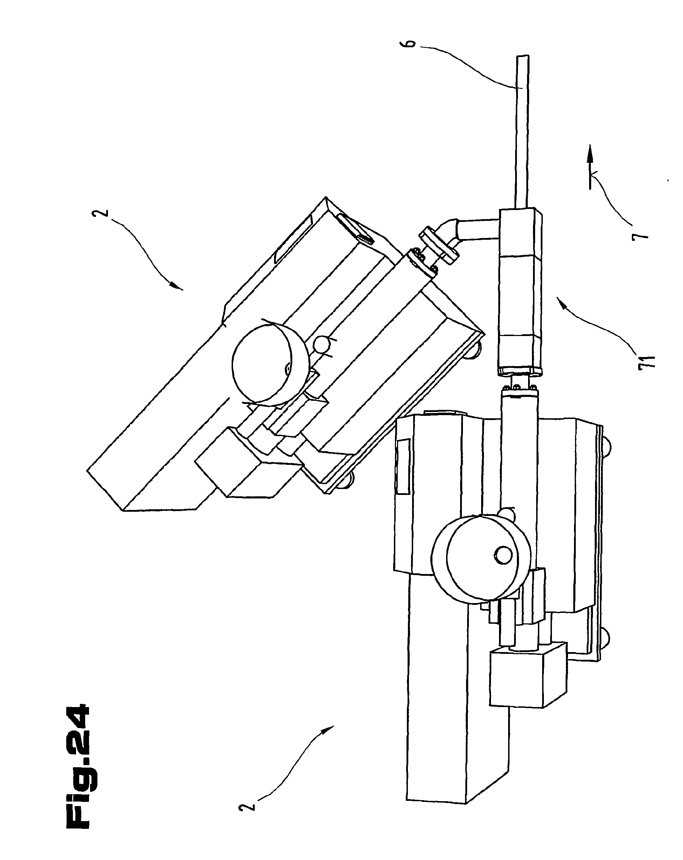

In den Fig. 23 und 24 sind vereinfachte Möglichkeiten zur räumlich getrennten Herstellung von Profilmantel 18 und Stegen innerhalb des Gegenstandes 6 gezeigt.

Bei der in der Fig. 23 gezeigten Lösung wird ein einziger Extruder 2 verwendet, bei welchem am Extruderende ein Teilstrom des aus diesem austretenden Massestroms mittels einer vereinfacht dargestellten Leitung 70 abgezweigt wird und dieser Teilstrom der Kunststoffmasse zur Herstellung der Stege innerhalb des Profilmantels 18 dient. An dem Extruder 2 ist eine zweistufige Formgebungseinrichtung 71 vereinfacht dargestellt, wobei in der ersten Stufe, wie bereits zuvor beschrieben, die Innenstege erzeugt und gekühlt werden, wobei die Zufuhr der Kunststoffschmelze über die Leitung 70 erfolgt. Die in der ersten Stufe hergestellten Innenstege werden in die zweite unmittelbar daran in Extrusionsrichtung 7 nachfolgende zweite Stufe eingeführt und dort zum fertig herzustellenden Gegenstand 6 mit dem Profilmantel 18 umgeben bzw. zusammengeführt. Die Vorteile liegen in einer wesentlich besseren Kühlleistung, einer exakteren Führung und Positionierung der Innenstege, einer Minimierung des Verzugs sowie einer einfacheren Konstruktion im Vorhinein.

In der Fig. 24 ist ebenfalls eine zweistufige Formgebungseinrichtung 71 dargestellt, an welcher jedoch zwei Extruder angeschlossenen sind. So liefert der in Extrusionsrichtung 7 ausgerichtete Extruder 2 das für die Herstellung der Stege bzw. Innenstege notwendige Material, wobei dieses in der ersten Stufe umgeformt und gekühlt wird. Hier können beispielsweise kleine Extruder aufgrund der geringeren notwendigen Menge zur Herstellung der Stege Verwendung finden. Die in der ersten Stufe hergestellten Stege bzw. Innenstege werden in die zweite Stufe eingeführt und dort das fertige Profil bzw. der Gegenstand 6 durch Umhüllen der Stege mit dem Profilmantel 18 fertig gestellt. Hier wird eine größere Menge an Material benötigt, wobei hier der Extruder größer zu wählen ist.

Durch die zweistufig aufgebaute Formgebungseinrichtung 71 wird eine wesentlich bessere Kühlleistung, eine exaktere Führung und Positionierung der Innenstege, eine Minimierung des Verzuges sowie eine leichtere Vorauskonstruktion ermöglicht. Zusätzlich kann dabei aber für die innerhalb des Profilmantels 18 angeordneten Stege bzw. Innenstege ein Recyclingmaterial bzw. auch ein zum Profilmantel unterschiedlicher Werkstoff eingesetzt werden.

Die hier zweistufig ausgebildeten Formgebungseinrichtungen 71 können gemäß dem zuvor beschriebenen Konzept für die detailliert beschriebene Formgebungseinrichtung 3 aufgebaut werden, wobei das Zusammenführen der Stege bzw. Innenstege und des Profilmantels 18 gemäß der Darstellung in der Fig. 22 erfolgen kann. Weiters wurde noch in der Fig. 22 durch die Wahl unterschiedlicher Schraffur dargestellt, dass die Stege und der Profilmantel 18 aus zueinander unterschiedlichen Materialien hergestellt bzw. Recyclingmaterial für die Innenstege verwendet werden kann.

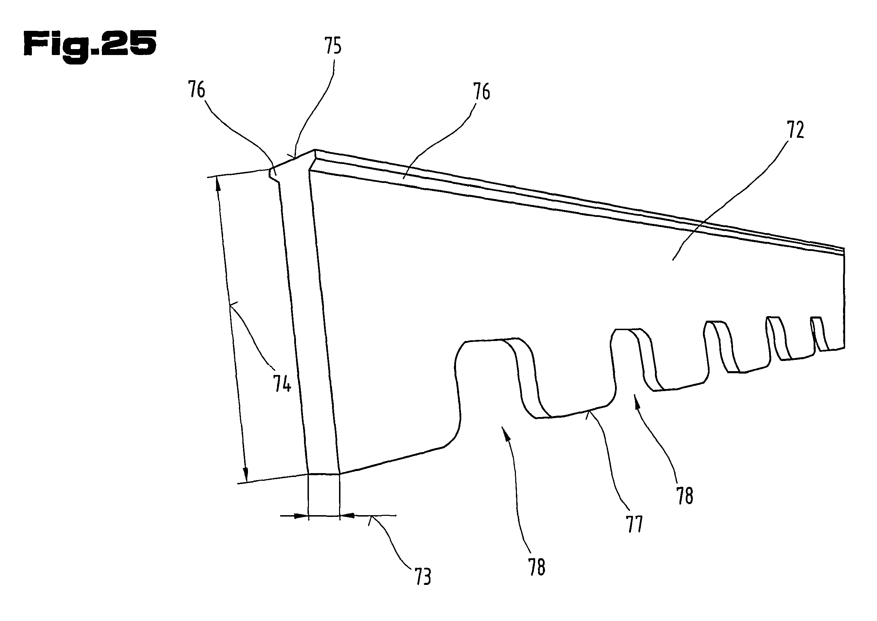

In der Fig. 25 ist ein bandförmiger Streifen 72 dargestellt, welcher als Anfahrhilfe zur Ausformung des Gegenstandes 6 Verwendung finden kann. Dieser Streifen 72 weist quer zu seiner Längserstreckung zwischen seine Flachseiten einen Stärke 73 auf, welche in etwa der herzustellenden Stärke des Steges innerhalb des Profilmantels 18 entsprechen kann. Eine in dazu senkrechter Richtung ermittelte Höhe 74 des bandförmigen Streifens 72 ist dabei geringer gewählt, als eine Länge eines hier nicht näher dargestellten Steges. An einer Längsseite 75 weist der Streifen 72 eine Verbreiterung 76 auf, welche bevorzugt durchlaufend über die Länge des gesamten Streifens 72 ausgebildet ist. Bevorzugt sind jedoch beidseits des Streifens in Richtung seiner Stärke 73 überragende Verbreiterungen 76 vorgesehen, welchen in Form einer Längsrippe bevorzugt durchlaufend ausgebildet sind. Dabei können die Verbreiterungen 76 in ihrem Querschnitt senkrecht zur Längserstreckung des Streifens 72 schwalbenschwanzförmig ausgebildet sein.

An einer weiteren Längsseite 77 sind ausgehend von dieser in Längserstreckung des Streifens 72 hintereinander angeordnete Ausnehmungen 78 angeordnet. Diese Ausnehmungen 78 erstrecken sich ausgehend von der Längsseite 77 nur über einen Teilbereich der Höhe 74 in Richtung auf die gegenüberliegende Längsseite 75. Die Form der Ausnehmungen 78 ist hier nur beispielhaft gewählt, wobei es unabhängig davon aber auch möglich ist, anstatt der Ausnehmungen 78 und/oder zusätzlich dazu nur Durchbrüche im Streifen 72 anzuordnen.

Der Streifen 72 dient als automatische Anfahrhilfe in Verbindung der Formgebungseinrichtung 3 bzw. 71 und wird ausgehend vom Eintrittsbereich 22 hin in Richtung auf den Eintrittsbereich 19 in die Formgebungseinrichtung 3, 71 im Bereich der herzustellenden Stege eingeschoben. Da die Höhe 74 geringer ist als die herzustellende Breite des Steges, wird während des Anfahrvorganges das zur Ausbildung des Steges notwendige Kunststoffmaterial in den Kanal 46 eingebracht und dort an den bereits eingeschobenen Streifen 72 formschlüssig in die Ausnehmungen 78 eingeformt. Bei fortschreitender Extrusion wird das zur Ausbildung der Stege in den oder die Kanäle 46 eingebrachte Kunststoffmaterial weiter in Richtung des Austrittsbereichs 22 gedrückt und dabei der eingeschobene Streifen 72 hin in Richtung des Austrittsbereichs 22 gedrückt bzw. kann dieser unter leichtem Zug aus der Formgebungseinrichtung 3, 71 herausgezogen werden.

Durch diesen bandförmigen Streifen 72 ist ein teilautomatisches Anfahren möglich, wobei gleichzeitig damit auch die zuvor in den Fig. 23 und 24 beschriebene, gestaffelte Ausbildung in zweistufigen Formgebungseinrichtungen 71 möglich ist.

Die vor dem Anfahrvorgang bereits in die Formgebungseinrichtung 3, 71 eingefädelten Streifen 72 können beispielsweise aus PVC gebildet sein, welche mit bisher bekannten Abzugsvorrichtungen verbunden sein können, wodurch eine wesentliche Erleichterung des Anfahrens erreicht wird. Beim Anfahren können diese Streifen 72 auch bereichsweise mit dem herzustellenden Gegenstand 6, insbesondere dessen Stegen bzw. Profilmantel 18, verschmelzen, wodurch eine gute Auszugskraft bzw. Haltekraft innerhalb des Gegenstandes 6 erzielbar ist.

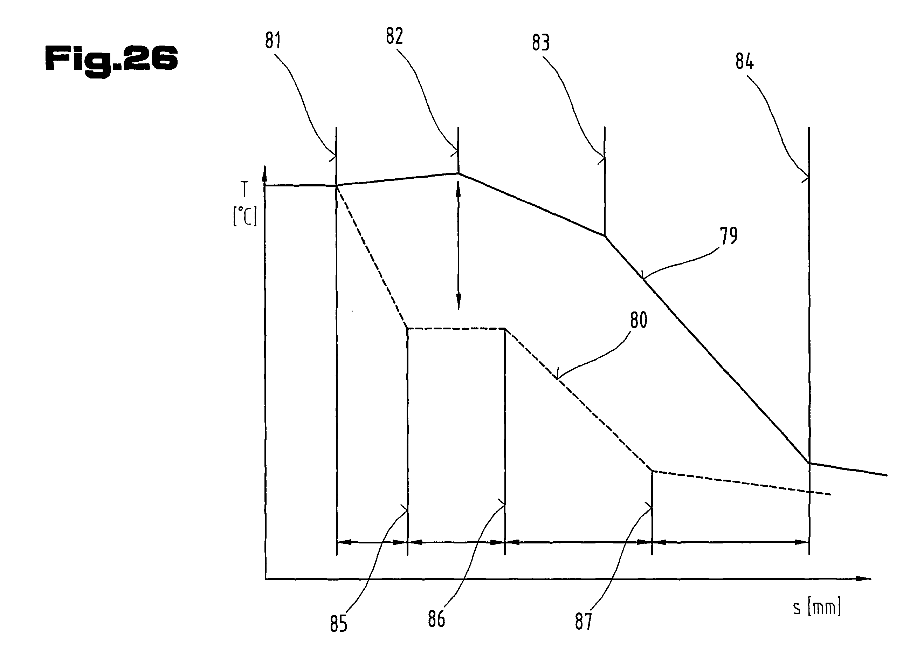

In der Fig. 26 ist ein Diagramm des Temperaturverlaufes über eine Wegstrecke in zwei unterschiedlichen Diagrammlinien dargestellt. So wurde auf der Ordinate die Temperatur "t" in [°C] und auf der Abszisse der Weg "s" in [mm] aufgetragen. Eine durchlaufend dargestellte Diagrammlinie 79 zeigt den Temperaturverlauf der PVC-Masse in bisher bekannter Form, während deren Abkühlung, ausgehend vom Extruder bis hin zum Verlassen des Gegenstandes 6 aus den üblicherweise verwendeten Kühltanks. Eine weitere strichlierte Diagrammlinie 80 zeigt den Temperaturverlauf der PVC-Masse unter Verwendung der erfindungsgemäßen Formgebungseinrichtung 3 bzw. 71. Eine im Diagramm eingetragene, parallel zur Ordinate ausgerichtete Linie zeigt die PVC-Masse am Extruderausgang 81. Eine weitere dazu parallele Linie im Bereich der ersten Diagrammlinie 79 stellt ein Düsenende 82 dar. Im Extruder wird die PVC-Masse auf eine Temperatur von ca. 200 °C verbracht und mit dieser Temperatur aus diesem ausgegeben. Während der Wegstrecke zwischen dem Extruderausgang 81 und dem Düsenende 82 erfolgt durch die zusätzliche Heizung und Umformung eine Temperaturerhöhung der PVC-Masse innerhalb der Düse, wie dies aus der Diagrammlinie 79 zu ersehen ist. Eine weitere parallel zur Ordinate ausgerichtete Linie zeigt ein Trockenkaliberende 83, in welchem in bekannter Weise die Formgebung des Profilmantels 18 erfolgt. Hier ist bereits eine gewisse Abnahme der Temperatur zu ersehen. Schließlich ist in einer weiteren Linie ein Kühltankende 84 dargestellt, wobei hier der Gegenstand 6 bereits Raumtemperatur aufweisen kann.

Die weitere, in strichlierten Linien dargestellte Diagrammlinie 80 beginnt am Extruderausgang 81, wobei in einer ersten Wegstrecke bis hin zu einem Vorkühlungsende 85 die in die Formgebungseinrichtung 3, 71 eintretende Kunststoffmasse durch die zuvor beschriebene zusätzliche Kühlvorrichtung 28 sowie Kühlelemente 37, 38 gekühlt wird. Hieraus ist im Vergleich zur Diagrammlinie 79 bereits eine markante Temperaturdifferenz zu ersehen, wie dies auch in der Fig. 18 dargestellt und beschrieben worden ist. Im Anschluss an das Vorkühlungsende erfolgt die Formgebung innerhalb der Formgebungseinrichtung 3, welche ein einem Fornigebungsende 86, das dem Austrittsbereich 22 aus der Formgebungseinrichtung 3, 71 entspricht, endet. Im Bereich der Formgebung wird versucht die im Zuge der Formgebung eingebrachte Energie aus dem PVC-Massestrom abzuführen, wodurch der Temperaturverlauf hier in etwa gleich bleibend dargestellt ist.

Nach dem Austritt aus der Formgebungseinrichtung 3, 71 erfolgt die zuvor beschriebene Nachkühlung des Gegenstandes 6, welche mit einem Nachkühlende 87 beendet ist.

Da die bisher bekannte eingesetzte Düse zur Formgebung des völlig plastifizierten Massestroms wegfällt und bereits die Kunststoffmasse unmittelbar nach deren Eintritt in die Formgebungseinrichtung 3, 71 in ihrem Inneren gekühlt wird, kommt diese mit wesentlich niedriger Temperatur in den Formgebungsprozess und lässt sich aber dort trotzdem noch hin zum gewünschten Profilquerschnitt 17 umformen. Dadurch ist die Kunststoffmasse am Ende des Formgebungsprozesses in ihrem Inneren wesentlich kühler und auch stabiler.

Durch den zuvor beschriebenen Schwingungserzeuger können beispielsweise Mikroschwingungen in die Kunststoffmasse eingebracht werden, wodurch die Viskosität wesentlich verbessert wird. Durch diese Schwingungen bzw. Vibrationen wird die Umformung sowie die Gleitbewegung des Schmelzestanges durch die Formgebungseinrichtung 3 wesentlich verbessert bzw. erfolgt eine einfachere Verteilung in dem an den Teilabschnitt des Kanals 21 mit der zusätzlichen Kühlvorrichtung 28 nachfolgenden Übergangsabschnittes. Durch diesen Schwingungserzeuger ist es weiters möglich, die Massetemperatur auf eine Verteilung gemäß der Darstellung der Fig. 18 zu senken.

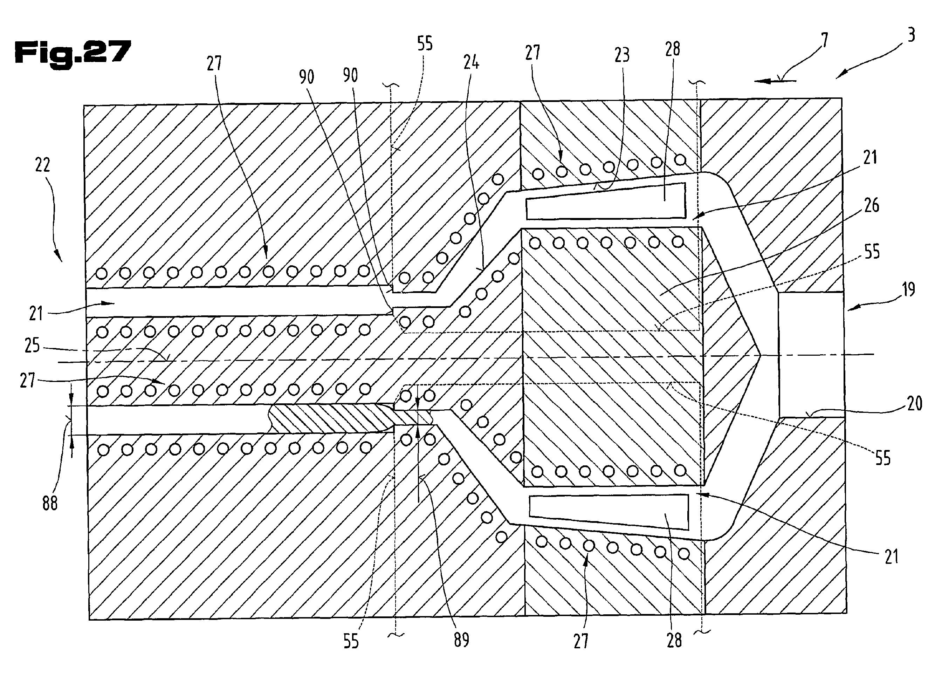

In der Fig. 27 ist eine weitere mögliche und gegebenenfalls für sich eigenständige Ausführungsform der Formgebungseinrichtung 3 gezeigt, wobei wiederum für gleiche Bauteile gleiche Bezugszeichen bzw. Bauteilbezeichnungen, wie in den vorangegangenen Fig. 1 bis 26 verwendet werden. Gleichfalls wird, um unnötige Wiederholungen zu vermeiden, auf die detaillierte Beschreibung in den vorangegangenen Fig. 1 bis 26 hingewiesen bzw. Bezug genommen.

Ähnlich zu den Darstellungen der Formgebungseinrichtung 3 gemäß der Fig. 2 bis 21 weist diese hier in der Fig. 27 dargestellte Formgebungseinrichtung 3 den Eintrittsbereich 19 mit der Einlassöffnung 20 sowie den sich hin in Richtung des Austrittsbereichs 22 erstreckenden Kanals 21 auf. Im Zentrum 25 kann wiederum einer oder mehrerer Dorne 26 vorgesehen sein. Der Einfachheit halber wurde hier auf die detaillierte Darstellung der Kühlvorrichtungen 27, 28 sowie deren Zu- und Ableitungen verzichtet, wobei diese beispielsweise so ausgebildet sein können, wie dies in den Fig. 2 bis 21 detailliert beschrieben worden ist.

Im Bereich des Austrittsbereichs 22 mündet hier ein Teilabschnitt des Kanals 21 ein, welcher parallel zur Extrusionsrichtung 7 ausgerichtet ist. Dieser Teilabschnitt kann beispielsweise ca. ein Drittel bis zur Hälfte der Längserstreckung der gesamten Formgebungseinrichtung 3 betragen. Dabei entspricht ein Querschnitt 88 dieses Teilabschnitts des Kanals 21, der im Austrittsbereich mündet bzw. diesem zugewendet ist, jenem Querschnitt bzw. jener Profilkontur des herzustellenden Gegenstandes 6. Diesem Teilabschnitt ist in Extrusionsrichtung 7 unmittelbar ein weiterer Teilabschnitt vorgeordnet, der gegenüber dem im Austrittsbereich 22 mündenden bzw. diesem zugewendeten Teilabschnitt einen dazu geringeren Querschnitt 89 aufweist. Dabei kann der Übergang vom Teilabschnitt mit dem geringeren Querschnitt 89 hin zu dem Teilabschnitt mit dem größeren Querschnitt 88 - also dem im Austrittsbereich mündenden bzw. diesem zugewendeten Teilabschnitt - durch eine senkrecht zur Extrusionsrichtung 7 ausgerichtete Übergangsfläche 90 gebildet ist. Es wäre aber unabhängig davon auch möglich, diese Übergangsfläche 90 winkelig zur Extrusionsrichtung 7, beispielsweise konisch in Richtung der Extrusionsrichtung 7 gesehen, sich erweiternd auszubilden.

Der Querschnitt 89 des Kanals 21 im Bereich des Teilabschnittes mit dem geringeren Querschnitt 89, ist zwischen 5 % und 50 %, bevorzugt zwischen 10 % und 30 %,insbesondere zwischen 15 % und 20 %, kleiner als der Querschnitt 88 des Teilabschnittes, welcher im Austrittsbereich 22 mündet bzw. diesem zugewendet ist. Dabei sind Werte mit einer unteren Grenze von 5 % und einer oberen Grenze von 50 % gewählt. Diese Verengung des Kanals 21 vor dem Eintritt in den Teilabschnitt, welcher in den Austrittsbereich 22 mündet, dient dazu in diesem Bereich das Wandgleiten zu ermöglichen bzw. zu bewirken und so eine Blockströmung des hindurchtretenden Schmelzestroms bzw. bereits stark abgekühlten Kunststoffmaterials entlang der Kanalwandungen 23, 24 zu begünstigen.

Weiters soll eine Längserstreckung des Kanals 21 im Bereich jenes Teilabschnittes mit dem geringen Querschnitt 89 zwischen dem 3-fachen und dem 20-fachen, insbesondere zwischen dem 5-fachen und dem 10-fachen, des Querschnitts 88 des Teilabschnittes, welcher im Austrittsbereich 22 mündet bzw. diesem zugeordnet ist, betragen. Damit beträgt eine untere Grenze das 3-fache und eine obere Grenze das 20-fache des Querschnitts 88 des Teilabschnittes, welcher im Austrittsbereich 22 mündet bzw. diesem zugeordnet ist. Dadurch wird dem hindurchtretenden Kunststoffmaterial eine ausreichend lange Zeitdauer für die Verweilung in diesem Teilabschnitt ermöglicht, um nachfolgend beim Austritt in den Teilabschnitt mit dem größeren Querschnitt 88 entsprechend zu expandieren und in eine Blockströmung überzugehen. Die Verkleinerung des Querschnitts 89 des Kanals 21 im Bereich des Teilabschnitts mit dem geringeren Querschnitt 89, erfolgt bezüglich des diesem in Extrusionsrichtung 7 nachgeordneten Teilabschnitt des Kanals 21 symmetrisch zu diesem bzw. dessen Querschnitt 88. Als Querschnitt wird hier die Distanz zwischen den voneinander beabstandeten Kanalwandungen 23, 24 in den einzelnen Teilabschnitten verstanden.

Weiters ist hier noch vereinfacht dargestellt, dass der Verteilkanal 55 zur Zufuhr des zuvor bereits beschriebenen Schmier- bzw. Gleitmittels vorgesehen ist und in Extrusionsrichtung 7 gesehen, zwischen dem Teilabschnitt des Kanals 21 mit dem geringeren Querschnitt 89 und dem im Austrittsbereich 22 mündenden bzw. diesem zugeordneten Teilabschnitt einmündet. Dabei kann das Schmier- bzw. Gleitmittel unter einem Druck in den Kanal 21 eingebracht werden, wobei in einem Teilbereich des Kanals 21 der hindurchtretende Schmelzestrom vereinfacht dargestellt ist. Der auf das Schmier- bzw. Gleitmittel aufgebracht Druck wird gleich oder größer gewählt, als jener Druck, der durch den durch den Kanal 21 hindurch geführten Schmelzestrang erzeugt wird. Der Schmelzestrang expandiert im Übergangsbereich zwischen den beiden Teilabschnitten durch das mit Überdruck eingebrachte Schmier- bzw. Gleitmittel nur in einem fließenden Übergang, wobei sich an beiden Seiten der Kanalwandungen 23, 24 innerhalb des Kanals 21 zwischen dem Schmelzestrom und den Kanalwandungen 23, 34 ein Aufnahme- bzw. Speicherraum für das Schmier- bzw. Gleitmittel ausbildet. Dies wird zusätzlich noch durch die senkrecht zur Extrusionsrichtung 7 ausgerichteten Übergangsflächen 90 begünstigt.

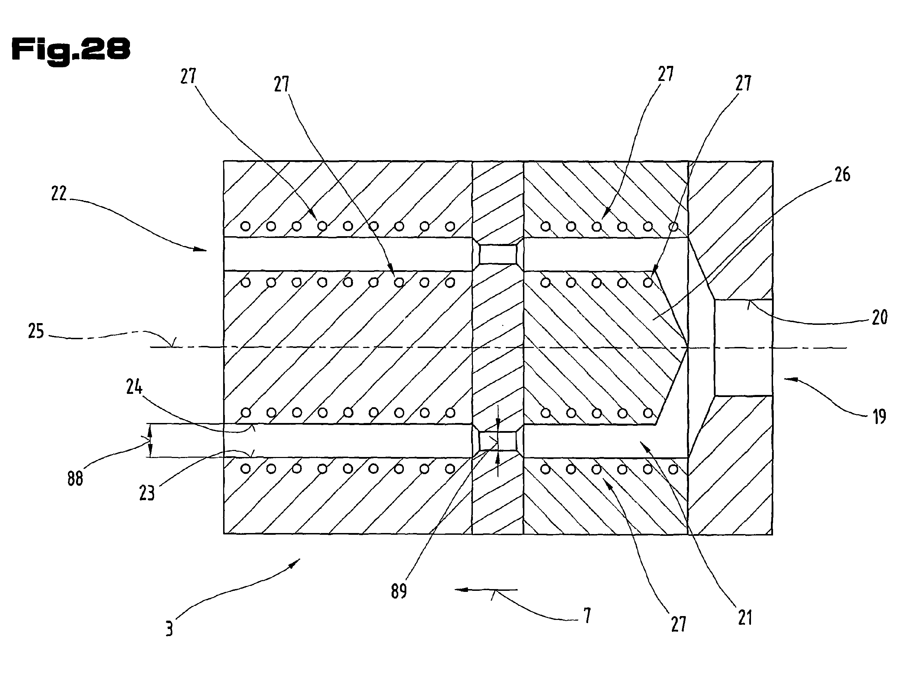

In der Fig. 28 ist eine weitere mögliche und gegebenenfalls für sich eigenständige Ausführungsform der Formgebungseinrichtung 3 gezeigt, wobei wiederum für gleiche Teile gleiche Bauteilbezeichnungen bzw. Bezugszeichen, wie in den vorangegangenen Fig. 1 bis 27 verwendet werden. Gleichfalls wird, um unnötige Wiederholungen zu vermeiden, auf die detaillierte Beschreibung in den voran gegangenen Fig. 1 bis 27 hingewiesen bzw. Bezug genommen.

Diese Formgebungseinrichtung 3 unterscheidet sich gegenüber den zuvor beschriebenen Formgebungseinrichtungen 3 dadurch, dass nicht zwingend eine zusätzliche Kühlvorrichtung 28 im Bereich des Kanals 21 vorgesehen ist. Der Kanal 21 erstreckt sich wiederum zwischen dem Eintrittsbereich 19 mit seiner Einlassöffnung 20 hin zum Austrittsbereich 22.

Der hier nicht näher dargestellte, herzustellende Gegenstand 6 tritt im Austrittsbereich 22 aus der Formgebungseinrichtung 3 aus und weist hier den fertigen, durch die Kanalwandungen 23, 24 vorbestimmbaren Querschnitt 88 auf. Dieser Teilabschnitt des Kanals 21, welcher im Austrittsbereich 22 mündet bzw. diesem zugeordnet ist, ist parallel zur Extrusionsrichtung 7 bzw. dem Zentrum 25 verlaufend ausgerichtet. Dem Teilabschnitt des Kanals 21, welcher im Austrittsbereich 22 mündet, ist ein unmittelbar vorgeordneter Teilabschnitt zugeordnet, welcher einen dazu geringeren Querschnitt 89 aufweist.

Der diesem wiederum vorgeordnete, weitere Teilabschnitt des Kanals 21 bzw. der dem Eintrittsbereich 19 unmittelbar nachgeordnete Bereich bzw. Teilabschnitt kann im Wesentlichen jenem Querschnitt bzw. jener Profilkontur des herzustellenden Gegenstandes 6 entsprechen oder gegenüber diesem bzw. dieser auch kleiner ausgebildet sein. Der Schmelzestrang wird der Formgebungseinrichtung 3 im Bereich der Einlassöffnung 20 zugeführt und hier durch einen Dorn 26 entsprechend der herzustellenden Profilkontur aufgeweitet. Auf die Darstellung von möglichen Stegen innerhalb des herzustellenden Gegenstandes 6 wurde der besseren Übersichtlichkeit halber verzichtet.

Den einzelnen den Kanal 21 begrenzenden Kanalwandungen 23, 24 sind wiederum die Kühlvorrichtungen 27 zugeordnet.

Auch bei diesem hier gezeigten Ausführungsbeispiel wäre es aber auch möglich, innerhalb des Kanals 21 in dem dem Eintrittsbereich 19 unmittelbar benachbarten bzw. nachgeordneten Bereich bzw. Teilabschnitt die zusätzliche Kühlvorrichtung 28 für die hindurch zuführende Kunststoffschmelze anzuordnen.

Wie weiters dieser Darstellung zu entnehmen ist, ist der Kanal 21 und damit der durch diesen hindurchtretende Schmelzestrang der Kunststoffschmelze unmittelbar anschließend an den Eintrittsbereich 19 bzw. an dessen Eintritt in die Formgebungseinrichtung 3 auf eine Profilkontur bzw. einen Querschnitt umgeformt, der im wesentlichen der herzustellenden Querschnittsform des Gegenstandes 6 entspricht. Dabei erfolgt zumeist eine parallele Hindurchführung des Schmelzestrangs durch die Kanäle 21, da diese ebenfalls zur Extrusionsrichtung 7 bzw. dem Zentrum 25 parallel verlaufend ausgerichtet sind.

Gleichfalls ist auch hier wiederum die Zuordnung des Verteilkanals 55 zur Einleitung des Schmier- bzw. Gleitmittels möglich, wie dies bereits in der Fig. 27 beschrieben und gezeigt worden ist. Gleichfalls kann aber auch wiederum die senkrecht zur Extrusionsrichtung 7 ausgerichtete Übergangsfläche 90 im Bereich des Übergangs vom Teilabschnitt mit dem geringeren Querschnitt 89 hin zu dem im Austrittsbereich 22 mündenden bzw. diesem zugewendeten Teilabschnitt vorgesehen sein. Die Abmessungen des Querschnitts 89 des Kanals 21 im Bereich des Teilabschnitts mit dem geringeren Querschnitt 89, können wiederum zwischen 5 % und 50 %, bevorzugt zwischen 10 % und 30 %,insbesondere zwischen 15 % und 20 %, kleiner gewählt sein, als der Querschnitt 88 des Teilabschnitts, welcher im Austrittsbereich 22 mündet. Dabei sind Werte mit einer unteren Grenze von 5 % und einer oberen Grenze von 50 % gewählt. Damit beträgt eine untere Grenze das 3-fache und eine obere Grenze das 20-fache des Querschnitts 88 des Teilabschnittes, welcher im Austrittsbereich 22 mündet bzw. diesem zugeordnet ist. Auch die Längserstreckung des Kanals 21 im Bereich des Teilabschnitts mit dem geringeren Querschnitt 89 kann zwischen dem 3-fachen und dem 20-fachen, insbesondere zwischen dem 5-fachen und dem 10-fachen, des Querschnitts 88 des Teilabschnitts, welcher im Austrittsbereich 22 mündet, betragen. Auch kann die Verkleinerung des Querschnitts im Bereich des Teilabschnitts mit dem geringeren Querschnitt 89 bezüglich des diesem in Extrusionsrichtung nachgeordneten Teilabschnitts mit dem Querschnitt 88 symmetrisch zum Kanal 21 bzw. dessen Kanalwandungen 23, 24 erfolgen.

Die Ausführungsbeispiele zeigen mögliche Ausführungsvarianten der Formgebungseinrichtung sowie deren unterschiedliche Einsatzmöglichkeiten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus Formgebungseinrichtung diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1; 2; 3 bis 9; 10, 11; 12 bis 15; 16, 17; 18; 19; 20;21; 22; 23; 24; 25; 26; 27; 28 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Extrusionsanlage
- 2: Extruder
- 3: Formgebungseinrichtung
- 4: Kühleinrichtung
- 5: Raupenabzug

- 6: Gegenstand
- 7: Extrusionsrichtung
- 8: Unterdrucktank
- 9: Kalibrierblende
- 10: Aufnahmebehälter

- 11: Maschinenbett
- 12: Aufstandsfläche
- 13: Kalibriertisch
- 14: Laufrolle
- 15: Fahrschiene

- 16: Kalibrieröffnung
- 17: Profilquerschnitt
- 18: Profilmantel
- 19: Eintrittsbereich
- 20: Einlassöffnung

- 21: Kanal
- 22: Austrittsbereich
- 23: Kanalwandung
- 24: Kanalwandung
- 25: Zentrum

- 26: Dorn
- 27: Kühlvorrichtung
- 28: Kühlvorrichtung
- 29: Außenabmessung
- 30: Innenabmessung

- 31: Teil
- 32: Teil
- 33: Zuleitung
- 34: Ableitung
- 35: Außenabmessung

- 36: Verteilkanal
- 37: Kühlelement
- 38: Kühlelement
- 39: Kühlelement
- 40: Kühlelement

- 41: Kühlelement
- 42: Kühlelement
- 43: Wandteil
- 44: Hohlraum
- 45: Hohlraum

- 46: Kanal
- 47: Zuströmöffnung
- 48: Ende
- 49: Innenwand
- 50: Übergangsbereich

- 51: Kühlelement
- 52: Kühlkanal
- 53: Grundkörper
- 54: Stirnbereich
- 55: Verteilkanal

- 56: Randbereich
- 57: Abschnitt
- 58: Abschnitt
- 59: Abschnitt
- 60: Abschnitt

- 61: Abschnitt
- 62: Abschnitt
- 63: Abschnitt
- 64: Abschnitt
- 65: Abschnitt

- 66: Abschnitt
- 67: Abschnitt
- 68: Abschnitt
- 69: Abschnitt
- 70: Leitung

- 71: Formgebungseinrichtung
- 72: Streifen
- 73: Stärke
- 74: Höhe
- 75: Längsseite

- 76: Verbreiterung
- 77: Längsseite
- 78: Ausnehmung
- 79: Diagrammlinie
- 80: Diagrammlinie

- 81: Extruderausgang
- 82: Düsenende
- 83: Trockenkaliberende
- 84: Kühltankende
- 85: Vorkühlungsende

- 86: Formgebungsende
- 87: Nachkühlende
- 88: Querschnitt
- 89: Querschnitt
- 90: Übergangsfläche

## Patentansprüche

1. Formgebungseinrichtung (3) zur Formgebung und Abkühlung von Gegenständen (6) aus einer Kunststoffschmelze, wobei diese einem Extruder unmittelbar nachordenbar ist, mit einer in einem Eintrittsbereich (19) angeordneten Einlassöffnung (20) für die von dem Extruder (2) austretende Kunststoffschmelze und zumindest einem sich hin in Richtung eines Austrittsbereichs (22) erstreckenden Kanals (21) mit diesen begrenzenden Kanalwandungen (23, 24) und mit zumindest einer den Kanalwandungen (23, 24) zugeordneten Kühlvorrichtung (27), **dadurch gekennzeichnet, dass** innerhalb des Kanals (21) in dem dem Eintrittsbereich (19) unmittelbar benachbarten bzw. nachgeordneten Bereich eine zusätzliche Kühlvorrichtung (28) für die hindurchzuführende Kunststoffschmelze angeordnet ist.

2. Formgebungseinrichtung (3) nach Anspruch 1, **dadurch gekennzeichnet, dass** der Kanal (21) in einem im Austrittsbereich (22) mündenden bzw. diesem zugewendeten Teilabschnitt einen Querschnitt (88) aufweist, welcher dem des herzustellenden Gegenstandes (6) entspricht und der Kanal (21) in einem diesem Teilabschnitt in Extrusionsrichtung (7) unmittelbar vorgeordneten Teilabschnitt einen dazu geringeren Querschnitt (89) aufweist.

3. Formgebungseinrichtung (3) nach Anspruch 2, **dadurch gekennzeichnet, dass** der Querschnitt des Kanals (21) in dem dem Eintrittsbereich (19) unmittelbar nachgeordneten Bereich bzw. Teilabschnitt im wesentlichen jenem Querschnitt des herzustellenden Gegenstandes (6) entspricht oder gegenüber diesem kleiner ausgebildet ist.

4. Formgebungseinrichtung (3) nach Anspruch 1 oder 3, **dadurch gekennzeichnet, dass** die zusätzliche Kühlvorrichtung (28) dem oder den Kanälen (21) zur Ausbildung eines Profilmantels (18) des Gegenstandes (6) zugeordnet ist.

5. Formgebungseinrichtung (3) nach einem der Ansprüche 1, 3 oder 4, **dadurch gekennzeichnet, dass** die zusätzliche Kühlvorrichtung (28) in Extrusionsrichtung (7) gesehen einen wellenförmigen bzw. schlangenlinienförmigen Verlauf aufweist.

6. Formgebungseinrichtung (3) nach einem der Ansprüche 1, 3 bis 5, **dadurch gekennzeichnet, dass** die zusätzliche Kühlvorrichtung (28) innerhalb des Kanals (21) von den Kanalwandungen (23, 24) distanziert angeordnet ist.

7. Formgebungseinrichtung (3) nach einem der Ansprüche 1, 3 bis 6, **dadurch gekennzeichnet, dass** die zusätzliche Kühlvorrichtung (28) über ihre Längserstreckung eine abnehmende Außenabmessung (29) in senkrechter Richtung zur Extrusionsrichtung (7) aufweist.

8. Formgebungseinrichtung (3) nach einem der Ansprüche 1, 3 bis 7, **dadurch gekennzeichnet, dass** die zusätzliche Kühlvorrichtung (28) über mehrere Zu- sowie Ableitungen (33, 34) mit einem Kühlmedium versorgt ist.

9. Formgebungseinrichtung (3) nach Anspruch 8, **dadurch gekennzeichnet, dass** die Zusowie Ableitungen (33, 34) der zusätzlichen Kühlvorrichtung (28) in einem geschlossenen Kreislauf miteinander verbunden sind.

10. Formgebungseinrichtung (3) nach Anspruch 9, **dadurch gekennzeichnet, dass** im geschlossenen Kreislauf mindestens ein Kühler für das Kühlmedium vorgesehen ist.

11. Formgebungseinrichtung (3) nach einem der vorhergehenden Ansprüche, **dadurch gekennzeichnet, dass** der Kanal (21) über dessen Längserstreckung zwischen dem Eintrittsbereich (19) sowie Austrittsbereich (22) einen unterschiedlichen Längsverlauf bezogen auf das Zentrum (25) aufweist.

12. Formgebungseinrichtung (3) nach einem der vorhergehenden Ansprüche, **dadurch gekennzeichnet, dass** der Kanal (21) über dessen Längserstreckung zwischen dem Eintrittsbereich (19) sowie Austrittsbereich (22) eine unterschiedliche Querschnittsabmessung aufweist.

13. Formgebungseinrichtung (3) nach Anspruch 12, **dadurch gekennzeichnet, dass** der Kanal (21) zwischen dem Eintrittsbereich (19) sowie Austrittsbereich (22) einen abnehmenden Querschnitt aufweist.

14. Formgebungseinrichtung (3) nach einem der vorhergehenden Ansprüche, **dadurch gekennzeichnet, dass** ein Teilabschnitt eines Doms (26) im Bereich der zusätzlichen Kühlvorrichtung (28) eine größeren Außenabmessung (35) gegenüber einer im Eintrittsbereich (19) angeordneten Einlassöffnung (20) aufweist.

15. Formgebungseinrichtung (3) nach einem der vorhergehenden Ansprüche, **dadurch gekennzeichnet, dass** zumindest einer der Kanalwandungen (23, 24) im Bereich der zusätzlichen Kühlvorrichtung (28) zumindest ein Kühlelement (37, 38) der Kühlvorrichtung (27) zugeordnet ist.

16. Formgebungseinrichtung (3) nach einem der vorhergehenden Ansprüche, **dadurch gekennzeichnet, dass** der Kanal (21) im Bereich der zusätzlichen Kühlvorrichtung (28) in einer senkrecht zur Extrusionsrichtung (7) ausgerichteten Ebene einen kreisringförmigen Kanalquerschnitt aufweist.

17. Formgebungseinrichtung (3) nach einem der vorhergehenden Ansprüche, **dadurch gekennzeichnet, dass** die äußere den Kanal (21) im Bereich der zusätzlichen Kühlvorrichtung (28) begrenzende Kanalwandung (23) über deren Längserstreckung bezogen auf das Zentrum (25) verjüngend ausgebildet ist.

18. Formgebungseinrichtung (3) nach einem der vorhergehenden Ansprüche, **dadurch gekennzeichnet, dass** ein Teilabschnitt des Kanals (21) im Bereich des Austrittsbereichs (22) dem auszuformenden Querschnitt des herzustellenden Gegenstandes (6) entspricht.

19. Formgebungseinrichtung (3) nach Anspruch 18, **dadurch gekennzeichnet, dass** dieser Teilabschnitt des Kanals (21) eine parallel zur Extrusionsrichtung (7) ausgerichtete Längserstreckung aufweist.

20. Formgebungseinrichtung (3) nach einem der vorhergehenden Ansprüche, **dadurch gekennzeichnet, dass** zwischen dem Teilabschnitt des Kanals (21) mit der zusätzlichen Kühlvorrichtung (28) und dem Teilabschnitt des Kanals (21) im Austrittsbereich (22) ein weiterer Teilabschnitt mit einem bezogen auf das Zentrum (25) abnehmenden Querschnitt bzw. abnehmender Abmessung angeordnet ist.

21. Formgebungseinrichtung (3) nach Anspruch 20, **dadurch gekennzeichnet, dass** der Kanal (21) am Ende des weiteren Teilabschnitts nahezu der herzustellenden Profilgeometrie des Gegenstandes (6) entspricht.

22. Formgebungseinrichtung (3) nach einem der Ansprüche 1, 3 bis 21, **dadurch gekennzeichnet, dass** der Kanal (21) einen zusätzlichen zu dem im Austrittsbereich (22) mündenden bzw. zugewendeten Teilabschnitt und diesem in Extrusionsrichtung (7) unmittelbar vorgeordneten Teilabschnitt aufweist, der einen bezüglich dem im Austrittsbereich (22) mündenden Teilabschnitt dazu geringeren Querschnitt (89) aufweist.

23. Formgebungseinrichtung (3) nach einem der vorhergehenden Ansprüche, **dadurch gekennzeichnet, dass** der Übergang vom Teilabschnitt mit dem geringeren Querschnitt (89) hin zu dem im Austrittsbereich (22) mündenden bzw. diesem zugewendeten Teilabschnitt durch eine senkrecht zur Extrusionsrichtung (7) ausgerichtete Übergangsfläche (90) gebildet ist.

24. Formgebungseinrichtung (3) nach einem der vorhergehenden Ansprüche, **dadurch gekennzeichnet, dass** der Querschnitt (89) des Kanals (21) im Bereich des Teilabschnittes mit dem geringeren Querschnitt (89) zwischen 5% und 50%, bevorzugt zwischen 10% und 30%, kleiner ist als der Querschnitt (88) des Teilabschnittes, welcher im Austrittsbereich (22) mündet.

25. Formgebungseinrichtung (3) nach einem der vorhergehenden Ansprüche, **dadurch gekennzeichnet, dass** eine Längserstreckung des Kanals (21) im Bereich des Teilabschnittes mit dem geringeren Querschnitt (89) zwischen dem 3-fachen und dem 20-fachen, bevorzugt zwischen dem 5-fachen und dem 10-fachen, des Querschnittes (88) des Teilabschnittes, welcher im Austrittsbereich (22) mündet, beträgt.

26. Formgebungseinrichtung (3) nach einem der vorhergehenden Ansprüche, **dadurch gekennzeichnet, dass** die Verkleinerung des Querschnittes (89) des Kanals (21) im Bereich des Teilabschnittes mit dem geringeren Querschnitt (89) bezüglich des diesem in Extrusionsrichtung (7) nachgeordneten Teilabschnittes des Kanal (21) symmetrisch dazu erfolgt.

27. Formgebungseinrichtung (3) nach einem der vorhergehenden Ansprüche, **dadurch gekennzeichnet, dass** allen Teilabschnitten des Kanals (21) zur Ausbildung des Profilmantels (18) zumindest bereichsweise Kühlelemente (37 bis 42) der Kühlvorrichtung (27) zugeordnet sind und diese Kühlelemente (37 bis 42) die Kanalwandungen (23, 24) ausbilden.

28. Formgebungseinrichtung (3) nach einem der vorhergehenden Ansprüche, **dadurch gekennzeichnet, dass** zumindest einzelnen der Kanalwandungen (23, 24) zumindest ein Schwingungserzeuger zugeordnet ist.

29. Formgebungseinrichtung (3) nach Anspruch 28, **dadurch gekennzeichnet, dass** der oder die Schwingungserzeuger zwischen dem Teilabschnitt des Kanals (21) mit der zusätzlichen Kühlvorrichtung (28) und dem Teilabschnitt des Kanals (21) im Austrittsbereich (22) angeordnet ist bzw. sind.

30. Formgebungseinrichtung (3) nach einem der vorhergehenden Ansprüche, **dadurch gekennzeichnet, dass** in den oder die Kanäle (21, 46) zumindest im Bereich einer der Kanalwandungen (23, 24) ein Verteilkanal (55) für ein Schmier- bzw. Gleitmittel mündet.

31. Formgebungseinrichtung (3) nach Anspruch 30, **dadurch gekennzeichnet, dass** der Verteilkanal (55) über den gesamten Umfang des Profilquerschnittes (17) durchlaufend ausgebildet ist.

32. Formgebungseinrichtung (3) nach Anspruch 30 oder 31, **dadurch gekennzeichnet, dass** der Verteilkanal (55) in Extrusionsrichtung (7) gesehen am Beginn des Teilabschnitts des Kanals (21, 46) mit der zusätzlichen Kühlvorrichtung (28) in den oder die Kanäle (21, 46) einmündet.

33. Formgebungseinrichtung (3) nach einem der Ansprüche 30 bis 32, **dadurch gekennzeichnet, dass** der Verteilkanal (55) in Extrusionsrichtung (7) gesehen zwischen dem Teilabschnitt des Kanals (21) mit dem geringeren Querschnitt (89) und dem im Austrittsbereich (22) mündenden Teilabschnitt einmündet.

34. Formgebungseinrichtung (3) nach einem der vorhergehenden Ansprüche, **dadurch gekennzeichnet, dass** innerhalb des Doms (26) zumindest ein weiterer Kanal (46) zur Ausbildung von Stegen innerhalb des Gegenstandes (6) angeordnet ist.

35. Formgebungseinrichtung (3) nach Anspruch 34, **dadurch gekennzeichnet, dass** der Kanal (21) zur Ausbildung des Profilmantels (18) und der oder die weiteren Kanäle (46) zur Ausbildung von Stegen am Ende des zwischen dem Teilabschnitt des Kanals (21) mit der zusätzlichen Kühlvorrichtung (28) und dem Teilabschnitt des Kanals (21) im Austrittsbereich (22) ausgebildeten weiteren Teilabschnitts in einander zugewandten Randbereichen zusammenlaufen.

36. Formgebungseinrichtung (3) nach einem der Ansprüche 34 oder 35, **dadurch gekennzeichnet, dass** dem oder den weiteren Kanälen (46) zur Ausbildung der Stege weitere Kühlelemente (51) zugeordnet sind.

37. Formgebungseinrichtung (3) nach einem der vorhergehenden Ansprüche, **dadurch gekennzeichnet, dass** zumindest bereichsweise Teilabschnitte der den Kanal (21) begrenzenden Kanalwandungen (23, 24) aus einem Werkstoff gebildet sind, dessen Oberflächenspannung gleich oder kleiner ist als jene der durch den Kanal (21) hindurchzuführenden Kunststoffschmelze.

38. Formgebungseinrichtung (3) nach einem der vorhergehenden Ansprüche, **dadurch gekennzeichnet, dass** auf die Kanalwandungen (23, 24) der Kanäle (21, 46) bzw. auf die die Kanäle (21, 46) begrenzenden Kühlelemente (37 bis 42) zumindest bereichsweise eine Beschichtung aufgebracht ist.

39. Formgebungseinrichtung (3) nach Anspruch 38, **dadurch gekennzeichnet, dass** die Beschichtung aus der Gruppe von Bornitrit, Siliziumnitrit, Zirkonnitrit oder einer Nanobeschichtung gewählt ist.

40. Formgebungseinrichtung (3) nach einem der vorhergehenden Ansprüche, **dadurch gekennzeichnet, dass** zumindest eines der Kühlelemente (37, 38) im Teilabschnitt des Kanals (21) mit der zusätzlichen Kühlvorrichtung (28) aus einem Kunststoffmaterial mit ausreichender Hitzebeständigkeit gebildet ist.

41. Formgebungseinrichtung (3) nach einem der vorhergehenden Ansprüche, **dadurch gekennzeichnet, dass** die Kühlelement (37 bis 42) hülsenförmig ausgebildet sind.

42. Formgebungseinrichtung (3) nach einem der vorhergehenden Ansprüche, **dadurch gekennzeichnet, dass** das Kühlelement (41) in dem Teilabschnitt des Kanals (21) im Austrittsbereich (22) aus einem Keramikwerkstoff gebildet ist.

43. Formgebungseinrichtung (3) nach einem der vorhergehenden Ansprüche, **dadurch gekennzeichnet, dass** zumindest ein Teilabschnitt des Doms (26) in dem Teilabschnitt des Kanals (21) im Austrittsbereich (22) aus einem Keramikwerkstoff gebildet ist.

44. Formgebungseinrichtung (3) nach Anspruch 42 oder 43, **dadurch gekennzeichnet, dass** der Keramikwerkstoff aus der Gruppe von Bornitit, Siliziumnitrit, Zirkonnitrit gewählt ist.

45. Formgebungseinrichtung nach einem der Ansprüche 42 bis 44, **dadurch gekennzeichnet, dass** die aus dem Keramikwerkstoff gebildeten Bauteile einstückig ausgebildet sind.

46. Verfahren zur Formgebung und Abkühlung von Gegenständen (6) aus einer Kunststoffschmelze, bei dem die Kunststoffschmelze einem Eintrittsbereich (19) einer Formgebungseinrichtung (3) zugeführt und diese anschließend durch zumindest einen sich hin in Richtung eines Austrittsbereichs (22) erstreckenden Kanal (21) mit diesen begrenzenden Kanalwandungen (23, 24) auf zumindest einen Schmelzestrang umgeformt wird und der oder die Schmelzestränge während dem Durchtritt durch die Formgebungseinrichtung (3) hin zum Austrittsbereich (22) auf die Profilkontur des Gegenstandes (6) umgeformt und dabei gekühlt wird oder werden, **dadurch gekennzeichnet, dass** der Schmelzestrang der Kunststoffschmelze unmittelbar anschließend an dessen Eintritt in die Formgebungseinrichtung (3) innerhalb desselben zwischen den diesen begrenzenden Kanalwandungen (23, 24) zusätzlich gekühlt wird.

47. Verfahren nach Anspruch 46, **dadurch gekennzeichnet, dass** der Schmelzestrang der Kunststoffschmelze in einem im Austrittsbereich (22) mündenden bzw. diesem zugewendeten Teilabschnitt auf einen Querschnitt umgeformt wird, welcher dem herzustellenden Gegenstand (6) entspricht und der Schmelzestrang in Extrusionsrichtung (7) gesehen in einem dem im Austrittsbereich (22) mündenden Teilabschnitt unmittelbar vorgeordneten Teilabschnitt auf einen dazu geringeren Querschnitt umgeformt wird.

48. Verfahren nach Anspruch 47, **dadurch gekennzeichnet, dass** der Schmelzestrang der Kunststoffschmelze unmittelbar anschließend an dessen Eintritt in die Formgebungseinrichtung (3) auf einen Querschnitt umgeformt wird, der im wesentlichen der herzustellenden Querschnittsform des Gegenstandes (6) entspricht.

49. Verfahren nach einem der Ansprüche 46 bis 48, **dadurch gekennzeichnet, dass** die zusätzliche Kühlvorrichtung (28) dem oder den Schmelzesträngen zur Ausbildung eines Profilmantels (18) des Gegenstandes (6) zugeordnet wird.

50. Verfahren nach einem der Ansprüche 46 bis 49, **dadurch gekennzeichnet, dass** der Schmelzestrang während seiner inneren Kühlung durch einen in Extrusionsrichtung (7) gesehen wellenförmig bzw. schlangenlinienförmig ausgerichteten Verlauf aufgeteilt bzw. unterbrochen wird.

51. Verfahren nach einem der Ansprüche 46 bis 50, **dadurch gekennzeichnet, dass** die den beiden Kanalwandungen (23, 24) zugewandten Teilströme des Schmelzestranges während seiner inneren Kühlung über ihre Querschnitte durchlaufend ausgebildet werden.

52. Verfahren nach einem der Ansprüche 46 bis 51, **dadurch gekennzeichnet, dass** der Schmelzestrang während seinem Durchtritt zwischen dem Eintrittsbereich (79) und dem Austrittsbereich (22) auf einen unterschiedlichen Längsverlauf bezogen auf das Zentrum (25) umgeformt wird.

53. Verfahren nach einem der Ansprüche 46 bis 52, **dadurch gekennzeichnet, dass** der Schmelzestrang während seinem Durchtritt zwischen dem Eintrittsbereich (19) und dem Austrittsbereich (22) auf Querschnitte mit zueinander unterschiedlichen Abmessungen umgeformt wird.

54. Verfahren nach Anspruch 53, **dadurch gekennzeichnet, dass** die Querschnittsabmessung des Schmelzestranges der Kunststoffschmelze vor dem Eintritt in den im Austrittsbereich (22) mündenden bzw, diesem zugewendeten Teilabschnitt auf eine bezüglich des im Austrittsbereich (22) mündenden Teilabschnitt dazu geringere Querschnittsabmessung umgeformt wird.

55. Verfahren nach Anspruch 53 oder 54, **dadurch gekennzeichnet, dass** der Schmelzestrang beim Übertritt zwischen den beiden hintereinander angeordneten Teilabschnitten des Kanals (21) bezüglich des vorgeordneten Teilabschnitts des Kanal (21) mit dem geringeren Querschnitt (89) symmetrisch zu diesem vergrößert wird.

56. Verfahren nach einem der Ansprüche 46 bis 55, **dadurch gekennzeichnet, dass** der Schmelzestrang nach dessen Eintritt in die Formgebungseinrichtung (3) im Bereich der zusätzlichen inneren Kühlung gegenüber einer im Eintrittsbereich (19) angeordneten Einlassöffnung (20) auf ein dazu größere Innenabmessung übergeführt bzw. aufgeweitet wird.

57. Verfahren nach einem der Ansprüche 46 bis 56, **dadurch gekennzeichnet, dass** der Schmelzestrang im Bereich der zusätzlichen inneren Kühlung an zumindest einem den Kanalwandungen (23, 24) zugewandten Bereich gekühlt wird.

58. Verfahren nach einem der Ansprüche 46 bis 57, **dadurch gekennzeichnet, dass** der Schmelzestrang im Bereich der zusätzlichen inneren Kühlung auf einen kreisringförmigen Querschnitt umgeformt wird.

59. Verfahren nach einem der Ansprüche 46 bis 58, **dadurch gekennzeichnet, dass** der Schmelzestrang zumindest im Bereich der zusätzlichen inneren Kühlung als Blockströmung durch den Kanal (21) hindurchgeführt wird.

60. Verfahren nach einem der Ansprüche 46 bis 59, **dadurch gekennzeichnet, dass** der Schmelzestrang in jenem Teilabschnitt des Kanals (21), welcher im Austrittsbereich (22) mündet bzw. diesem zugewendet ist, als Blockströmung durch den Kanal (21) hindurchgeführt wird.

61. Verfahren nach einem der Ansprüche 46 bis 60, **dadurch gekennzeichnet, dass** der zusätzlich in seinem Inneren gekühlte Schmelzestrang zur Ausbildung des Profilmantels (18) im Anschluss an die innere Kühlung auf den herzustellenden Profilquerschnitt (17) durch Verringerung seiner äußeren Abmessungen umgeformt wird.

62. Verfahren nach einem der Ansprüche 46 bis 60, **dadurch gekennzeichnet, dass** der zu sätzlich in seinem Inneren gekühlte Schmelzestrang zur Ausbildung des Profilmantels (18) im Anschluss an die innere Kühlung auf den herzustellenden Profilquerschnitt (17) durch Vergrößerung seiner äußeren Abmessungen umgeformt wird.

63. Verfahren nach einem der Ansprüche 46 bis 62, **dadurch gekennzeichnet, dass** der bereichsweise abgekühlte Schmelzestrang in seinem Teilabschnitt im Bereich des Austrittsbereichs (22) auf den auszuformenden Profilquerschnitt (17) des herzustellenden Gegenstandes (6) geformt wird.

64. Verfahren nach einem der Ansprüche 46 bis 63, **dadurch gekennzeichnet, dass** der Schmelzestrang während seinem Durchtritt durch die Formgebungseinrichtung (3) mit Schwingungen bzw. Vibrationen behandelt wird.

65. Verfahren nach Anspruch 64, **dadurch gekennzeichnet, dass** die Behandlung mit Schwingungen bzw. Vibrationen anschließend an die zusätzliche innere Kühlung durchgeführt wird.

66. Verfahren nach einem der Ansprüche 46 bis 65, **dadurch gekennzeichnet, dass** der zu kühlenden Schmelzestrang während seinem Durchtritt durch die Formgebungseinrichtung (3) zumindest bereichsweise mit einem Schmier- bzw. Gleitmittel beschichtet wird.

67. Verfahren nach Anspruch 66, **dadurch gekennzeichnet, dass** die Beschichtung mit dem Schmier- bzw. Gleitmittel über den gesamten Umfang des Schmelzestranges durchgeführt wird.

68. Verfahren nach Anspruch 66 oder 67, **dadurch gekennzeichnet, dass** die Beschichtung mit dem Schmier- bzw. Gleitmittel am Beginn der zusätzlichen inneren Kühlung aufgebracht wird.

69. Verfahren nach einem der Ansprüche 66 bis 68, **dadurch gekennzeichnet, dass** die Beschichtung mit dem Schmier- bzw. Gleitmittel nach der zusätzlichen inneren Kühlung aufgebracht wird.

70. Verfahren nach Anspruch 69, **dadurch gekennzeichnet, dass** die Beschichtung mit dem Schmier- bzw. Gleitmittel beim Eintritt des Schmelzestranges in den im Austrittsbereich (22) mündenden bzw. diesem zugeordneten Teilabschnitt aufgebracht wird.

71. Verfahren nach einem der Ansprüche 66 bis 70, **dadurch gekennzeichnet, dass** das Schmier- bzw. Gleitmittel zur Bildung der Beschichtung unter Beaufschlagung mit einem Druck in den Kanal (21) eingebracht wird, wobei der auf das Schmier- bzw. Gleitmittel aufgebracht Druck gleich oder größer gewählt wird, als jener Druck, der durch den durch den Kanal (21) hindurch geführten Schmelzestrang erzeugt wird.

72. Verfahren nach einem der Ansprüche 46 bis 71, **dadurch gekennzeichnet, dass** aus dem in den Eintrittsbereich (19) eintretenden Schmelzestrang zumindest ein Teilstrom zur Ausbildung mindestens eines Steges innerhalb des Hohlprofils abgezweigt wird.

73. Verfahren nach einem der Ansprüche 46 bis 72, **dadurch gekennzeichnet, dass** der abgekühlte und umgeformte Schmelzestrang zur Ausbildung des Profilmantels (18) und der oder die weiteren umgeformten sowie gegebenenfalls abgekühlten Schmelzestränge zur Ausbildung von Stegen innerhalb des Hohlprofils im Anschluss an die innere Kühlung und die Umformung des Schmelzestranges zur Ausbildung des Profilmantels (18) auf die herzustellende Profilgeometrie zusammengeführt werden.

74. Verfahren nach einem der Ansprüche 46 bis 73, **dadurch gekennzeichnet, dass** zumindest bereichsweise Teilströme der Kunststoffschmelze entlang der den oder die Kanäle (21, 46) begrenzenden Kanalwandungen (23, 24) mit Wandgleiten durch entsprechende Auswahl des Werkstoffes der Kanalwandungen (23, 24) in Bezug auf seine gleiche oder geringere Oberflächenspannung gegenüber der Kunststoffschmelze entlang geführt werden.

75. Verfahren nach einem der Ansprüche 46 bis 74, **dadurch gekennzeichnet, dass** der aus der Formgebungseinrichtung (3) austretende Schmelzestrang soweit abgekühlt ist, dass dieser zumindest im Bereich seines Profilmantels (18) formstabil ausgebildet ist.

## Claims

1. A shaping device (3) for shaping and cooling articles (6) from a polymer melt, it being possible for said device to be arranged directly downstream of an extruder, with an inlet opening (20), arranged in an entry area (19), for the polymer melt exiting from the extruder (2) and at least one channel (21), which extends in the direction of an exit area (22) and has channel walls (23, 24) delimiting it, and with at least one cooling device (27) assigned to the channel walls (23, 24), **characterized in that** an additional cooling device (28) for the polymer melt that is to be passed through is arranged within the channel (21) in the region that is directly adjacent or downstream of the entry area (19).

2. The shaping device as claimed in claim 1, **characterized in that** the channel (21) has in a portion opening out in or facing the exit area (22) a cross section (88) which corresponds to the article (6) to be produced and the channel (21) has in a portion arranged directly upstream of this portion in the direction of extrusion (7) a cross section (89) that is smaller in comparison.

3. The shaping device (3) as claimed in claim 2, **characterized in that** the cross section of the channel (21) in the region or portion that is directly downstream of the entry area (19) corresponds substantially to that cross section of the article (6) to be produced, or is made smaller than it.

4. The shaping device (3) as claimed in claim 1 or 3, **characterized in that** the additional cooling device (28) is assigned to the channel or channels (21) for forming a profile shell (18) of the article (6).

5. The shaping device (3) as claimed in one of claims 1, 3 or 4, **characterized in that** the additional cooling device (28) has a wavy or sinuous shape, when seen in the direction of extrusion (7).

6. The shaping device (3) as claimed in one of claims 1, 3 to 5, **characterized in that** the additional cooling device (28) is arranged within the channel (21) at a distance from the channel walls (23, 24).

7. The shaping device (3) as claimed in one of claims 1, 3 to 6, **characterized in that** the additional cooling device (28) has over its longitudinal extent a decreasing outer dimension (29) in the direction perpendicular to the direction of extrusion (7).

8. The shaping device (3) as claimed in one of claims 1, 3 to 7, **characterized in that** the additional cooling device (28) is supplied with a cooling medium via a number of supply and discharge lines (33, 34).

9. The shaping device (3) as claimed in claim 8, **characterized in that** the supply and discharge lines (33, 34) of the additional cooling device (28) are connected to one another in a closed circulation.

10. The shaping device (3) as claimed in claim 9, **characterized in that** at least one cooler for the cooling medium is provided in the closed circulation.

11. The shaping device (3) as claimed in one of the preceding claims, **characterized in that** the channel (21) has over its longitudinal extent a differing longitudinal course, with respect to the center (25), between the entry area (19) and the exit area (22).

12. The shaping device (3) as claimed in one of the preceding claims, **characterized in that** the channel (21) has over its longitudinal extent a differing cross-sectional dimension between the entry area (19) and the exit area (22).

13. The shaping device (3) as claimed in claim 12, **characterized in that** the channel (21) has a decreasing cross section between the entry area (19) and the exit area (22).

14. The shaping device (3) as claimed in one of the preceding claims, **characterized in that** a portion of a mandrel (26) in the region of the additional cooling device (28) has in relation to an inlet opening (20) arranged in the entry area (19) a larger outer dimension (35).

15. The shaping device (3) as claimed in one of the preceding claims, **characterized in that** at least one of the channel walls (23, 24) in the region of the additional cooling device (28) is assigned at least one cooling element (37, 38) of the cooling device (27).

16. The shaping device (3) as claimed in one of the preceding claims, **characterized in that** the channel (21) has in the region of the additional cooling device (28) an annular channel cross section in a plane aligned perpendicularly in relation to the direction of extrusion (7).

17. The shaping device (3) as claimed in one of the preceding claims, **characterized in that** the outer channel wall (23), delimiting the channel (21) in the region of the additional cooling device (28), is formed such that it tapers over its longitudinal extent, with respect to the center (25).

18. The shaping device (3) as claimed in one of the preceding claims, **characterized in that** a portion of the channel (21) in the region of the exit are (22) corresponds to the cross section to be formed of the article (6) that is to be produced.

19. The shaping device (3) as claimed in claim 18, **characterized in that** this portion of the channel (21) has a longitudinal extent aligned parallel to the direction of extrusion (7).

20. The shaping device (3) as claimed in one of the preceding claims, **characterized in that** arranged between the portion of the channel (21) with the additional cooling device (28) and the portion of the channel (21) in the exit area (22) is a further portion with a decreasing cross section, or decreasing dimension, with respect to the center (25).

21. The shaping device (3) as claimed in claim 20, **characterized in that** the channel (21) at the end of the further portion corresponds virtually to the profile geometry of the article (6) that is to be produced.

22. The shaping device (3) as claimed in one of claims 1, 3 to 21, **characterized in that** the channel (21) has a portion in addition to the portion that opens out in or faces the exit area (22) and is directly upstream of this portion in the direction of extrusion (7), which additional portion has in relation to the portion opening out in the exit area (22) a cross section (89) that is smaller in comparison.

23. The shaping device (3) as claimed in one of the preceding claims, **characterized in that** the transition from the portion with the smaller cross section (89) to the portion opening out in or facing the exit area (22) is formed by a transitional area (90) aligned perpendicularly in relation to the direction of extrusion (7).

24. The shaping device (3) as claimed in one of the preceding claims, **characterized in that** the cross section (89) of the channel (21) in the region of the portion with the smaller cross section (89) is between 5% and 50%, with preference between 10% and 30%, smaller than the cross section (88) of the portion that opens out in the exit area (22).

25. The shaping device (3) as claimed in one of the preceding claims, **characterized in that** a longitudinal extent of the channel (21) in the region of the portion with the smaller cross section (89) is between 3 times and 20 times, with preference between 5 times and 10 times, the cross section (88) of the portion that opens out in the exit area (22).

26. The shaping device (3) as claimed in one of the preceding claims, **characterized in that** the reduction in the cross section (89) of the channel (21) in the region of the portion with the smaller cross section (89) takes place with respect to the portion of the channel (21) that is arranged downstream of it in the direction of extrusion (7) symmetrically in relation to said portion.

27. The shaping device (3) as claimed in one of the preceding claims, **characterized in that** all the portions of the channel (21) for forming the profile shell (18) are assigned, at least in certain regions, cooling elements (37 to 42) of the cooling device (27), and these cooling elements (37 to 42) form the channel walls (23, 24).

28. The shaping device (3) as claimed in one of the preceding claims, **characterized in that** at least some of the channel walls (23, 24) are assigned at least one oscillation generator.

29. The shaping device (3) as claimed in claim 28, **characterized in that** the oscillation generator or generators is or are arranged between the portion of the channel (21) with the additional cooling device (28) and the portion of the channel (21) in the exit area (22).

30. The shaping device (3) as claimed in one of the preceding claims, **characterized in that** a manifold (55) for a lubricant opens out into the channel or channels (21, 46), at least in the region of one of the channel walls (23, 24).

31. The shaping device (3) as claimed in claim 30, **characterized in that** the manifold (55) is formed continuously over the entire circumference of the profile cross section (17).

32. The shaping device (3) as claimed in claim 30 or 31, **characterized in that**, at the beginning of the portion of the channel (21, 46) with the additional cooling device (28), the manifold (55) opens out into the channel or channels (21, 46), as seen in the direction of extrusion (7).

33. The shaping device (3) as claimed in one of claims 30 to 32, **characterized in that**, as seen in the direction of extrusion (7), the manifold (55) opens out between the portion of the channel (21) with the smaller cross section (89) and the portion that opens out in the exit area (22).

34. The shaping device (3) as claimed in one of the preceding claims, **characterized in that** at least one further channel (46) for the forming of webs inside the article (6) is arranged within the mandrel (26).

35. The shaping device (3) as claimed in claim 34, **characterized in that** the channel (21) for forming the profile shell (18) and the further channel or channels (46) for forming webs run together at the end of the further portion formed between the portion of the channel (21) with the additional cooling device (28) and the portion of the channel (21) in the exit area (22), in mutually facing outer regions.

36. The shaping device (3) as claimed in either of claims 34 and 35, **characterized in that** the further channel or channels (46) for forming the webs is or are assigned further cooling elements (51).

37. The shaping device (3) as claimed in one of the preceding claims, **characterized in that** portions of the channel walls (23, 24) delimiting the channel (21) are formed at least in certain regions from a material of a surface tension that is the same as or less than that of the polymer melt to be passed through the channel (21).

38. The shaping device (3) as claimed in one of the preceding claims, **characterized in that** a coating is applied, at least in certain regions, to the channel walls (23, 24) of the channels (21, 46), or to the cooling elements (37 to 42) delimiting the channels (21, 46).

39. The shaping device (3) as claimed in claim 38, **characterized in that** the coating is chosen from the group comprising boron nitrite, silicon nitrite, zirconium nitrite or a nano coating.

40. The shaping device (3) as claimed in one of the preceding claims, **characterized in that** at least one of the cooling elements (37, 38) in the portion of the channel (21) with the additional cooling device (28) is formed from a polymer material with adequate heat resistance.

41. The shaping device (3) as claimed in one of the preceding claims, **characterized in that** the cooling elements (37 to 42) are formed like sleeves.

42. The shaping device (3) as claimed in one of the preceding claims, **characterized in that** the cooling element (41) in the portion of the channel (21) in the exit area (22) is formed from a ceramic material.

43. The shaping device (3) as claimed in one of the preceding claims, **characterized in that** at least a portion of the mandrel (26) in the portion of the channel (21) in the exit area (22) is formed from a ceramic material.

44. The shaping device (3) as claimed in claim 42 or 43, **characterized in that** the ceramic material is chosen from the group comprising boron nitrite, silicon nitrite, zirconium nitrite.

45. The shaping device as claimed in one of claims 42 to 44, **characterized in that** the components formed from the ceramic material are formed in one piece.

46. A method for shaping and cooling articles (6) from a polymer melt, in which the polymer melt is fed to an entry area (19) of a shaping device (3) and said melt is subsequently formed into at least one melt strand by at least one channel (21), which extends in the direction of an exit area (22) and has channel walls (23, 24) delimiting it, and the melt strand or strands is or are formed into the profile contour of the article (6) as it or they pass(es) through the shaping device (3) toward the exit area (22), and is or are thereby cooled, **characterized in that**, directly after it enters the shaping device (3), the melt strand of the polymer melt is additionally cooled within the same between the channel walls (23, 24) delimiting said device.

47. The method as claimed in claim 46, **characterized in that** the melt strand of the polymer melt is formed in a portion opening out in or facing the exit area (22) into a cross section which corresponds to the article (6) to be produced and the melt strand is formed in a portion arranged directly upstream of the portion opening out in the exit area (22), as seen in the direction of extrusion (7), into a cross section that is smaller in comparison.

48. The method as claimed in claim 47, **characterized in that**, directly after it enters the shaping device (3), the melt strand of the polymer melt is formed into a cross section that corresponds substantially to the cross-sectional form of the article (6) that is to be produced.

49. The method as claimed in one of claims 46 to 48, **characterized in that** the additional cooling device (28) is assigned to the melt strand or strands for forming a profile shell (18) of the article (6).

50. The method as claimed in one of claims 46 to 49, **characterized in that**, during its interior cooling, the melt strand is divided up or interrupted by a wavy or sinuous shape, as seen in the direction of extrusion (7).

51. The method as claimed in one of claims 46 to 50, **characterized in that** the partial streams of the melt strand that are facing the two channel walls (23, 24) are formed continuously over their cross sections during the inner cooling of said strand.

52. The method as claimed in one of claims 46 to 51, **characterized in that**, as it passes through between the entry area (79) and the exit area (22), the melt strand is formed into a differing longitudinal course, with respect to the center (25).

53. The method as claimed in one of claims 46 to 52, **characterized in that**, as it passes through between the entry area (19) and the exit area (22), the melt strand is formed into cross sections with dimensions differing from one another.

54. The method as claimed in claim 53, **characterized in that**, before it enters the portion that opens out in or faces the exit area (22), the cross-sectional dimension of the melt strand of the polymer melt is formed in relation to the portion opening out in the exit area (22) into a cross-sectional dimension that is smaller in comparison.

55. The method as claimed in claim 53 or 54, **characterized in that**, as it passes over between the two portions of the channel (21) arranged one behind the other, the melt strand is increased with respect to the upstream portion of the channel (21) with the smaller cross section (89) symmetrically in relation to the latter.

56. The method as claimed in one of claims 46 to 55, **characterized in that**, after it enters the shaping device (3), the melt strand is transformed or widened in the region of the additional interior cooling in relation to an inlet opening (20) arranged in the entry area (19) to an inner dimension that is larger in comparison.

57. The method as claimed in one of claims 46 to 56, **characterized in that** the melt strand is cooled in the region of the additional interior cooling at at least one region facing the channel walls (23, 24).

58. The method as claimed in one of claims 46 to 57, **characterized in that** the melt strand is formed in the region of the additional interior cooling into an annular cross section.

59. The method as claimed in one of claims 46 to 58, **characterized in that**, at least in the region of the additional interior cooling, the melt strand is passed through the channel (21) as a solid flow.

60. The method as claimed in one of claims 46 to 59, **characterized in that**, **in that** portion of the channel (21) that opens out in or is facing the exit area (22), the melt strand is passed through the channel (21) as a solid flow.

61. The method as claimed in one of claims 46 to 60, **characterized in that**, after the interior cooling, the melt strand for forming the profile shell (18) that has been additionally cooled in its interior is formed into the profile cross section (17) to be produced, by reducing its outer dimensions.

62. The method as claimed in one of claims 46 to 60, **characterized in that**, after the interior cooling, the melt strand for forming the profile shell (18) that has been additionally cooled in its interior is formed into the profile cross section (17) to be produced, by increasing its outer dimensions.

63. The method as claimed in one of claims 46 to 62, **characterized in that** the melt strand cooled in certain regions is formed in its portion in the region of the exit area (22) into the profile cross section (17) to be formed of the article (6) that is to be produced.

64. The method as claimed in one of claims 46 to 63, **characterized in that**, as it passes through the shaping device (3), the melt strand is treated with oscillations or vibrations.

65. The method as claimed in claim 64, **characterized in that** the treatment with oscillations or vibrations is carried out after the additional interior cooling.

66. The method as claimed in one of claims 46 to 65, **characterized in that**, as it passes through the shaping device (3), the melt strand to be cooled is coated at least in certain regions with a lubricant.

67. The method as claimed in claim 66, **characterized in that** the coating with the lubricant is carried out over the entire circumference of the melt strand.

68. The method as claimed in claim 66 or 67, **characterized in that** the coating with the lubricant is applied at the beginning of the additional interior cooling.

69. The method as claimed in one of claims 66 to 68, **characterized in that** the coating with the lubricant is applied after the additional interior cooling.

70. The method as claimed in claim 69, **characterized in that** the coating with the lubricant is applied when the melt strand enters the portion that opens out in or is assigned to the exit area (22).

71. The method as claimed in one of claims 66 to 70, **characterized in that** the lubricant for forming the coating is introduced into the channel (21) while being subjected to a pressure, the pressure applied to the lubricant being chosen to be the same as or greater than that pressure that is generated by the melt strand passed through the channel (21).

72. The method as claimed in one of claims 46 to 71, **characterized in that** at least one partial stream is branched off from the melt strand entering the entry area (19), to form at least one web inside the hollow profile.

73. The method as claimed in one of claims 46 to 72, **characterized in that**, after the interior cooling and the forming of the melt strand to form the profile shell (18), the cooled and formed melt strand for forming the profile shell (18) and the further formed and possibly cooled melt strand or strands for forming webs inside the hollow profile are brought together into the profile geometry that is to be produced.

74. The method as claimed in one of claims 46 to 73, **characterized in that**, by appropriate selection of the material of the channel walls (23, 24) with respect to its surface tension being the same as or lower than that of the polymer melt, at least in certain regions partial streams of the polymer melt are made to slide along the channel walls (23, 24) delimiting the channel or channels (21, 46).

75. The method as claimed in one of claims 46 to 74, **characterized in that** the melt strand exiting from the shaping device (3) is cooled to the extent that it is of a dimensionally stable form, at least in the region of its profile shell (18).

## Revendications

1. Dispositif de formage (3) pour la mise en forme et le refroidissement d'objets (6) à partir d'une matière plastique en fusion, ledit dispositif pouvant être monté directement en aval d'une extrudeuse, comportant une ouverture d'admission (20), disposée dans une zone d'entrée (19), pour la matière plastique en fusion sortant de l'extrudeuse (2), et au moins un conduit (21), s'étendant en direction d'une zone de sortie (22), avec des parois de conduit (23, 24) le délimitant et avec au moins un dispositif de refroidissement (27) associé à au moins l'une des parois de conduit (23, 24), **caractérisé en ce que**, à l'intérieur du conduit (21), dans la zone directement adjacente à la zone d'entrée (19) respectivement située en aval de celle-ci, est agencé un dispositif de refroidissement (28) supplémentaire pour la matière plastique en fusion traversant à l'intérieur.

2. Dispositif de formage (3) selon la revendication 1, **caractérisé en ce que** le conduit (21), dans une section partielle débouchant dans la zone de sortie (22) respectivement orientée vers celle-ci, possède une section (88) qui correspond à celle de l'objet (6) à réaliser, et le conduit (21), dans une section partielle directement en amont de ladite section partielle par référence au sens d'extrusion (7), possède une section (89) inférieure à celle-ci.

3. Dispositif de formage (3) selon la revendication 2, **caractérisé en ce que** la section du conduit (21), dans la section partielle respectivement la zone directement en aval de la zone d'entrée (19), correspond sensiblement à la section de l'objet (6) à réaliser ou est formé plus petit que celle-ci.

4. Dispositif de formage (3) selon la revendication 1 ou 3, **caractérisé en ce que** le dispositif de refroidissement (28) supplémentaire est associé au ou aux conduits (21) pour la réalisation d'une enveloppe profilée (18) de l'objet (6).

5. Dispositif de formage (3) selon la revendication 1, 3 ou 4, **caractérisé en ce que** le dispositif de refroidissement (28) supplémentaire possède un tracé ondulé ou en serpentin par référence au sens d'extrusion (7).

6. Dispositif de formage (3) selon l'une quelconque des revendications 1, 3 à 5, **caractérisé en ce que** le dispositif de refroidissement (28) supplémentaire est disposé à l'intérieur du conduit (21) à distance des parois de conduit (23, 24).

7. Dispositif de formage (3) selon l'une quelconque des revendications 1, 3 à 6, **caractérisé en ce que** le dispositif de refroidissement (28) supplémentaire, dans sa dimension longitudinale, possède une dimension extérieure (29) diminuant dans la direction perpendiculaire au sens d'extrusion (7).

8. Dispositif de formage (3) selon l'une quelconque des revendications 1, 3 à 7, **caractérisé en ce que** le dispositif de refroidissement (28) supplémentaire est alimenté par un milieu réfrigérant via plusieurs lignes d'admission et d'évacuation (33, 34).

9. Dispositif de formage (3) selon la revendication 8, **caractérisé en ce que** les lignes d'admission et d'évacuation (33, 34) du dispositif de refroidissement (28) supplémentaire sont reliées entre elles dans un circuit fermé.

10. Dispositif de formage (3) selon la revendication 9, **caractérisé en ce que** dans le circuit fermé, il est prévu au moins un refroidisseur pour le milieu réfrigérant.

11. Dispositif de formage (3) selon l'une quelconque des revendications précédentes, **caractérisé en ce que** le conduit (21), dans sa dimension longitudinale entre la zone d'entrée (19) et la zone de sortie (22), possède un tracé longitudinal différent par rapport au centre (25).

12. Dispositif de formage (3) selon l'une quelconque des revendications précédentes, **caractérisé en ce que** le conduit (21), dans sa dimension longitudinale entre la zone d'entrée (19) et la zone de sortie (22), comporte une dimension de section différente.

13. Dispositif de formage (3) selon la revendication 12, **caractérisé en ce que** le conduit (21), entre la zone d'entrée (19) et la zone de sortie (22), comporte une section se rétrécissant.

14. Dispositif de formage (3) selon l'une quelconque des revendications précédentes, **caractérisé en ce qu'**un tronçon d'un mandrin (26) dans la zone du dispositif de refroidissement (28) supplémentaire, a une dimension extérieure (35) plus grande qu'une ouverture d'admission (20) disposée dans la zone d'entrée (19).

15. Dispositif de formage (3) selon l'une quelconque des revendications précédentes, **caractérisé en ce qu'**au moins un élément de refroidissement (37, 38) du dispositif de refroidissement (27) est associé à au moins une des parois de conduit (23, 24) dans la zone du dispositif de refroidissement (28) supplémentaire.

16. Dispositif de formage (3) selon l'une quelconque des revendications précédentes, **caractérisé en ce que** le conduit (21), dans la zone du dispositif de refroidissement (28) supplémentaire, comporte une section de conduit annulaire dans un plan orienté perpendiculairement au sens d'extrusion (7).

17. Dispositif de formage (3) selon l'une quelconque des revendications précédentes, **caractérisé en ce que** la paroi de conduit extérieure (23), délimitant le conduit (21) dans la zone du dispositif de refroidissement (28) supplémentaire, est réalisée dans sa dimension longitudinale en se rétrécissant par rapport au centre (25).

18. Dispositif de formage (3) selon l'une quelconque des revendications précédentes, **caractérisé en ce qu'**une section partielle du conduit (21), dans la zone de la zone de sortie (22), correspond à la section à mettre en forme pour l'objet (6) à réaliser.

19. Dispositif de formage (3) selon la revendication 18, **caractérisé en ce que** ladite section partielle du conduit (21) a une dimension longitudinale orientée parallèlement au sens d'extrusion (7).

20. Dispositif de formage (3) selon l'une quelconque des revendications précédentes, **caractérisé en ce que**, entre la section partielle du conduit (21) avec le dispositif de refroidissement (28) supplémentaire et la section partielle du conduit (21) dans la zone de sortie (22), est agencée une section partielle supplémentaire avec une section respectivement une dimension diminuant par rapport au centre (25).

21. Dispositif de formage (3) selon la revendication 20, **caractérisé en ce que** le conduit (21), à l'extrémité de la section partielle supplémentaire, correspond à peu près à la géométrie du profil de l'objet (6) à réaliser.

22. Dispositif de formage (3) selon l'une quelconque des revendications 1, 3 à 21, **caractérisé en ce que** le conduit (21), en plus de la section partielle débouchant dans la zone de sortie (22) respectivement orientée vers celle-ci, comporte une section partielle, qui est montée directement en amont de celle-ci par référence au sens d'extrusion (7) et qui possède une section (89) qui est inférieure à celle de la section partielle débouchant dans la zone de sortie (22).

23. Dispositif de formage (3) selon l'une quelconque des revendications précédentes, **caractérisé en ce que** la transition entre la section partielle avec la plus petite section (89) et la section partielle débouchant dans la zone de sortie (22) respectivement orientée vers celle-ci est formée par une surface de transition (90) orientée perpendiculairement au sens d'extrusion (7).

24. Dispositif de formage (3) selon l'une quelconque des revendications précédentes, **caractérisé en ce que** la section (89) du conduit (21) dans la zone de la section partielle avec la plus petite section (89) est entre 5% et 50%, de préférence entre 10 % et 30 % plus petite que la section (88) de la section partielle débouchant dans la zone de sortie (22).

25. Dispositif de formage (3) selon l'une quelconque des revendications précédentes, **caractérisé en ce qu'**une dimension longitudinale du conduit (21) dans la zone de la section partielle avec la plus petite section (89) est égale à entre 3 fois et 20 fois, de préférence entre 5 fois et 10 fois, la section (88) de la section partielle débouchant dans la zone de sortie (22),

26. Dispositif de formage (3) selon l'une quelconque des revendications précédentes, **caractérisé en ce que** la diminution de la section (89) du conduit (21) dans la zone de la section partielle avec la plus petite section (89) se produit dans la section partielle du conduit (21), disposée en aval de cette dernière, par référence au sens d'extrusion (7), et symétriquement à celle-ci.

27. Dispositif de formage (3) selon l'une quelconque des revendications précédentes, **caractérisé en ce qu'**à toutes les sections partielles du conduit (21) pour la réalisation de l'enveloppe profilée (18) sont associés au moins par zones des éléments de refroidissement (37 à 42) du dispositif de refroidissement (27), et lesdits éléments de refroidissement (37 à 42) forment les parois de conduit (23, 24).

28. Dispositif de formage (3) selon l'une quelconque des revendications précédentes, **caractérisé en ce qu'**au moins un générateur d'oscillations est associé à au moins certaines parois de conduit (23, 24).

29. Dispositif de formage (3) selon la revendication 28, **caractérisé en ce que** le ou les générateurs d'oscillations est disposé ou sont disposés entre la section partielle du conduit (21) avec le dispositif de refroidissement (28) supplémentaire et la section partielle du conduit (21) dans la zone de sortie (22).

30. Dispositif de formage (3) selon l'une quelconque des revendications précédentes, **caractérisé en ce qu'**un conduit de distribution (55) pour un lubrifiant ou un agent antifriction débouche dans le ou les conduits (21, 46), au moins dans la zone de l'une des parois de conduit (23, 24).

31. Dispositif de formage (3) selon la revendication 30, **caractérisé en ce que** le conduit de distribution (55) est formé en continu sur toute la périphérie de la section profilée (17).

32. Dispositif de formage (3) selon la revendication 30 ou 31, **caractérisé en ce que** le conduit de distribution (55) débouche dans le ou les conduits (21, 46), par référence au sens d'extrusion (7), au début de la section partielle du conduit (21, 46) avec le dispositif de refroidissement (28) supplémentaire,

33. Dispositif de formage (3) selon l'une quelconque des revendications 30 à 32, **caractérisé en ce que** le conduit de distribution (55) débouche, par référence au sens d'extrusion (7), entre la section partielle du conduit (21) avec la plus petite section (89) et la section partielle débouchant dans la zone de sortie (22).

34. Dispositif de formage (3) selon l'une quelconque des revendications précédentes, **caractérisé en ce qu'**à l'intérieur du mandrin (26) est disposé au moins un conduit (46) supplémentaire pour la réalisation d'ailettes à l'intérieur de l'objet (6).

35. Dispositif de formage (3) selon la revendication 34, **caractérisé en ce que** le conduit (21) pour la réalisation de l'enveloppe profilée (18) et le ou les conduits (46) supplémentaires pour la réalisation des ailettes à l'extrémité de la section partielle supplémentaire, réalisée entre la section partielle du conduit (21) avec le dispositif de refroidissement (28) supplémentaire et la section partielle du conduit (21) dans la zone de sortie (22), convergent dans des zones de bordure orientées l'une vers l'autre.

36. Dispositif de formage (3) selon la revendication 34 ou 35, **caractérisé en ce que** d'autres éléments de refroidissement (51) sont associés au ou aux conduits (46) supplémentaires pour la réalisation des ailettes.

37. Dispositif de formage (3) selon l'une quelconque des revendications précédentes, **caractérisé en ce que** des sections partielles des parois de conduit (23, 24) délimitant le conduit (21) sont réalisées au moins par zones dans un matériau dont la tension superficielle est égale ou inférieure à celle de la matière plastique en fusion à guider à travers le conduit (21).

38. Dispositif de formage (3) selon l'une quelconque des revendications précédentes, **caractérisé en ce qu'**un revêtement est déposé au moins par zones sur les parois (23, 24) des conduits (21, 46) respectivement sur les éléments de refroidissement (37 à 42) délimitant les conduits (21, 46).

39. Dispositif de formage (3) selon la revendication 38, **caractérisé en ce que** le revêtement est choisi dans le groupe du nitrure de bore, nitrure de silicium, nitrure de zirconium ou un nano-revêtement.

40. Dispositif de formage (3) selon l'une quelconque des revendications précédentes, **caractérisé en ce qu'**au moins un des éléments de refroidissement (37, 38) dans la section partielle du conduit (21) avec le dispositif de refroidissement (28) supplémentaire est réalisé dans une matière plastique avec une résistance à la chaleur suffisante.

41. Dispositif de formage (3) selon l'une quelconque des revendications précédentes, **caractérisé en ce que** les éléments de refroidissement (37 à 42) sont réalisés en forme de manchons.

42. Dispositif de formage (3) selon l'une quelconque des revendications précédentes, **caractérisé en ce que** l'élément de refroidissement (41) dans la section partielle du conduit (21) dans la zone de sortie (22) est réalisé dans un matériau céramique.

43. Dispositif de formage (3) selon l'une quelconque des revendications précédentes, **caractérisé en ce qu'**au moins une section partielle du mandrin (26) dans la section partielle du conduit (21) dans la zone de sortie (22) est réalisé dans un matériau céramique.

44. Dispositif de formage (3) selon la revendication 42 ou 43, **caractérisé en ce que** le matériau céramique est choisi dans le groupe du nitrure de bore, nitrure de silicium, nitrure de zirconium.

45. Dispositif de formage selon l'une quelconque des revendications 42 à 44, **caractérisé en ce que** les pièces réalisées dans le matériau céramique sont formées d'un seul tenant.

46. Procédé pour la mise en forme et le refroidissement d'objets (6) à partir d'une matière plastique en fusion, dans lequel la matière plastique en fusion est acheminée vers une zone d'entrée (19) d'un dispositif de formage (3) et est transformée ensuite en au moins un tronçon en fusion par l'intermédiaire d'au moins un conduit (21) s'étendant en direction d'une zone de sortie (22), avec des parois (23, 24) le délimitant, et le ou les tronçons en fusion sont formés pendant le passage à travers le dispositif de formage (3) jusqu'à la zone de sortie (22) pour obtenir le contour profilé de l'objet (6) et, à cette occasion, est ou sont refroidis, **caractérisé en ce que** le tronçon en fusion de matière plastique en fusion, immédiatement à la suite de son entrée dans le dispositif de formage (3), est refroidi en plus à l'intérieur de celui-ci entre les parois (23, 24) le délimitant.

47. Procédé selon la revendication 46, **caractérisé en ce que** le tronçon en fusion de matière plastique en fusion, dans une section partielle débouchant dans la zone de sortie (22) respectivement orientée vers celle-ci, est mis en forme jusqu'à obtenir une section qui correspond à celle de l'objet (6) à réaliser, et le tronçon en fusion, dans une section partielle directement en amont de la section partielle débouchant dans la zone de sortie (22) par référence au sens d'extrusion (7), est mis en forme en une section inférieure à celle-ci.

48. Procédé selon la revendication 47, **caractérisé en ce que** le tronçon en fusion de matière plastique en fusion, immédiatement à la suite de son entrée dans le dispositif de formage (3), est mis en forme en une section qui correspond sensiblement à la forme de la section de l'objet (6) à réaliser.

49. Procédé selon l'une quelconque des revendications 46 à 48, **caractérisé en ce que** le dispositif de refroidissement (28) supplémentaire est associé au ou aux tronçons en fusion destiné(s) à la réalisation d'une enveloppe profilée (18) de l'objet (6).

50. Procédé selon l'une quelconque des revendications 46 à 49, **caractérisé en ce que** le tronçon en fusion, pendant son refroidissement intérieur, est divisé respectivement interrompu par un tracé orienté sous forme ondulée ou sous forme de serpentin dans le sens d'extrusion (7).

51. Procédé selon l'une quelconque des revendications 46 à 50, **caractérisé en ce que** les flux partiels du tronçon en fusion, orientés vers les deux parois de conduit (23, 24), sont réalisés en continu pendant leur refroidissement intérieur sur leurs sections.

52. Procédé selon l'une quelconque des revendications 46 à 51, **caractérisé en ce que** le tronçon en fusion, pendant son passage entre la zone d'entrée (19) et la zone de sortie (22), est mis en forme pour obtenir un tracé longitudinal différent par rapport au centre (25).

53. Procédé selon l'une quelconque des revendications 46 à 52, **caractérisé en ce que** le tronçon en fusion, pendant son passage entre la zone d'entrée (19) et la zone de sortie (22), est mis en forme pour obtenir des sections avec des dimensions différentes les unes par rapport aux autres.

54. Procédé selon la revendication 53, **caractérisé en ce que** la dimension de la section du tronçon en fusion de matière plastique en fusion, avant son entrée dans la section partielle débouchant dans la zone de sortie (22) respectivement orientée vers celle-ci, est mise en forme pour obtenir une dimension de section inférieure à celle de la section partielle débouchant dans la zone de sortie (22).

55. Procédé selon la revendication 53 ou 54, **caractérisé en ce que** le tronçon en fusion, au moment du passage entre les deux sections partielles du conduit (21), disposées l'une à la suite de l'autre, est agrandi par rapport à la section partielle du conduit (21), située en amont et ayant la plus petite section (89), symétriquement par rapport à celle-ci.

56. Procédé selon l'une quelconque des revendications 46 à 55, **caractérisé en ce que** le tronçon en fusion, après son entrée dans le dispositif de formage (3), dans la zone du refroidissement intérieur supplémentaire, est élargi respectivement amené à une dimension intérieure plus grande que celle d'une ouverture d'admission (20) disposée dans la zone d'entrée (19).

57. Procédé selon l'une quelconque des revendications 46 à 56, **caractérisé en ce que** le tronçon en fusion, dans la zone du refroidissement intérieur supplémentaire, est refroidi au niveau d'au moins une zone orientée vers les parois de conduit (23, 24).

58. Procédé selon l'une quelconque des revendications 46 à 57, **caractérisé en ce que** le tronçon en fusion, dans la zone du refroidissement intérieur supplémentaire, est mis en forme pour obtenir une section de forme annulaire.

59. Procédé selon l'une quelconque des revendications 46 à 58, **caractérisé en ce que** le tronçon en fusion, au moins dans la zone du refroidissement intérieur supplémentaire, est guidé sous forme d'écoulement en bloc à travers le conduit (21).

60. Procédé selon l'une quelconque des revendications 46 à 59, **caractérisé en ce que** le tronçon en fusion, dans la section partielle du conduit (21) qui débouche dans la zone de sortie (22) respectivement est orientée vers celle-ci, est guidé sous forme d'écoulement en bloc à travers le conduit (21).

61. Procédé selon l'une quelconque des revendications 46 à 60, **caractérisé en ce que** le tronçon en fusion, ayant subi un refroidissement supplémentaire à l'intérieur et destiné à la réalisation de l'enveloppe profilée (18) est mis en forme à la suite du refroidissement intérieur jusqu'à obtenir la section (17) du profilé à réaliser moyennant une diminution de ses dimensions extérieures.

62. Procédé selon l'une quelconque des revendications 46 à 60, **caractérisé en ce que** le tronçon en fusion, ayant subi un refroidissement supplémentaire à l'intérieur et destiné à la réalisation de l'enveloppe profilée (18) est mis en forme à la suite du refroidissement intérieur jusqu'à obtenir la section (17) du profilé à réaliser moyennant une augmentation de ses dimensions extérieures.

63. Procédé selon l'une quelconque des revendications 46 à 62, **caractérisé en ce que** le tronçon en fusion refroidi par zones est mis en forme dans sa section partielle dans la zone de la zone de sortie (22) jusqu'à obtenir la section (17) du profilé à former de l'objet (6) à réaliser.

64. Procédé selon l'une quelconque des revendications 46 à 63, **caractérisé en ce que** le tronçon en fusion, pendant son passage à travers le dispositif de formage (3), est traité avec des oscillations respectivement des vibrations.

65. Procédé selon la revendication 64, **caractérisé en ce que** le traitement avec des oscillations respectivement des vibrations est effectué à la suite du refroidissement intérieur supplémentaire.

66. Procédé selon l'une quelconque des revendications 46 à 65, **caractérisé en ce que** le tronçon en fusion à refroidir est revêtu au moins par zones avec un lubrifiant respectivement un agent antifriction pendant son passage à travers le dispositif de formage (3).

67. Procédé selon la revendication 66, **caractérisé en ce que** le revêtement avec le lubrifiant respectivement l'agent antifriction est effectué sur toute la périphérie du tronçon en fusion.

68. Procédé selon la revendication 66 ou 67, **caractérisé en ce que** le revêtement avec le lubrifiant respectivement l'agent antifriction est déposé au début du refroidissement intérieur supplémentaire.

69. Procédé selon l'une quelconque des revendications 66 à 68, **caractérisé en ce que** le revêtement avec le lubrifiant respectivement l'agent antifriction est déposé après le refroidissement intérieur supplémentaire.

70. Procédé selon la revendication 69, **caractérisé en ce que** le revêtement avec le lubrifiant respectivement l'agent antifriction est déposé au moment de l'entrée du tronçon en fusion dans la section partielle débouchant dans la zone de sortie (22) respectivement associée à celle-ci.

71. Procédé selon l'une quelconque des revendications 66 à 70, **caractérisé en ce que** le lubrifiant respectivement l'agent antifriction destiné à former le revêtement est introduit dans le conduit (21) sous l'effet d'une sollicitation en pression, la pression appliquée sur le lubrifiant respectivement l'agent antifriction étant choisie égale ou supérieure à la pression qui est générée par le tronçon en fusion guidé à travers le conduit (21).

72. Procédé selon l'une quelconque des revendications 46 à 71, **caractérisé en ce qu'**au moins un flux partiel, destiné à la réalisation d'au moins une ailette à l'intérieur du profilé creux, part du tronçon en fusion entrant dans la zone d'entrée (19).

73. Procédé selon l'une quelconque des revendications 46 à 72, **caractérisé en ce que** le tronçon en fusion refroidi et mis en forme, destiné à la réalisation de l'enveloppe profilée (18), et le ou les tronçons en fusion supplémentaires mis en forme et, le cas échéant, refroidis, destinés à la réalisation des ailettes à l'intérieur du profilé creux sont guidés, à la suite du refroidissement intérieur et de la mise en forme du tronçon en fusion pour la réalisation de l'enveloppe profilée (18), pour converger l'un avec l'autre en vue d'obtenir la géométrie du profil à réaliser.

74. Procédé selon l'une quelconque des revendications 46 à 73, **caractérisé en ce qu'**au moins par zones, des flux partiels de la matière plastique en fusion sont guidés le long des parois de conduit (23, 24) délimitant le ou les conduits (21, 46) en glissant le long de celles-ci par un choix approprié du matériau des parois de conduit (23, 24) par rapport à sa tension superficielle identique ou inférieure à celle de la matière plastique en fusion.

75. Procédé selon l'une quelconque des revendications 46 à 74, **caractérisé en ce que** le tronçon en fusion sortant du dispositif de formage (3) est refroidi de telle sorte qu'il est réalisé avec une stabilité de forme au moins dans la zone de son enveloppe profilée (18).
